(19) Europäisches Patentamt
European Patent Office
Office européen des brevets

(11) **EP 1 825 243 B1**

(12) **FASCICULE DE BREVET EUROPEEN**

(45) Date de publication et mention de la délivrance du brevet:
**04.01.2017 Bulletin 2017/01**

(21) Numéro de dépôt: **05823068.1**

(22) Date de dépôt: **24.11.2005**

(51) Int Cl.:
***G01M 11/02*** *(2006.01)*

(86) Numéro de dépôt international:
**PCT/FR2005/002915**

(87) Numéro de publication internationale:
**WO 2006/061480 (15.06.2006 Gazette 2006/24)**

(54) **PROCEDE ET DISPOSITIF DE MESURE DE PUISSANCE D'UNE LENTILLE OPHTALMIQUE PAR MESURE OPTIQUE GLOBALE SANS CONTACT ET PALPAGE COMBINES**

VERFAHREN UND EINRICHTUNG ZUR MESSUNG DER STÄRKE EINER BRILLENLINSE DURCH GLOBALE KONTAKTFREIE OPTISCHE MESSUNG UND VERFOLGUNG

METHOD AND DEVICE FOR MEASURING THE POWER OF AN OPHTHALMIC LENS BY GLOBAL CONTACT-FREE OPTICAL MEASURING AND TRACING

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **03.12.2004 FR 0412855**

(43) Date de publication de la demande:
**29.08.2007 Bulletin 2007/35**

(73) Titulaire: **ESSILOR INTERNATIONAL (Compagnie Générale d'Optique) 94227 Charenton (FR)**

(72) Inventeur: **DIVO, Fabien F-94227 Charenton (FR)**

(74) Mandataire: **Chauvin, Vincent et al Jacobacci Coralis Harle 14/16, rue Ballu 75009 Paris (FR)**

(56) Documents cités:
**EP-A- 0 822 440        EP-A- 0 877 241
FR-A- 2 475 222        GB-A- 1 592 112
US-A- 5 469 261**

EP 1 825 243 B1

## Description

### DOMAINE TECHNIQUE AUQUEL SE RAPPORTE L'INVENTION

La présente invention concerne de manière générale le montage de lentilles ophtalmiques d'une paire de lunettes correctrices sur une monture et vise plus particulièrement un procédé et un dispositif de préparation des lentilles d'une paire de lunettes en vue de leur montage sur la monture choisie par le porteur, intégrant des moyens de mesure optique globale sans contact d'une caractéristique optique locale de la lentille, combinés à des moyens de palpage.

### ARRIERE-PLAN TECHNOLOGIQUE

On connaît différents dispositifs de mesure qui fonctionnent soit automatiquement, soit manuellement, pour mesurer ou détecter, sans contact et par analyse optique cartographique d'ensemble, diverses caractéristiques, notamment de puissance et de centrage ou repérage, d'une lentille ophtalmique unifocale ou progressive avant ou après son montage sur une monture. Notamment, on connaît un tel dispositif d'après le document FR-2 825 466 ayant pour équivalent le US-2003/0015649 publié le 23 janvier 2003. Dans ce genre de dispositif de mesure, la lentille est présentée entre les moyens d'éclairement et les moyens d'analyse pour obtenir une cartographie d'une ou plusieurs de ses caractéristiques optiques. La cartographie optique peut être obtenue par déflectrométrie (du type Hartmann, moiré, etc.), comme dans le document susmentionné, par interférométrie, par propagation d'ondes, etc. L'interface utilisateur peut alors afficher non seulement le centre optique ou de référence, mais aussi des cartes de puissances et/ou des puissances et/ou axage en un ou plusieurs points remarquables de la lentille.

L'avantage de ce genre de dispositif de mesure optique globale sans contact, par analyse cartographique, réside dans sa souplesse d'emploi et l'automatisation qu'il permet.

Mais un inconvénient majeur de ce genre de dispositif de mesure réside dans sa relative imprécision, notamment en ce qui concerne la mesure de puissances locales. Les performances en terme de précision sont en particulier nettement dégradées en comparaison aux dispositifs de mesure localisée à embout du type frontofocomètre.

On connaît également du document EP0877241 une méthode pour déterminer la puissance d'une lentille en différents points de mesure à partir des résultats donnés par deux dispositifs.

Un premier dispositif permet de mesurer un pouvoir de réfraction de la lentille en différents points par traitement des franges de Moiré formées par la lumière traversant la lentille et deux réseaux.

Un second dispositif permet de déduire les puissances sphérique et cylindrique de la lentille à partir de la déviation des rayons lumineux émis par quatre sources lumineuses à travers la lentille. Pendant cette mesure, la lentille est posée sur un support, et pincée sur son autre face par un élément de fixation. Dans ce document, la mesure est réalisé au point de contact entre le support et la lentille : le point de mesure étudié est fixé par le support de la lentille.

Pour réaliser des mesures en différents points de la lentille, l'utilisateur doit déplacer manuellement la lentille sur son support, ce qui est long et peu pratique.

### OBJET DE L'INVENTION

Un but de la présente invention est de proposer un procédé et un dispositif de mesure d'une lentille, possédant des fonctions de mesure de caractéristiques optiques locales avancées, offrant à la fois :

- une grande souplesse d'utilisation et une polyvalence, permettant la mesure de caractéristiques optiques locales en tout point de mesure d'intérêt d'une lentille et ce pour tous types de lentilles,
- une précision de mesure élevée.

A cet effet, on propose selon l'invention procédé de mesure de la puissance locale d'une lentille ophtalmique en un point de mesure tel que défini dans la revendication 1.

Par locale, on entend que la zone mesurée et analysée autour du point de mesure considéré est de dimension réduite par rapport au diamètre de la lentille. Une telle zone locale possède en pratique un diamètre ou coté de quelques millimètres (5 à 20 mm).

Une fois le ou les points d'intérêt sélectionnés, la lentille est palpée en ce ou ces points pour déterminer leurs positions. Le palpage peut être de tout type permettant de déterminer la position du point de mesure considéré, avec ou sans contact.

Cette position obtenue par palpage est alors combinée à la valeur de la caractéristique optique locale au point de mesure considéré résultant de la mesure optique, pour en déduire une valeur précise de puissance ophtalmique en chaque point de mesure considéré

Selon un mode de réalisation avantageux, la mesure optique de la valeur locale de la caractéristique optique de réfringence de ladite lentille comprend :

- une étape de mesure optique globale au cours de laquelle on mesure les valeurs locales de la caractéristique optique sur une pluralités de zones locales autour d'une pluralité de points de la lentille, comprenant le point de mesure considéré et d'autres points,
- une étape de sélection du point de mesure souhaité de la lentille, et
- une étape de déduction de la valeur locale de la caractéristique optique audit point de mesure de la lentille, à partir de la mesure globale.

Par mesure globale, on entend que la lentille est soumise à la lecture ou détection d'une de ses caractéristiques optiques en une pluralité de points sur la majeure partie de son étendue utile (typiquement une zone d'au moins 20 mm de côté ou de rayon) et non pas seulement en une zone localisée de dimensions restreintes comme dans le cas d'une mesure au moyen d'un frontofocomètre. La carte globale de caractéristique(s) captée doit simplement être imagée, projetée ou générée par tout moyen d'éclairement apte à révéler la caractéristique optique voulue sur des moyens d'analyse. Il n'est pas nécessaire qu'elle soit entièrement calculée, analysée, affichée ou imprimée de manière à réaliser une cartographie complète directement exploitable. Elle peut ne pas être rendue perceptible à l'utilisateur dans sa globalité ; l'essentiel est que l'image d'analyse optique globale perçue par les moyens d'analyse permette au moins la sélection ou l'extraction d'une valeur locale en un ou plusieurs points d'intérêt de la lentille en une seule opération d'analyse sans déplacement de la lentille.

On comprend que l'on combine alors plusieurs avantages :

- la mesure optique est réalisée en une seule opération, sans contact ni déplacement de la lentille et pour un ou plusieurs points quelconques de son étendue, par exemple les points de référence pour la vision de loin et pour la vision de près ; il suffit de présenter la lentille entre les moyens d'éclairement et les moyens d'analyse pour obtenir une analyse globale, avec cartographie éventuelle, d'une ou plusieurs de ses caractéristiques optiques.
- la mesure d'optique ophtalmique réalisée est très précise.

Selon une caractéristique avantageuse de l'invention, la lentille est reçue sur un support avant d'être palpée avec des moyens de palpage distincts de ce support et mobiles par rapport à ce support suivant au moins une direction sensiblement axiale de la lentille. Par direction sensiblement axiale, on entend une direction parallèle à un axe optique ou géométrique de la lentille, ou, autrement formulé, une direction perpendiculaire à une plan moyen de cette lentille. Avantageusement alors, les moyens de palpage sont de plus mobiles suivant une direction sensiblement transversale de la lentille. Par direction sensiblement transversale on entend une direction perpendiculaire à la direction sensiblement axiale précitée.

Selon une autre caractéristique avantageuse de l'invention, le point de mesure est palpé sur la face arrière de la lentille.

Dans un premier exemple de mise en oeuvre

- au cours de ladite étape de mesure, on détermine la position d'un foyer de la lentille audit point de mesure,
- la puissance optique frontale est déduite de la combinaison de la position du point de mesure obtenue par palpage avec la position du foyer de la lentille déterminée par mesure.

Dans un second exemple de mise en oeuvre :

- au cours de ladite étape de mesure, on détermine une valeur approximative d'une puissance de la lentille en un point de mesure de la lentille,
- on corrige la valeur approximative de puissance de la lentille obtenue par mesure, en fonction de la position du point de mesure obtenue par palpage.

Avantageusement, la position axiale du point de mesure de la lentille est la seule caractéristique géométrique du point de mesure de la lentille utilisée pour déduire la puissance optique frontale de la lentille audit point de mesure.

L'invention a également pour objet un procédé de préparation automatique au montage d'une lentille ophtalmique, comportant un procédé de mesure selon l'une des revendications précédentes et comportant en outre une étape de blocage de ladite lentille sur des moyens de détourage et une étape de détourage de ladite lentille, le palpage de ladite lentille comportant une première étape de palpage antérieure au blocage de ladite lentille sur les moyens de détourage.

L'invention a encore pour objet un dispositif de mesure de ja puissance locale d'une lentille ophtalmique en un point de mesure tel que défini dans la revendication 7.

Dans un mode de réalisation avantageux, les moyens de mesure optique sont aptes à délivrer un signal représentatif d'une mesure optique globale comprenant les valeurs locales de la caractéristique optique sur une pluralité de zones locales autour d'une pluralité de points de la lentille, comprenant le point de mesure considéré ainsi que d'autres points, le système de traitement électronique et informatique étant apte à traiter le signal délivré par les moyens de mesure optique globale pour sélectionner le point de mesure souhaité de ladite lentille et à déduire de la mesure globale la valeur locale de ladite caractéristique optique audit point de mesure de la lentille.

Le dispositif comporte de plus avantageusement un support d'accueil de la lentille distinct des moyens de palpage, ces moyens de palpage étant mobiles par rapport à ce support suivant au moins une direction sensiblement axiale de la lentille. Avantageusement alors, les moyens de palpage sont de plus mobiles suivant une direction sensiblement transversale de la lentille.

L'invention a enfin pour objet un dispositif de préparation automatique au montage d'une lentille ophtalmique, comportant un dispositif de mesure selon l'une des revendications précédentes et comportant en outre :

- des moyens de détourage de ladite lentille incluant des moyens de blocage de ladite lentille, et
- des moyens de transfert de ladite lentille, agencés pour déplacer ladite lentille ophtalmique entre au moins deux positions distinctes, dont une position de mesure présentant ladite lentille en regard des moyens de mesure et une position de détourage de ladite lentille sur les moyens de détourage.

Le système de traitement électronique et informatique est conçu pour piloter en coordination les moyens de mesure, les moyens de palpage, le dispositif de détourage et les moyens de transfert pour le traitement automatique de ladite lentille.

Les moyens de palpage sont distincts et indépendants des moyens de détourage et agencés pour réaliser un premier palpage de ladite lentille dans une position intermédiaire distincte de sa position de détourage.

DESCRIPTION DETAILLEE D'UN EXEMPLE DE REALISATION

La description qui va suivre en regard des dessins annexés d'un mode de réalisation, donné à titre d'exemple non limitatif, fera bien comprendre en quoi consiste l'invention et comment elle peut être réalisée.

Dans les dessins annexés :

- la figure 1 est une vue de dessus schématique du dispositif de préparation automatique au montage de lentilles ophtalmiques selon la présente invention ;
- la figure 2 est une vue d'ensemble en perspective de l'extérieur du dispositif de préparation automatique muni d'un capotage ;
- la figure 3 est une vue similaire à la figure 2, une porte d'accès du capotage ayant été ouverte pour permettre le chargement et le déchargement des lentilles à préparer respectivement sur et hors de moyens d'accueil et de premier et second transferts ;
- la figure 4 est une vue en perspective de l'intérieur du dispositif de préparation automatique ;
- la figure 5 est une vue en perspective du carrousel et des sièges formant les moyens d'accueil et de premier et second transfert ;
- la figure 6 est une vue en perspective d'une partie du dispositif de préparation automatique, sur laquelle le carrousel des moyens d'accueil et de premier et second transferts a été retiré, laissant apparaître les pinces des moyens d'accueil et de premier et second transferts, avec leur mécanisme d'actionnement ;
- la figure 6A est une vue de détail en perspective agrandie de l'un doigt de pinces de la figure 6 ;
- les figures 7 et 8 sont respectivement des vues en perspective et de dessus du mécanisme d'ouverture des pinces de la figure 6 ;
- la figure 9 est une vue similaire à la figure 3, deux premières lentilles ophtalmiques L1, L2 (ou premier job) d'une première paire de lunettes ayant été chargées sur les moyens d'accueil et de premier et second transferts en deux emplacements de chargement séparés l'un de l'autre par deux emplacements de déchargement ;
- la figure 10 est une vue en perspective du dispositif de préparation dans la configuration de la figure 9, le capotage ayant été retiré ;
- la figure 11 est une vue en perspective du dispositif de préparation dans une configuration où les deux premières lentilles sont prêtes à être immobilisées par les deux pinces des moyens d'accueil et de premier et de second transferts ;
- la figure 12 est une vue en perspective du dispositif de préparation dans une configuration où la première lentille est, après un premier transfert, amenée en position de mesure à l'aplomb de moyens de mesure pour la mesure automatique des caractéristiques de centrage de cette lentille ;
- la figure 13 est une vue en perspective du dispositif de préparation dans une configuration où la première lentille est, après un second transfert, amenée en position intermédiaire, en vue de son palpage et de son troisième transfert, en regard des moyens de palpage, de préhension et de second transfert ;
- la figure 14 est une vue de côté schématique de la lentille avec son axe optique et de son axe boxing (défini plus loin) associés ;
- la figure 15 est vue en perspective des moyens combinés de palpage, de préhension et de troisième transfert seuls ;
- les figures 16 à 18 sont des vues en coupes transversales du dispositif de préparation automatique de la figure 15, les moyens de palpage, de préhension et de troisième transfert étant représentés dans plusieurs configurations successives de palpage de la lentille ;
- la figure 19 est une vue en élévation du dispositif de préparation automatique où les moyens de palpage, de préhension et de troisième transfert sont en configuration de palpage de la première lentille pour déterminer la hauteur relative d'un point remarquable tel que le centre optique de cette lentille par rapport aux moyens de mesure afin de permettre le calcul précis d'une puissance frontale de la lentille au point remarquable considéré ;
- la figure 20 est une vue en perspective du dispositif de préparation dans une configuration où les moyens de palpage, de préhension et de troisième transfert effectuent le palpage du contour de la première lentille ;
- la figure 21 est une vue en perspective du dispositif de préparation, similaire à la figure 19, dans une configuration où les moyens de palpage, de préhension et de troisième transfert effectuent un nouveau palpage de cette première lentille en au moins trois points pour déterminer la normale au point de blocage ;

- les figures 22 à 24 sont des vue en élévation du dispositif de préparation automatique, avec coupe partielle des moyens de palpage, de préhension et de troisième transfert représentés dans trois configurations successives afin d'immobiliser la première lentille suivant un axe de préhension et de blocage correspondant à un axe remarquable, dit axe boxing (défini plus loin), de cette lentille ;

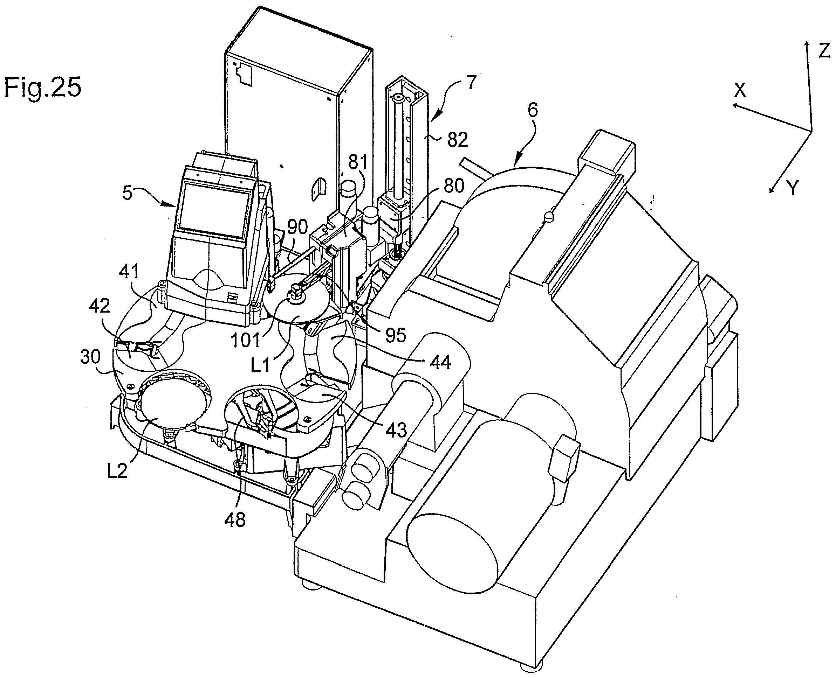

- la figure 25 est une vue en perspective du dispositif de préparation dans une configuration où la première lentille est en cours de troisième transfert par les moyens de palpage, de préhension et de second transfert depuis sa position intermédiaire vers le dispositif de détourage ;
- les figures 26 et 27 sont des vues en perspective du dispositif de préparation dans des configurations successives de son troisième transfert puis d'intégration de la première lentille dans le dispositif de détourage ;
- la figure 28 est une vue en perspective du dispositif de préparation dans une configuration de passage de relais, où la première lentille est maintenue à la fois par les moyens de palpage, de préhension et de troisième transfert et par les moyens de blocage et d'entraînement en rotation du dispositif de détourage ;
- les figures 29 et 30 sont respectivement des vues en perspective et en coupe longitudinale de la première lentille maintenue entre deux nez, eux-mêmes en prise avec deux arbres de serrage et d'entraînement en rotation du dispositif de détourage ;
- la figure 31 est une vue en perspective d'un magasin comprenant plusieurs paires de nez destinées à permettre l'immobilisation de lentilles de tailles et/ou de revêtements différents ;
- la figure 32 est une vue partielle en perspective du plateau illustrant une variante des moyens d'accueil et de premier et second transferts avec un pion de centrage optionnel de lentille ;
- la figure 33 est une vue en perspective du dispositif de préparation automatique dans une configuration où la première lentille du job est, après avoir été détourée puis transférée selon un quatrième transfert, replacée par les moyens de troisième transfert en position intermédiaire sur les moyens d'accueil et de premier et second transferts ;

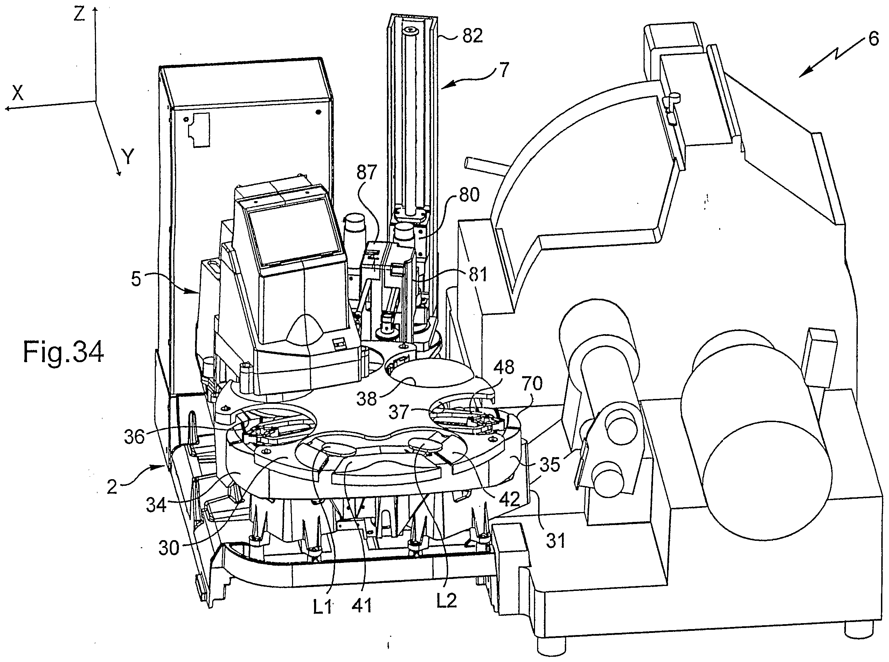

- la figure 34 est une vue en perspective du dispositif de préparation automatique dans une configuration où les deux premières lentilles sont amenées en position de déchargement par les moyens d'accueil et de premier et second transferts ;
- la figure 35 est une vue en perspective du dispositif de préparation automatique dans une configuration où les moyens d'accueil et de premier et second transferts sont prêts à accueillir une deuxième paire de lentilles d'un second job, alors que la première lentille de la première paire est encore traitée dans le dispositif de détourage et que la deuxième lentille de cette même première paire est traitée par les moyens de mesure ;

- la figure 36 est une vue en plan de la face avant d'une lentille correctrice progressive sur laquelle sont reportées les marquages classiques de cette lentille ; et
- la figure 37 est une vue schématique d'un exemple de réalisation du dispositif de mesure des caractéristiques d'une lentille ;
- la figure 38 est une vue schématique de face d'une monture d'une paire de lunettes positionnée sur le nez d'un porteur ;
- les figures 39 et 40 sont des vues de face schématisant la confrontation et le centrage conjoints des deux lentilles d'un même job en préparation ;
- la figure 41 est une vue schématique en perspective des principaux composants des moyens de détourage.

COMPOSANTS DU DISPOSITIF DE PREPARATION AUTOMATIQUE

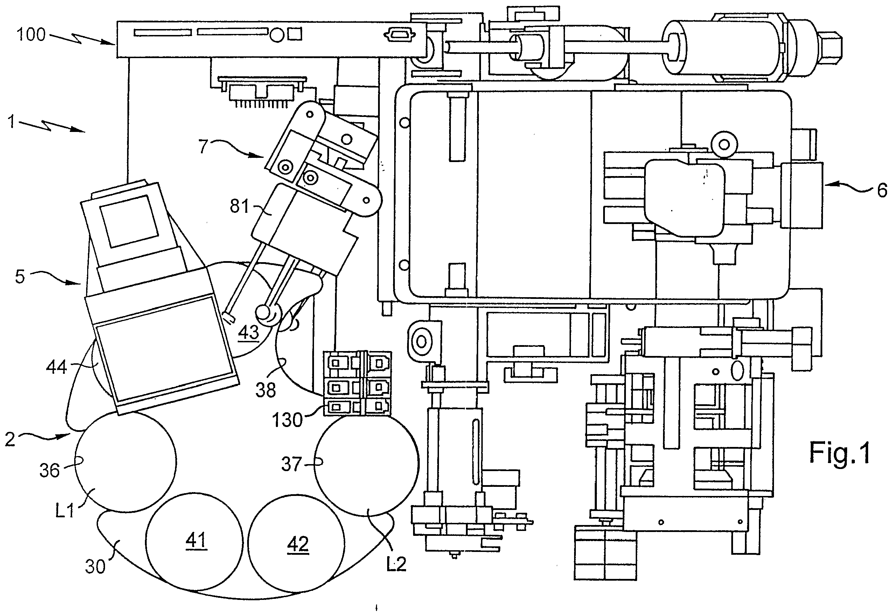

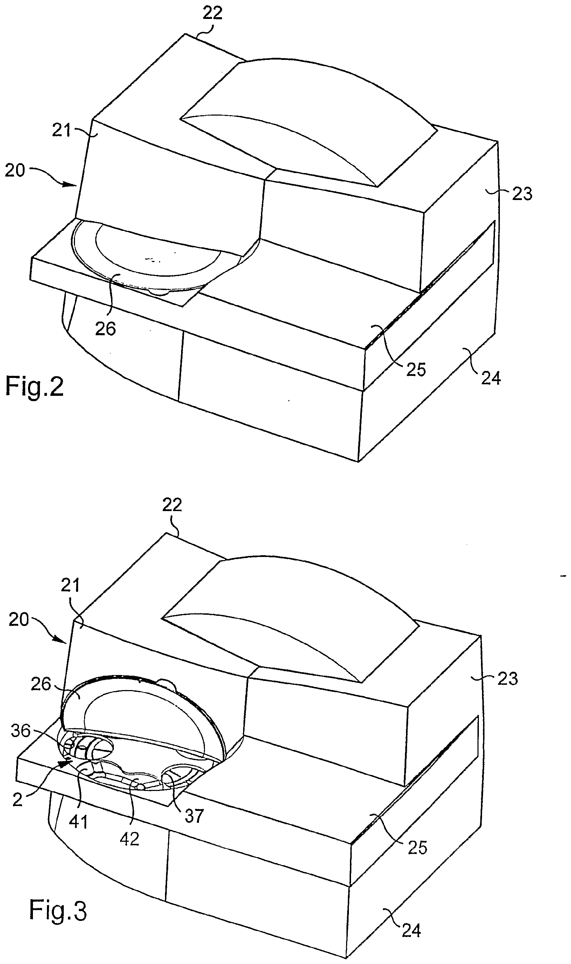

Comme le montrent plus particulièrement les figures 1 et 2, le dispositif de préparation au montage 1 selon la présente invention comprend plusieurs sous-ensembles montés sur un châssis commun :

- un dispositif de mesure 5 servant à la mesure automatique de diverses caractéristiques des lentilles L1 et L2 (qui peuvent être par exemple unifocales, multifocales à pastille(s) de vision de près ou intermédiaire avec discontinuité de puissance, ou encore multifocales à addition progressive de puissance) et notamment à la mesure de puissances ophtalmiques locales en des points remarquables tels que le centre optique d'une lentille unifocale ou les points de référence pour la vision de près et pour la vision de loin, et à la mesure d'au moins une caractéristique de repérage, telle qu'une caractéristique de centrage, d'axage, de localisation des points de référence pour la vision de loin et la vision de près, de la lentille ;
- un dispositif de détourage 6 des lentilles ophtalmiques ;
- des moyens combinés d'accueil et de premier et second transferts 2 conçus et agencés pour réceptionner un ou plusieurs jobs de lentilles ophtalmiques, dont par exemple un job de deux lentilles L1 et L2, et pour les faire circuler entre une position de chargement et de déchargement, une position de mesure dans laquelle la lentille ophtalmique est présentée en regard du dispositif de mesure 5 pour la mesure de ses caractéristiques de repérage et une position intermédiaire pour sa prise en charge par les moyens de palpage, saisie et troisième transfert prévus ci-dessous ;
- des moyens de palpage, de saisie et de troisième transfert 7 conçus et agencés pour d'une part palper chaque lentille ophtalmique en préparation et d'autre part saisir cette lentille en vue de son transfert depuis les moyens d'accueil et de premier et second transferts 2 vers le dispositif de détourage 6 ;

- un système électronique et informatique 100 conçu pour l'exécution d'un procédé de traitement automatisé selon l'invention ;

- un capotage 20 renfermant l'ensemble pour sa protection et possédant une porte d'accès restreint 26.

### Dispositif de mesure

Le dispositif de mesure 5 de la présente invention exerce plusieurs fonctions de mesure de diverses caractéristiques de la lentille. Parmi ces diverses fonctions qui seront exposées en détail ultérieurement, on distingue deux fonctions principales qui consistent, pour l'une, à mesurer des puissances optiques locales de la lentille en des points remarquables de celle-ci, et, pour l'autre, à détecter et localiser des caractéristiques de centrage ou repérage de la lentille afin d'établir ou positionner convenablement la lentille dans un référentiel global connu du dispositif.

Dans l'exercice de sa première fonction, le dispositif de mesure 5 opère sans contact, par imagerie cartographique d'ensemble, mais est complété par les moyens de palpage 7 qui, comme nous le verrons en détail, réalisent un palpage de la lentille pour fournir une information géométrique combinée aux informations optiques délivrées par le dispositif de mesure 5. Ce palpage opère, dans l'exemple décrit ci-après, par contact avec la lentille. Mais il va de soi que l'homme du métier pourra lui substituer un palpage sans contact opérant de façon équivalente un relevé géométrique de position.

Au-delà du mode réalisation présenté ci-après, le dispositif de mesure peut être de tout type suivant lequel la lentille est présentée entre les moyens d'éclairement et les moyens d'analyse pour obtenir une mesure globale d'une ou plusieurs de ses caractéristiques optiques en une pluralité de points sur la majeure partie de son étendue. La mesure optique globale peut être obtenue par déflectrométrie (du type Hartmann, moiré, etc.), par interférométrie, par propagation d'ondes, etc. L'interface utilisateur peut alors afficher non seulement le centre optique ou de référence, mais aussi des cartes de puissances et/ou des puissances et/ou axage en un ou plusieurs points remarquables de la lentille.

Pour comprendre la seconde fonction de centrage exercée par le dispositif de mesure 5 et plus généralement même la problématique résolue par l'invention, il est nécessaire de rappeler que, lors du montage d'une lentille ophtalmique sur une monture, il est important pour le confort visuel du porteur de s'assurer du positionnement convenable de la lentille par rapport à l'oeil dont elle corrige un défaut de réfraction ou d'accommodation.

Globalement, une lentille ophtalmique est centrée lorsque, d'une part, le centre optique (pour les lentilles unifocales ou multifocales à discontinuité de puissance) ou le centre de référence (pour les lentilles progressives) de la lentille ophtalmique prévu lors de la conception et, d'autre part, le centre pupillaire de l'oeil se superposent ou, autrement formulé, lorsque la ligne de regard passe par le centre optique ou le centre de référence de la lentille ophtalmique. Le centrage résulte donc du rapprochement de deux données géométrico-optiques: la morphologie pupillaire du porteur et la position sur la lentille du centre optique ou du centre de référence. La lentille doit aussi, pour exercer la fonction optique voulue, être convenablement orientée autour dé son axe optique.

En ce qui concerne plus particulièrement les lentilles ophtalmiques à addition progressive de puissance, on sait que, lors de sa fabrication, toute lentille progressive est munie de repères provisoires sous la forme d'un marquage à la peinture et de repères permanents sous la forme de gravures. Les repères provisoires permettent un centrage commode de la lentille préalablement à son montage. Les repères permanents permettent d'identifier, sur la monture du patient, la nature de la lentille ophtalmique progressive, la valeur de l'addition ainsi que de vérifier ou rétablir, après effacement des repères provisoires, le centrage exact de ladite lentille. On comprend en effet que les repères provisoires seront effacés par l'opticien avant la remise des lunettes à son client et ils pourront, au besoin, être rétablis à partir des repères permanents gravés qui restent sur la lentille ophtalmique.

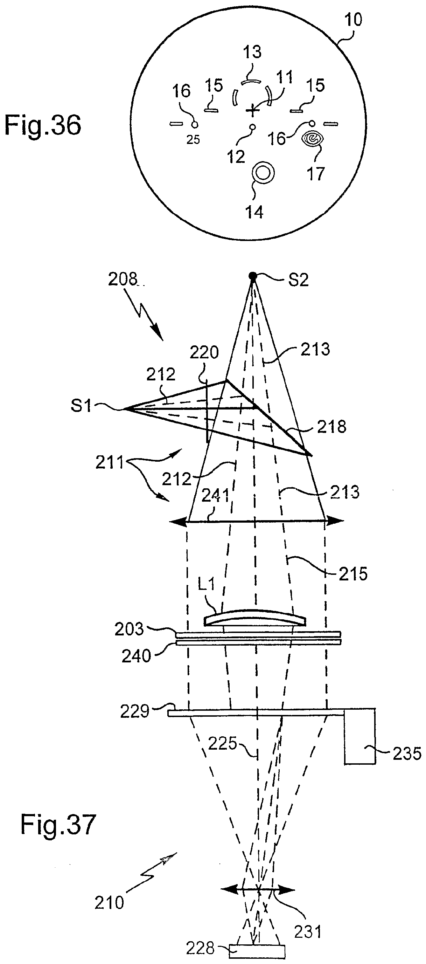

Plus précisément, comme le montre la figure 36, les repères provisoires comprennent habituellement :

- une croix 11 dite de montage ou centrage, matérialisant le centre de la zone de vision de loin, destinée à être positionnée en regard du centre de la pupille du porteur quand celui-ci regarde à l'infini droit devant lui ; elle permet de positionner verticalement et horizontalement la progression de puissance de la lentille L1 par rapport à l'oeil, de telle sorte que le porteur trouve facilement, comme prévu par le concepteur de la lentille, la puissance correctrice dont il a besoin en vision de loin, en vision intermédiaire et en vision de près ;

- un point central 12 situé, selon les types de lentilles, de 2 à 6 mm au-dessous de la croix de montage 11 et qui localise le "centre optique" de la lentille L1 ; ce "centre optique" est conventionnellement, pour une lentille progressive, le point de «référence prisme » où est mesurée la puissance prismatique nominale de la lentille L1 correspondant à la prescription du porteur ;

- un cercle 13 de mesure de la puissance de vision de loin de la lentille, situé dans la partie supérieure de la lentille L1, juste au-dessus de la croix de montage 11, et qui localise le point de référence pour la vision de loin ; il s'agit donc du lieu où un frontofocomètre devra être placé pour mesurer la puissance de vision de loin de la lentille L1 ;

- un cercle 14 de mesure de la puissance de vision de près de la lentille, situé dans la partie inférieure de la lentille L1 et qui entoure le centre ou point de référence de la zone de vision de près ; ce centre est décentré du côté nasal de 2 à 3 mm et la distance qui le sépare de la croix de montage 11 constitue la longueur nominale de la progression de la lentille L1 ;
- un ou plusieurs traits 15 repérant l'horizontale de la lentille L1 et qui seront utilisés pour le centrage.

Comme le montre également la figure 36, les repères permanents comprennent en général :

- deux petits cercles ou signes 16 localisés sur l'horizontale de la lentille L1 passant par le centre optique et situés systématiquement à 17 mm de part et d'autre du centre optique 12; ces gravures permettent de retrouver le centrage horizontal et vertical de la lentille ;
- un signe 17 permettant d'identifier la marque et la nature exacte de la lentille progressive (par exemple V pour Varilux®) qui est gravé sous le petit rond ou signe nasal ;
- un nombre à 2 ou 3 chiffres représentant la valeur de l'addition (par exemple 30 ou 300 pour une addition de 3,00 D) qui est gravé sous le petit rond ou signe temporal.

Pour mémoire, on se souviendra que, pour les lentilles à foyers multiples présentant une ou plusieurs lignes de discontinuité de puissance (délimitant par exemple une zone, appelée pastille, de vision de près), ces lignes tiennent lieu de repères permanents.

Le dispositif de mesure automatique 5 de caractéristiques d'une lentille ophtalmique L1 est représenté schématiquement sur la figure 37. Ce dispositif de mesure automatique comporte un support pour la lentille L1, ici horizontal et constitué par le carrousel des moyens d'accueil et de premier et second transferts 2 qui seront décrits ultérieurement. Il suffit de comprendre ici que ces moyens de premier transfert sont aptes à amener la lentille à examiner dans une position de mesure située en regard du dispositif de mesure et centrée sur l'axe optique du dispositif de mesure, comme cela sera mieux expliqué plus loin. En dessous de cette position de mesure de la lentille L1, une plaque de verre transparente protège l'intérieur du dispositif. De part et d'autre de cette position de mesure de la lentille L1, le dispositif de mesure comporte, suivant un axe optique principalement vertical, d'une part, des moyens d'éclairement 208 incluant un système optique 211 pour élaborer un faisceau lumineux dirigé vers la lentille L1 en position de mesure et, d'autre part, des moyens d'analyse 210 de l'image transmise par la lentille L1 en position de mesure.

Le système optique 211 est agencé pour définir deux trajets optiques possibles 212, 213, commutables, c'est-à-dire activables alternativement, pour ledit faisceau lumineux. Dans l'exemple représenté, les moyens d'éclairement comportent au moins deux sources lumineuses S1, S2 commutables, correspondant respectivement aux deux trajets optiques précités. Autrement dit, lorsque la source S1 est allumée, la source S2 est éteinte et réciproquement. Les deux trajets optiques 212, 213 comportent une partie commune 215 en amont de la lentille L1, plus particulièrement déterminée entre un miroir oblique semi-réfléchissant 218 et la lentille L1. Ce miroir matérialise l'intersection des deux trajets optiques. Le miroir 218 peut être remplacé par un cube séparateur ou un miroir amovible.

Un premier masque 220 formant une matrice de Hartmann ou analogue est placé sur l'un seulement des trajets (le trajet 212), en un emplacement tel qu'il occupe une position prédéterminée par rapport à un axe optique principal vertical 225 desdits moyens d'analyse 210. Cet axe optique 225 est en fait l'axe commun de certaines lentilles du système optique centrées par rapport à la source S1 et d'un récepteur optique 228 faisant partie des moyens d'analyse 210 situés de l'autre côté de la lentille L1 en position de mesure. Les moyens d'analyse comportent aussi un écran translucide 229 dépoli, intercalé perpendiculairement à cet axe optique 225 entre la lentille L1 en position de mesure et ledit récepteur optique 228. Ce dernier peut être un capteur matriciel ou une caméra avec objectif. Si le récepteur optique est un capteur matriciel, on lui adjoint un objectif 231 et, éventuellement, un diaphragme non prévu dans l'exemple illustré. Si le récepteur optique est une caméra, ces éléments sont remplacés par l'objectif même de la caméra. L'écran translucide 229 dépoli est de préférence en verre ou analogue, dépoli en surface. Il s'agit d'un disque monté tournant et entraîné en rotation par un moteur 235 autour de l'axe optique 225.

Revenant au système optique 211 lié aux sources S1 et S2, la première source lumineuse S1 parmi ces deux sources est une source dite ponctuelle propre à fournir un faisceau divergent illuminant le premier masque 220 suivant le premier trajet 212, avant de se réfléchir sur le miroir oblique 218 pour emprunter la partie commune de trajet optique 215 et éclairer ainsi la lentille ophtalmique L1. Le miroir oblique 218 fait un angle de 45° par rapport à l'axe optique 225 de sorte que le faisceau issu de la source S1 est réfléchi sur ce miroir et dirigé vers la lentille ophtalmique L1. En aval du premier masque 220, donc sur le premier trajet optique 212, la lumière émise par la source S2 se divise en une pluralité de rayons lumineux distincts, le premier masque de type Hartmann 220 exerçant sa fonction de séparateur de faisceau.

La source S1 peut éventuellement être mobile suivant l'axe optique ou un axe perpendiculaire à celui-ci, mais éclaire dans tous les cas, lorsqu'elle est activée, le premier masque 220. Le système optique comporte en outre une lentille de collimation 241 centrée sur l'axe optique 225 et placée entre le miroir 218 et la lentille ophtalmique mesurée L1. Cette lentille 241 permet de générer un faisceau de lumière parallèle de grande dimension, supérieure à celle de la lentille L1 et d'imager le premier masque 220 sur la surface de la lentille ophtalmique L1.

Une seconde source lumineuse S2 est agencée pour éclairer la lentille L1 en position de mesure via le second trajet optique 213, excluant le premier masque 220 formant matrice de Hartmann. Cette seconde source lumineuse traverse le miroir semi-réfléchissant 218 qui matérialise l'intersection des deux trajets optiques 212, 213. Cette source S2 est une source ponctuelle propre à fournir un faisceau divergent dirigé vers le miroir 218. L'axe du faisceau engendré par la source S2 est perpendiculaire au faisceau engendré par la source S1 en amont du miroir 218 et traverse ce miroir sans être dévié. Il éclaire alors la lentille ophtalmique L1 sans avoir subi aucune séparation de faisceau par un quelconque élément séparateur du type masque de Hartmann ou analogue.

Un second masque de type Hartmann 240 ou séparateur de faisceau analogue est disposé en aval de la lentille ophtalmique L1, c'est-à-dire entre cette lentille et les moyens d'analyse d'image 210. En l'espèce, le masque 240 est situé en dessous de la vitre protectrice 203, adjacente à celle-ci. Ce second masque 240 est engageable et désengageable à volonté, sous le contrôle du système électronique et informatique 100.

En pratique ce second masque peut être réalisé sous la forme d'un écran transparent à cristaux liquides (LCD) ou analogue, comme dans l'exemple illustré. Il peut également être constitué d'un masque passif permanent monté mobile par rapport à la lentille ophtalmique, de façon à être apte à s'effacer pour libérer une partie au moins de la lentille ophtalmique lorsque cette partie doit être examinée sans ce second masque, comme expliqué plus loin.

Dans ces conditions le terme "engageable" et "désengageable" signifient que le masque en cause opère ou non sa fonction de séparation du faisceau lumineux en amont ou en aval de la lentille sur tout ou partie de la surface de la lentille ophtalmique. On comprend que, concrètement, l'engagement ou le désengagement du masque peut revêtir une réalité différente selon le type de masque utilisé.

Lorsque le masque est de type passif et consiste par exemple en un support d'un ou plusieurs motifs matérialisés sur ce support, tel qu'une grille ou une plaque trouée, le terme désengageable signifie en particulier escamotable ou rétractable mécaniquement, en totalité ou en partie, le masque étant alors monté mobile par rapport à la lentille (qu'il soit lui même mobile ou que la lentille soit mobile et que le masque soit fixe) pour permettre un dégagement d'une partie au moins de la surface correspondante de la lentille en vue de son éclairement ou de sa lecture directe, avec le faisceau lumineux complet, sans séparation de ce faisceau. Le terme désengageable peut aussi signifier shuntable optiquement comme cela est le cas pour le masque 220.

Lorsque le masque est de type actif et consiste par exemple en un écran à affichage dynamique tel qu'un écran CRT ou LCD, le terme désengageable signifie désactivable : l'électronique de commande de l'écran éteint tout motif de séparation sur au moins une zone de cet écran correspondant à la zone à lire sans séparation de faisceau de la lentille.

Dans l'exemple illustré, le masque 240 est de type actif LCD, donc désactivable, et le masque 220 est de type passif (en dur) et shuntable optiquement (par les deux voies optiques alternatives 212 et 213). On pourrait toutefois, en variante, prévoir que le masque 220 situé entre la source et la lentille soit de type actif, tel qu'un écran LCD, activable et désactivable électroniquement, comme le masque 240 situé entre la lentille et l'écran dépoli.

En service, le dispositif de mesure ainsi composé est susceptible d'adopter trois états correspondants à trois modes de fonctionnement :

Etat 1 : la source S1 est activée et éclaire la lentille L1 au travers du premier masque 220 (ce premier masque étant de la sorte "activé"), la source S2 étant éteinte et le second masque 240 étant désactivé ; autrement dit, le premier masque 220 est seul engagé.

Etat 2 : la source S2 est activée et le second masque 240 est activé, la source S1 étant éteinte (le premier masque 220 étant ainsi en quelque sorte "désactivé") ; ainsi, le second masque 240 est seul engagé.

Etat 3 : seule la source S2 est activée, la source S1 et son masque 220 associé étant désactivés et le second masque 240 étant au moins partiellement désactivé (ou escamoté) ; ainsi, les deux masques 220, 240 sont désengagés simultanément.

Dans l'état 1, la source S1 et son masque associé 220 sont activés et utilisés pour corriger l'erreur de lecture et repositionner les marques, repères ou indicateurs (gravure, marquage, segment) de la face avant de la lentille vus sur l'écran 229 par le capteur 218, due aux déviations prismatiques au travers de la lentille ophtalmique L1.

Dans l'état 2, la source S2 et son masque associé 240 sont activés conjointement, tandis que la source S1 est désactivée, pour réaliser une analyse globales d'une ou plusieurs caractéristiques optiques en une pluralité de points sur toute l'étendue de la lentille, afin de mesurer cette ou ces caractéristiques optiques en un ou plusieurs points remarquables isolés (tels que les points de référence pour la vision de près et pour la vision de loin d'une lentille progressive ou le ou les centres optiques d'une lentille unifocale ou multifocale à discontinuité de puissance) ou, éventuellement, d'établir une cartographie de la lentille ophtalmique L1 (en particulier mesure de puissance/astigmatisme en plusieurs points de la lentille) et la détermination du centre optique de la lentille ophtalmique L1 lorsque celle-ci est du type non progressive.

Dans l'état 3, la source S2 est activée seule, tandis que la source S1 et le second masque 240 sont désactivés, pour la détermination de marques imprimées, de gravures en relief et de segments (verres bifocaux et trifocaux) nécessitant au moins localement une vision dégagée de la lentille ophtalmique.

Les sources lumineuses mentionnées S1, S2, ci-dessus peuvent être des diodes électroluminescentes (LED) ou des diodes laser de préférence associées à des fibres optiques respectives.

On va maintenant décrire la façon dont le dispositif de mesure peut être exploité pour déterminer un certain nombre de caractéristiques de la lentille ophtalmique L1 en position de mesure.

Première fonction : identification de la lentille ophtalmique

Il est utile de pouvoir reconnaître, avant toute autre chose, le type de lentille ophtalmique analysée (monofocal, multifocal ou progressif) afin d'éviter les erreurs. Pour ce faire, on utilise la source S2 en liaison avec le second masque 240 formant matrice de Hartmann. Le dispositif de mesure est dans son état 2 ou dan son état 3. Le faisceau suivant le second trajet optique 213 est transformé par le second masque 240 en une pluralité de rayons fins individualisés correspondant à la configuration du masque. Chacun de ces rayons frappe la face avant de la lentille L1 parallèlement à l'axe optique 225, c'est-à-dire globalement perpendiculairement au plan médian de la lentille ophtalmique L1 (donc en l'espèce verticalement, la lentille ophtalmique L1 étant maintenue horizontalement par les moyens d'accueil et de premier transfert 2, comme nous le verrons ultérieurement). Ces rayons sont déviés par la lentille ophtalmique L1 et sont visualisés sous forme de tâches lumineuses sur l'écran dépoli tournant 229. Le dépoli est imagé sur le capteur matriciel associé au système télécentrique ou celui de la caméra, et les tâches sont analysées par un système électronique et informatique de traitement (associé ou intégré au le système électronique et informatique 100) qui détermine leur déplacement.

Si la lentille est du type unifocal, le déplacement des points du masque (c'est-à-dire les tâches lumineuses qui apparaissent sur l'écran dépoli) après déviation par la lentille est en progression radiale du centre vers la périphérie, comparé aux positions des mêmes points lorsqu'aucune lentille ophtalmique n'est présente sur l'axe optique du dispositif de mesure. Les positions des points du masque de Hartmann sur l'écran lorsque aucune lentille n'est présente en regard du dispositif de mesure sont mesurées au cours d'une phase d'étalonnage.

Pour une lentille convergente, les tâches se rapprochent de l'axe optique, d'autant plus que la lentille ophtalmique à mesurer est puissante.

Lorsque la lentille analysée est progressive, la répartition des points ne présente pas de symétrie axiale.

Par conséquent, la mesure d'un déplacement de ce genre permet de déterminer le type de lentille.

D'autres moyens et méthodes de détermination de type de lentille sont bien connues de l'homme du métier et pourront être utilisée dans le cadre de la présente invention à la place de l'exemple donné ci-dessus.

Deuxième fonction : détermination de la ligne de progression d'une lentille progressive

Dans les conditions de mesure indiquées ci-dessus (état 2), on observe que pour une lentille progressive, le déplacement des points varie suivant une ligne dite "ligne de progression". Pour déterminer cette ligne de progression, on détermine par calcul la direction du gradient de puissance en calculant la puissance en différents points de la lentille, par exemple selon la méthode qui sera indiquée plus loin. Cette direction est la ligne de progression. On peut donc mesurer et calculer de ce fait l'orientation de la ligne de progression qui est une des caractéristiques importantes d'une lentille progressive. Il est à noter que ces calculs sont menés à partir de deux séries de données, d'une part la configuration des points du second masque de Hartmann 240 sur l'écran dépoli lorsqu'aucune lentille ophtalmique n'est présente sur l'axe optique du dispositif de mesure et d'autre part la configuration correspondante des mêmes points lorsqu'elle résulte d'une déviation de l'ensemble des rayons par la lentille ophtalmique L1.

Troisième fonction : détermination du centre optique pour une lentille non progressive

Si la lentille ophtalmique L1 a été identifiée comme étant du type unifocal on peut facilement déterminer la position du centre optique de cette lentille. Le dispositif étant toujours dans son état 2, il suffit de comparer les points du masque de référence (apparaissant sur l'écran dépoli 229 lorsqu'aucune lentille n'est présente sur l'axe optique du dispositif de mesure) et les points correspondants du masque visualisés sur l'écran dépoli après déviation par la lentille. En principe, le point du second masque 240 qui n'a pas été dévié correspond à la position du centre optique. Comme il n'existe pas généralement de rayon n'ayant subi aucune déviation, on procède en fait à une interpolation à partir des rayons les moins déviés, par exemple par application de la méthode des moindres carrés sur un modèle polynomial.

Quatrième fonction : calcul de la puissance et de l'astigmatisme de la lentille ophtalmique

On sait que pour une lentille unifocale, la distance entre le foyer et la face arrière de la lentille ophtalmique représente la puissance frontale.

La position de la face arrière de la lentille ophtalmique L1 est donnée a posteriori au moyen d'un palpage avec les moyens de palpage, de préhension et de second transfert 7, comme cela sera mieux expliqué ultérieurement. Pour déterminer le foyer, le dispositif est toujours dans son état 2 et on utilise encore l'image sur l'écran dépoli du second masque 240 formant matrice de Hartmann. Pour ce faire, on compare la position des points correspondants entre l'image d'étalonnage (prise avant positionnement de la lentille ophtalmique) et l'image après interposition de la lentille ophtalmique. Compte tenu de la distance entre le masque 240 et l'écran 229 (connue par construction), on en déduit par calcul l'angle de déviation des rayons lumineux issus de la séparation de faisceau réalisée par le masque 240.

On compare, pour plusieurs points voisins, la position et la direction des rayons lumineux, ce qui permet de calculer la position du foyer sur l'axe optique (et donc sa puissance, qui est l'inverse de la distance du foyer à la lentille ophtalmique) et l'astigmatisme de la lentille ophtalmique (valeur et axe d'astigmatisme) s'il y a astigmatisme. Ces mesures sont locales et peuvent être répétées sur différentes zones de la lentille ophtalmique, ce qui permet d'obtenir une carte de puissance de la lentille ophtalmique.

Cinquième fonction : détermination du point de centrage et de l'axe de l'horizontale pour une lentille progressive

On sait que l'on peut considérer qu'en tout point de la lentille ophtalmique, la face avant et la face arrière font un angle assimilable à un prisme. Par ailleurs, dans une lentille progressive, on définit l'addition comme étant la différence entre la puissance maximum et la puissance minimum de la lentille ophtalmique.

On définit généralement le point de référence du prisme comme le point où le prisme de la lentille ophtalmique est égal au prisme prescrit. Sur une lentille progressive, le point de référence de prisme (PRP) est assimilable au centre optique d'une lentille unifocale (et est d'ailleurs parfois appelé ainsi par abus de langage) et est situé au centre d'un segment séparant deux repères gravés sur la face avant de la lentille. Le plus souvent, ce point est également repéré par un marquage spécifique imprimé.

Quoi qu'il en soit, le repérage du point de référence de prisme ou de tout point remarquable servant au centrage de la lentille ophtalmique L1, lorsque cette lentille est progressive, s'effectue dans l'état 3, en illuminant la lentille L1 à partir de la source lumineuse S2, c'est-à-dire en évitant le premier masque de Hartmann 220. L'image transmise par la lentille ophtalmique L1 apparaît sur le verre dépoli 229 et est perçue par le récepteur optique 228. La lecture s'accompagne d'un traitement d'image approprié pour identifier les repères gravés ou les marquages et déterminer leurs positions dans un référentiel fixe connu du système électronique et informatique 100. Cette visualisation des repères gravés ou marquages et la détermination du point de référence de prisme permet ensuite de déterminer le point de centrage de la lentille progressive (croix de montage) sur lequel on doit faire coïncider la position du centre de la pupille de l'oeil du porteur et l'axe d'horizontale qui donne l'orientation de la lentille ophtalmique dans la monture.

Sixième fonction détermination de la position du segment dans le cas d'une lentille à double foyer

On utilise encore la source S2 seule sans masque (état 3 du dispositif de mesure) qui permet de visualiser l'image de la lentille ophtalmique L1 sur l'écran dépoli. Un traitement d'images approprié permet de mieux observer les variations d'intensité lumineuse sur l'écran et par conséquent d'obtenir un contour net des limites du segment, et déterminer sa position avec précision.

Septième fonction : détermination de la forme et des dimensions de la lentille ophtalmique

Ces caractéristiques se déterminent en illuminant la lentille ophtalmique à partir de la source S2 sans masque de Hartmann (état 3 du dispositif de mesure) et en effectuant un traitement d'image approprié afin de mieux discerner les contours de la lentille ophtalmique. Avant détourage, la lentille ophtalmique est généralement circulaire et cette analyse à principalement pour but de déterminer son diamètre. Cependant, il peut arriver que la lentille ophtalmique ait déjà une forme proche de celle de la monture à laquelle elle est destinée. Le traitement d'image permet de connaître la forme et les dimensions de la lentille ophtalmique non circulaire. La détermination de la forme et des dimensions de la lentille ophtalmique permet de vérifier que celle-ci est suffisamment grande pour tenir dans la monture ou la forme choisie.

Huitième fonction : correction des erreurs de lecture dues aux déviations prismatiques induites par la lentille ophtalmique mesurée

Il est à noter que pour tous les paramètres indiqués ci-dessus qui sont acquis à partir de l'illumination de la lentille ophtalmique par la source S2 seule, c'est-à-dire en excluant les deux masques de Hartmann 220 et 240, il est possible de retraiter les mesures pour "reporter" les positions des marques, gravures ou segment lues sur l'écran dépoli, au niveau de la face avant de la lentille ophtalmique. La source S2 permet de voir les marques, gravures ou segment, mais ne permet pas de déterminer leurs positions réelles sur la face avant de la lentille ophtalmique. La source S1 associée à la première matrice 220 permet par contre de calculer la position précise de ces éléments acquis avec S2 sur la face avant de la lentille ophtalmique.

On procède de la façon suivante. Supposons que l'on considère la tache lumineuse A, sur l'écran dépoli 229, correspondant à l'un des trous du masque de Hartmann. Le rayon lumineux correspondant frappe la face avant de la lentille ophtalmique L1 en A'. Dans une première étape, on allume la source S2 et on mémorise l'image correspondante qui apparaît sur l'écran dépoli. Puis, on allume la source S1 et on éteint la source S2. L'image du masque de Hartmann apparaît donc sur l'écran dépoli 229. Par construction, on connaît la hauteur de chaque trou du masque de Hartmann (distance du trou par rapport à l'axe optique 225). Par conséquent, pour un rayon donné, on connaît la hauteur du rayon correspondant à son point d'entrée sur la face avant de la lentille ophtalmique L1. C'est-à-dire qu'on connaît la hauteur du point A' correspondant au point A. Par conséquent, on peut affecter au point A une correction qui permet de déterminer A'. On peut donc retrouver la position sur la lentille même, de tout repère lu sur l'écran dépoli, ce qui augmente la précision de cette mesure. Autrement dit, l'utilisation du masque de Hartmann 220 en liaison avec la source lumineuse S1 (ledit masque de Hartmann étant placé en amont de la lentille ophtalmique L1) permet d'améliorer toutes les mesures qui sont effectuées en illuminant la lentille à partir d'une source S2 empruntant un trajet optique excluant ledit masque.

Neuvième fonction : correction des erreurs de mesure de puissances de tous types de lentilles et de centrage et d'axage des lentilles unifocales

La combinaison des deux masques 220 et 240 situés de part et d'autre de la lentille permet de corriger partiellement les erreurs de centrage, d'axage et de puissance provenant d'un défaut de positionnement de la lentille.

Il se peut en effet que, pour des raisons diverses telles que par exemple un défaut de positionnement de la lentille à mesurer sur le plateau support 30 au moment de son chargement ou encore un défaut d'alignement du dispositif de mesure par rapport au plateau 30 de support de la lentille à mesurer, la lentille se présente en regard du dispositif de mesure avec son axe formant un angle non négligeable avec l'axe principal 225 du dispositif de mesure. Ce défaut d'horizontalité du positionnement de la lentille à mesurer engendre des aberrations optiques sur le front d'onde au voisinage du point où l'on souhaite réaliser la mesure (qui peut être le centre optique ou tout point remarquable de la lentille où l'on souhaite mesurer une caractéristique optique) ainsi qu'un décalage du rayon passant par ce point. Ces aberrations optiques ou ce décalage des rayons au point d'intérêt fausse les mesures des caractéristiques optiques, et en particulier des puissances et axes optiques locaux de la lentille lorsque cette lentille est de type quelconque et en particulier à variation progressive de puissance(s) ainsi que de la position du centre optique et de l'orientation de l'axe principal d'astigmatisme lorsque la lentille est de type unifocal.

C'est ainsi en particulier que l'on commet une erreur $e_1$ de mesure de la position du centre optique d'une lentille unifocale qui est approximativement égale au produit :

$$e_1 = i.d_1$$

où i est l'angle d'inclinaison de l'axe optique de la lentille par rapport à l'axe principal du dispositif de mesure, c'est-à-dire en l'espèce par rapport à la verticale, et $d_1$ est la distance entre le plan principal image et la face avant convexe de la lentille (lorsque cette face est comme en l'espèce la face supérieure en regard des sources S1 et S2).

Grâce aux possibilités offertes par la combinaison de deux masques séparateurs de faisceau situés de part et d'autre de la lentille, il est possible de mesurer et donc corriger, au moins partiellement, cette erreur. On procède de la façon suivante.

On mesure le centre optique conformément à la troisième fonction exposée ci-dessus, avec l'état 2 du dispositif, le second masque 240 étant seul engagé.

On mesure ensuite en ce point le décalage $e_2$ résultant de l'erreur d'inclinaison i de la lentille éventuellement subi par un rayon, avec l'état 1 du dispositif, le premier masque 220 étant seul engagé.

Si le décalage est nul, on en déduit que la lentille est convenablement positionnée, sans défaut d'horizontalité (inclinaison nulle i = 0).

Sinon, on calcul approximativement l'angle d'inclinaison i de l'axe optique de la lentille à mesurer par la formule suivante :

$$i \approx e_2 / d_2$$

où $e_2$ est le décalage mesuré
et $d_2$ est la distance (moyenne, dépendant de la puissance de la lentille mesurée) entre le plan principal objet et le plan principal image de la lentille mesurée.

On applique alors une correction égale à l'erreur $e_1 \approx i.d_{1m}$ sur la position mesurée du centre optique, où $d_{1m}$ est une estimation moyennée, selon en particulier la puissance de la lentille, de la distance entre le plan principal image et la face avant convexe de la lentille (lorsque cette face est comme en l'espèce la face supérieure en regard des sources S1 et S2).

Dispositif de détourage

Le dispositif de détourage 6 peut être réalisé sous la forme de toute machine de découpage ou d'enlèvement de matière adaptée à modifier le contour de la lentille ophtalmique pour l'adapter à celui du cadre ou "cercle" d'une monture sélectionnée. Une telle machine peut consister par exemple en une meuleuse, une machine de découpage au laser ou par jet d'eau, etc.

Il peut s'agir en particulier, comme dans l'exemple illustré, d'une meuleuse classiquement utilisée pour le détourage des lentilles ophtalmiques de lunettes en matière plastique ou minérale. Une telle meuleuse comporte principalement, sur un châssis, un poste d'usinage, qui est équipé d'une ou plusieurs meule(s) de débordage et d'une ou plusieurs meule(s) de chanfreinage et biseautage montées rotatives autour d'un axe sous la commande d'un moteur d'entraînement, et un chariot, qui est équipé parallèlement à l'axe desdites meules, de deux arbres coaxiaux de serrage et d'entraînement en rotation de la lentille. Ces arbres sont propres à enserrer axialement la lentille à traiter et sont montés rotatifs sous la commande d'un moteur d'entraînement.

Le chariot est monté mobile sur le châssis, d'une part transversalement par rapport à l'axe des meules, sous le contrôle de moyens d'appui le sollicitant en direction dudit axe, et, d'autre part, axialement, parallèlement à l'axe de ces meules, sous le contrôle de moyens de commande appropriés.

Pour son déplacement transversal par rapport à l'axe des meules, qui est nécessaire pour l'application de la lentille ophtalmique à traiter contre celles-ci, ce chariot peut par exemple être monté pivotant sur un arbre parallèle à cet axe (le chariot est alors usuellement appelé "bascule"), ou être monté mobile en translation perpendiculairement à celui-ci.

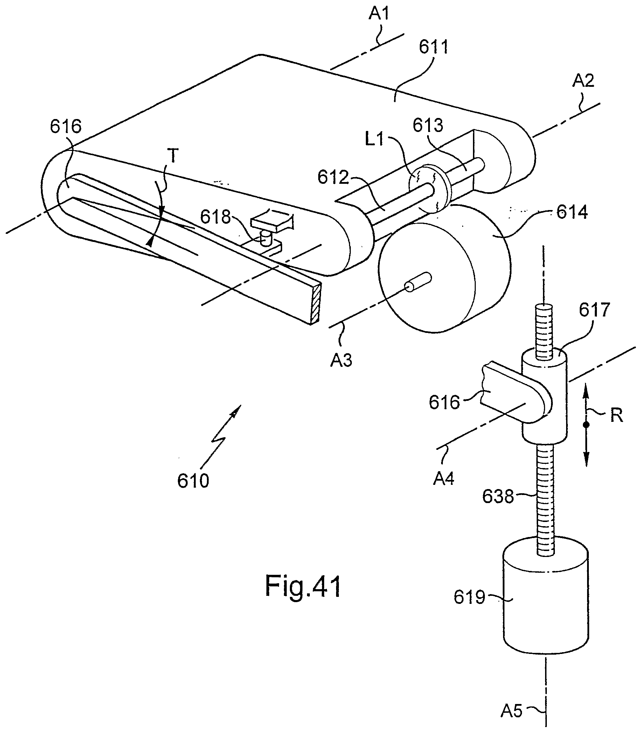

Plus précisément, dans l'exemple schématisé sur la figure 41, le dispositif de détourage 6 comporte, de manière connue en soi, une meuleuse 610. Cette meuleuse comporte, en l'espèce, d'une part, une bascule 611, qui est montée librement pivotante autour d'un premier axe A1, en pratique un axe horizontal, sur un châssis 601 associé au bâti de l'ensemble du dispositif de préparation, et qui, pour le soutien et le maintien d'une lentille ophtalmique telle que L1 à usiner, est équipée de deux arbres de serrage et d'entraînement 612, 613 alignées l'un avec l'autre suivant un deuxième axe A2 parallèle au premier axe A1 et dûment entraînées en rotation par un moteur également non représenté, et, d'autre part, au moins une meule 614, qui est calée en rotation sur un troisième axe A3 parallèle au premier axe A1, et qui est elle aussi dûment entraînée en rotation par un moteur non représenté. Par mesure de simplicité, les axes A1, A2 et A3 n'ont été que schématisés en traits interrompus sur la figure 41.

En pratique, la meuleuse 610 comporte un train de plusieurs meules telles que 614 montées coaxialement sur le troisième axe A3, pour un ébauchage et une finition de la lentille ophtalmique L1 à usiner, et l'ensemble est porté par un chariot, également non représenté, monté mobile en translation suivant le premier axe A1. Ces différentes meules sont adaptées chacune au matériau de la lentille détourée et au type d'opération effectuée (ébauche, finition, rainurage, etc.).

La meule 614 (ou plus précisément l'ensemble du train de meules) est mobile en translation suivant l'axe A3 et est commandée dans cette translation par une motorisation non représentée.

S'agissant, en pratique, d'une meuleuse automatique, communément dite numérique, la meuleuse 610 suivant l'invention comporte, en outre, une biellette 616, qui, articulée au châssis autour du même premier axe A1 que la bascule 611 à l'une de ses extrémités, est articulée, à l'autre de ses extrémités, suivant un quatrième axe A4 parallèle au premier axe A1, à une noix 617 montée mobile suivant un cinquième axe A5, communément dit axe de restitution, perpendiculaire au premier axe A1, avec, intervenant entre cette biellette 616 et la bascule 611, un capteur de contact 618. On a noté T l'angle de pivotement de la bascule 611 autour de l'axe A1 par rapport à l'horizontale. Cet angle T est linéairement associé à la translation verticale, notée R, de la noix 617 suivant l'axe A5.

Par exemple, et tel que schématisé sur la figure 41, la noix 617 est une noix taraudée en prise à vissage avec une tige filetée 638 qui, alignée suivant le cinquième axe A5, est entraînée en rotation par un moteur 619.

Par exemple, également, le capteur de contact 618 est constitué par une cellule à effet Hall.

Lorsque, dûment enserrée entre les deux arbres 612, 613, la lentille ophtalmique à usiner est amenée au contact de la meule 614, elle est l'objet d'un enlèvement effectif de matière jusqu'à ce que la bascule 611 vienne buter contre la biellette 616 suivant un appui qui, se faisant au niveau du capteur de contact 618, est dûment détecté par celui-ci.

En variante, on pourra prévoir que la bascule 611 est directement articulée à la noix 617 montée mobile suivant l'axe de restitution A5. Une jauge de contrainte est associée à la bascule pour mesurer l'effort d'avance d'usinage appliqué à la lentille. On mesure ainsi en permanence, pendant l'usinage, l'effort d'avance de meulage appliqué à la lentille et on pilote la progression de la noix 617, et donc de la bascule 611, pour que cet effort reste en deçà d'une valeur de consigne maximum. Cette valeur de consigne est, pour chaque lentille, adapté au matériau et à la forme de cette lentille.

Quoi qu'il en soit, pour l'usinage de la lentille ophtalmique L1 suivant un contour donné, il suffit, donc, d'une part, de déplacer en conséquence la noix 617 le long du cinquième axe A5, sous le contrôle du moteur 619, et, d'autre part, de faire pivoter conjointement les arbres 612, 613 autour du deuxième axe A2, en pratique sous le contrôle du moteur qui les commande, pour que tous les points du contour de la lentille ophtalmique L1 soient successivement concernés.

Le système électronique et informatique 100, dûment programmée à cet effet, coordonne cette double opération.

Les dispositions qui précèdent sont d'ailleurs bien connues par elles-mêmes, et, ne relevant pas en propre de la présente invention, elles ne seront pas décrites plus en détail ici.

Moyens combinés d'accueil et de premier et second transferts

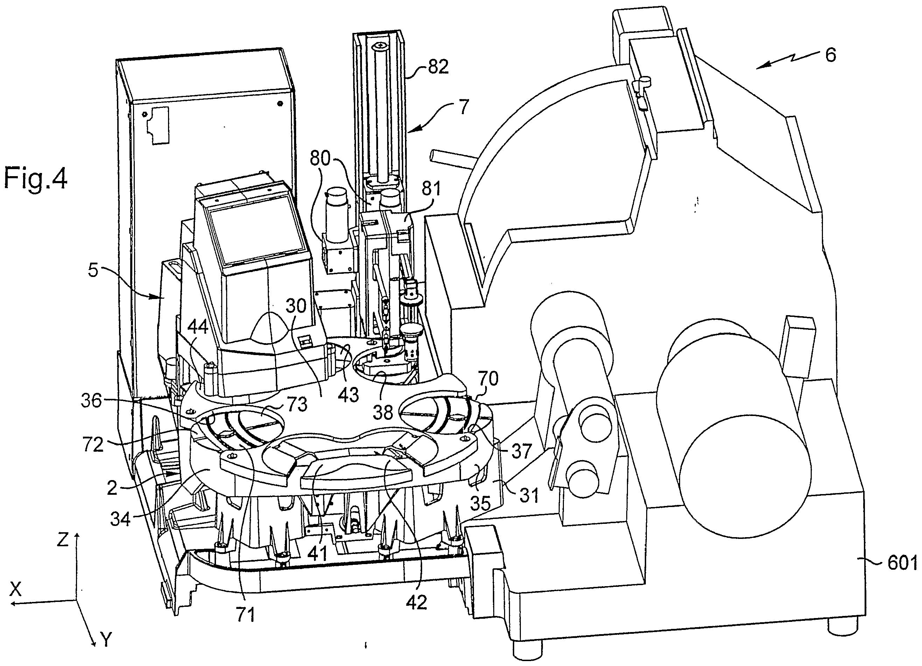

Les moyens d'accueil et de premier et second transferts 2 prennent la forme d'un carrousel qui est plus particulièrement décrit en regard des figures 4 à 8 et qui comprend :

- un plateau de chargement et déchargement 30 monté sur le châssis commun pour tourner, sous la commande de moyens de commande (en l'espèce un moteur électrique non représenté) pilotés par le système électronique et informatique 100, autour d'un axe de rotation passant sensiblement par son centre et perpendiculaire au plan de ce plateau ;
- un bâti support 31 solidaire du châssis commun ;
- des sièges de réception 34, 35 sur lesquels les lentilles L1 et L2 sont destinées à reposer lorsqu'elles sont chargées sur le plateau 30.
- sur le plateau de chargement et déchargement 30, au moins trois places de chargement 36 à 38 et au moins quatre places de déchargement 41 à 44.
- des moyens d'immobilisation 32 des lentilles L1 et L2 chargées sur le plateau 30 aux places de chargement 36 à 38.

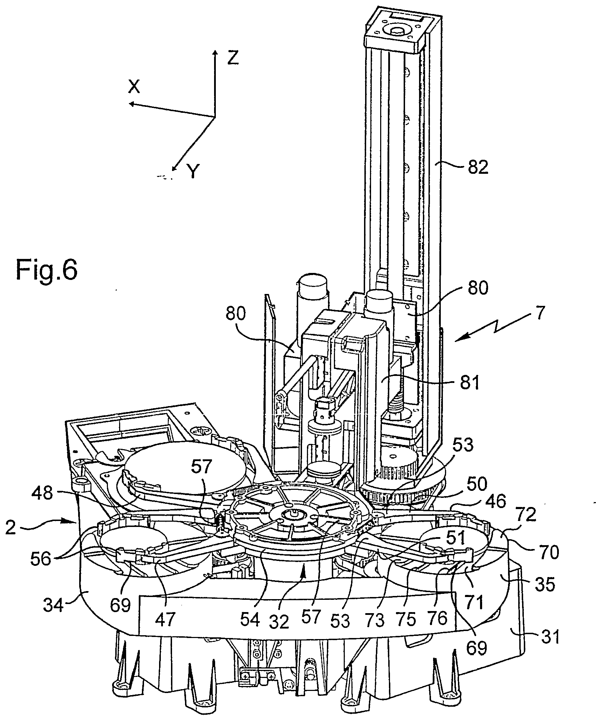

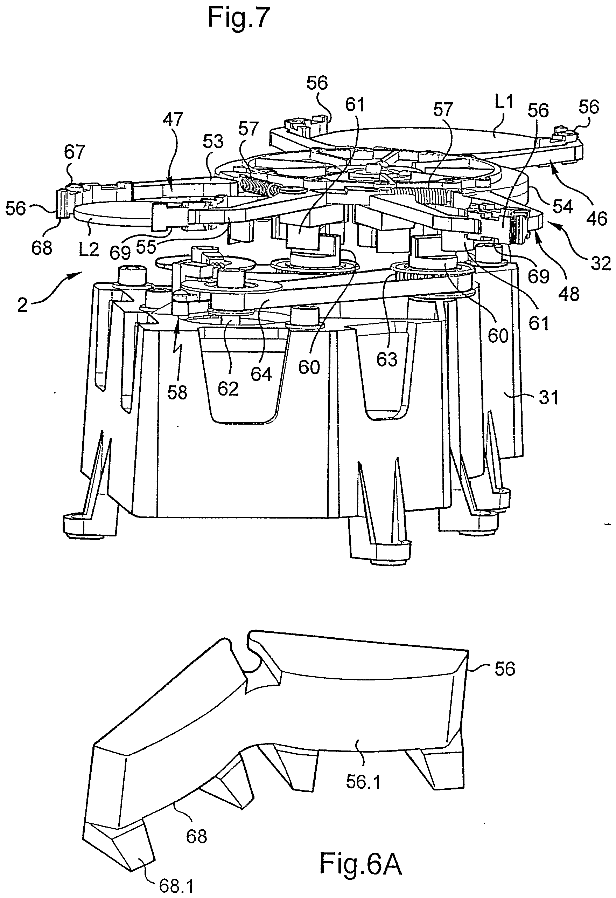

Dans l'exemple illustré, les places de chargement 36 à 38 sont constituées par un nombre correspondant d'échancrures ou évidements. Ces trois échancrures 36 à 38 sont identiques et présentent chacune une forme sensiblement circulaire de diamètre légèrement supérieur à celui standard (environ 70 mm) des lentilles L1 et L2 à détourer. Les trois échancrures sont agencées débouchantes à la périphérie du plateau de chargement et déchargement 30. Ces ouvertures permettent l'accès à au moins deux sièges 34, 35 sur lesquels reposent les lentilles à détourer. En regard des places de chargement 36 à 38 sont montées articulées des pinces de serrage 32 constituant les moyens d'immobilisation des lentilles (figures 6 à 8).

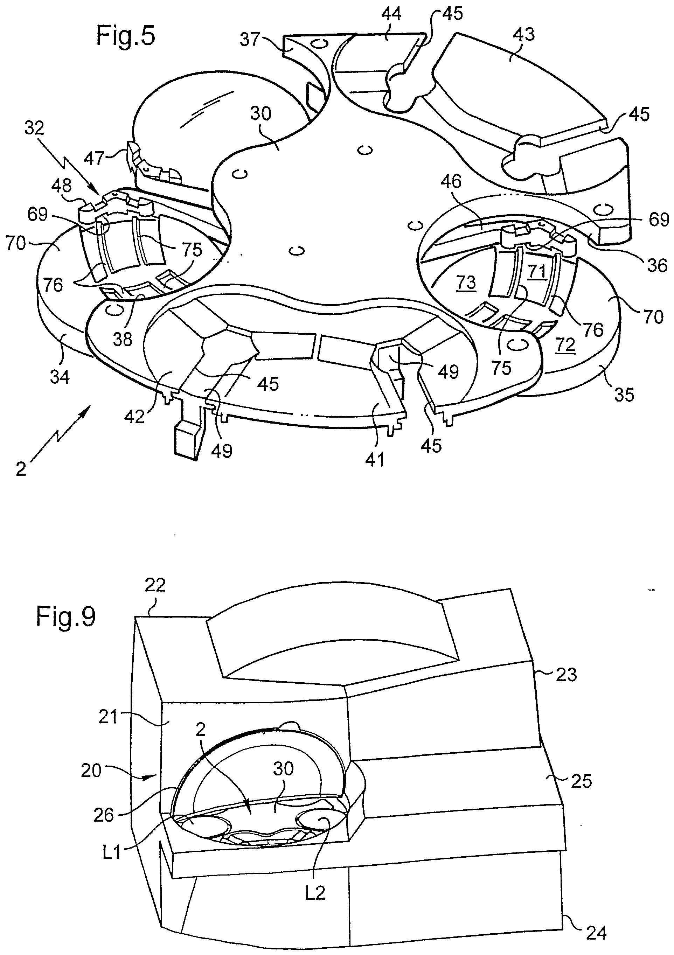

Conformément aux figures et en particulier à la figure 5 qui donne en elle-même une description détaillée du plateau 30, les quatre places de déchargement 41 à 44 sont constituées par des creux ou cuvettes ménagés à la surface du plateau 30. Ces creux ou dépressions sont de forme circulaire de diamètre toujours supérieur à celui des lentilles L1 et L2 après détourage.

Des lumières 45 sensiblement radiales sont ménagées depuis le centre de chaque creux de déchargement 41 à 44 jusqu'au bord périphérique du plateau 30 sur lequel ces lumières débouchent. Ces lumières sont destinées à permettre le dépôt des lentilles, après détourage, par les moyens de troisième et quatrième transfert, comme nous le verrons ultérieurement.

Chaque lumière 45 est agencée pour former une glissière d'accueil d'une languette associée 49 qui est montée dans la lumière 45 à laquelle elle est associée pour coulisser entre une position extérieure de recouvrement de la lumière 45 concernée, comme illustrée par la position de languette 49 associée à l'empreinte de déchargement 42 sur la figure 5, et une position intérieure d'effacement dans laquelle elle se rétracte vers le centre du plateau 30 sous ce plateau 30, comme illustré par la position de la languette 49 associée à l'empreinte de déchargement 41 sur la figure 5. Chaque languette 49 est reliée à un ressort de rappel situé sous le plateau 30 (non visible sur les figures) qui tend à la ramener en position extérieure de recouvrement de la lumière 45.

En variante, on pourra également prévoir que les languettes de recouvrement 49 soient montées sur le plateau du carrousel pour pivoter entre une position escamotée et une position de recouvrement de chaque lumière correspondante. Le pivotement de chaque languette peut alors avantageusement être commandé par le même mécanisme d'actionnement que les pinces.

Alternativement, on pourra encore prévoir que les creux ou cuvettes 41 à 44 soient entièrement fermés sans présenter aucun jour de manière à être étanche à l'eau.

Quoi qu'il en soit, que les creux ou cuvettes 41 à 44 présentent une languette de fermeture ou soient fermées, on observe qu'ils sont agencés de manière à recueillir les gouttes de lubrifiant provenant de chaque lentille après son détourage. On évite ainsi de mouiller les parties constitutives, éventuellement sujettes à corrosion ou électroniques ou nécessitant une grande propreté comme cela est en particulier le cas du dispositif de mesure optique 5.

De manière préférée, une première place de chargement 36 est diamétralement opposée aux deux autres places de chargement 37, 38 elles-mêmes situées de manière adjacente. Les quatre places de déchargement 41 à 44 sont regroupées par paires. Ainsi, une première paire de places de déchargement 41, 42 est intercalée entre les deux places de chargement 36, 37 tandis que les deux autres places de déchargement 43, 44 sont situées entre les places de chargement 36 et 38.

On obtient ainsi un plateau de chargement et déchargement 30 très compact permettant de maximaliser le nombre de paires de lentilles pouvant être traitées, avec un faible encombrement. Les places de chargement et les places de déchargement sont régulièrement réparties à la périphérie du plateau et sont toutes sensiblement de même surface.

Les moyens d'immobilisation 32 des lentilles comprennent des pinces 46 à 48 qui sont chacune situées à l'aplomb des places de chargement 36 à 38. Ces pinces comprennent chacune deux branches 50 et 51 dont les pieds 53 sont montés articulés sur un moyeu 54 et dont les extrémités libres 55 sont munies de doigts articulés 56 en forme générale de V.

Le moyeu 54 est solidaire en rotation du plateau de chargement et déchargement 30 de sorte que les pinces 46 à 48 sont entraînées en rotation simultanément au plateau. Chacune des pinces reste ainsi en regard de chacune des places de chargement 36 à 38 respectivement.

Les pinces 46 à 48 sont rappelées en position de fermeture par un élément élastique tel qu'un ressort de rappel 57 placé entre les pieds 53 des deux branches 50, 51 de chaque pince.

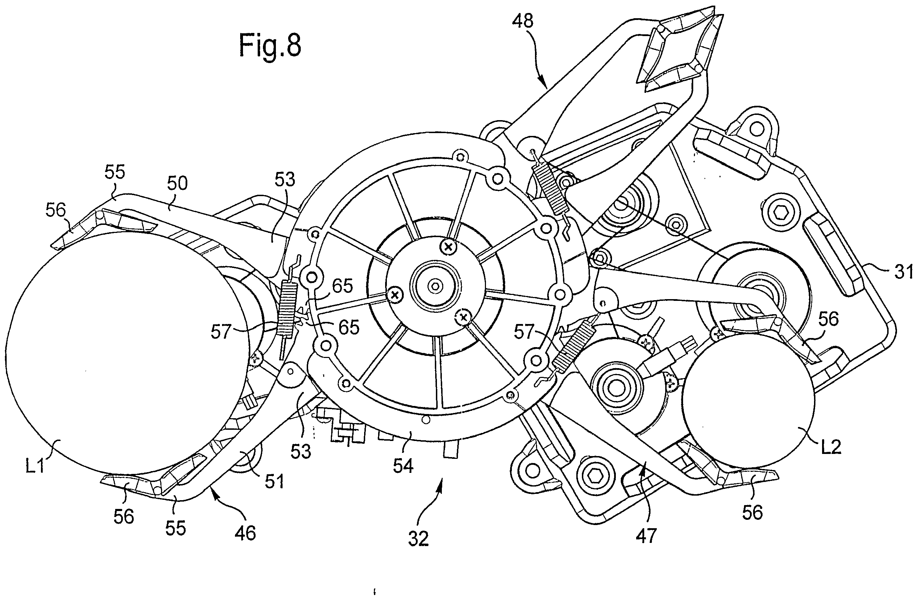

Par ailleurs, les trois pinces 46 à 48 sont entraînées en position d'ouverture, dans laquelle elles peuvent saisir une lentille, par un mécanisme d'entraînement 58 particulier. Comme cela est plus particulièrement visible aux figures 7 et 8, ce mécanisme d'entraînement 58 consiste en un système de roues dentées et courroies permettant de commander la rotation de trois têtes 60 chacune située au voisinage d'un pied respectif 53 des pinces. Ces têtes sont destinées à coopérer chacune alternativement, à la façon d'une tête de tournevis, avec des fourches complémentaires d'actionnement 61 chacune portée par les pinces 46 à 48.

Ce mécanisme d'entraînement 58 est monté fixe sur le bâti 31 et ne tourne donc pas avec le plateau 30 et le moyeu 54. Il comprend trois jeux constitués chacun d'une poulie moteur 62, d'une roue dentée 63 et d'une courroie 64 tendue entre cette poulie et cette roue. La roue dentée 63 porte le doigt 60 lui-même situé sur le trajet circulaire de la fourche 61 avec laquelle il coopère.

Ainsi, lorsque le plateau de chargement et de déchargement 30 et les pinces 46 à 48 sont amenés dans une position repérée, encore appelée position de chargement/déchargement, les fourches 61 sont amenées en coopération avec les têtes 60, chacune des têtes 60 pénétrant tour à tour dans la fourche 61 correspondante. Les poulies moteur 62 sont alors commandées en rotation pour provoquer l'entraînement en rotation des roues dentées 63 et donc des fourches 61 en prise avec les têtes 60, permettant l'ouverture des pinces 46 à 48 par écartement des branches 50, 51 à l'encontre des ressorts 53.

Par souci de simplification du mécanisme, les pieds 53 des branches 50, 51 de chacune des pinces 46 à 48 coopèrent mutuellement par engrenage. A cet effet, comme cela est visible à la figure 8, les pieds 53 possèdent chacun un arc denté 65 tourné en direction du pied 53 voisin. Ainsi, il suffit que la fourche 61 soit portée par l'une 50 des deux branches 50, 51 d'une pince pour les deux branches soient déplacées et provoquer l'ouverture de la pince.

On comprend donc que, chacune des pinces 46 à 48 étant rappelée en position de fermeture par son ressort 57, la fourche d'actionnement 61 permettant de commander l'ouverture de la pince et agencé pour venir en prise, dans une position déterminée du carrousel 2, et seulement dans cette position, avec la tête d'actionnement complémentaire correspondante 60 du mécanisme d'entraînement. On observera que ce mécanisme d'entraînement 60 à 65 n'est pas embarqué sur le carrousel 2 mais est au contraire fixe, associé au bâti du dispositif. Il en résulte que seules les pinces embarquées 46 à 48 tournent avec le carrousel, de sorte qu'on évite toute connectique électrique mobile. En outre, le carrousel, ainsi allégé, présente une inertie moindre facilitant sa commande précise en rotation.

Par ailleurs, les doigts 56 des pinces 46 à 48 présentent chacune une face intérieure 56.1 servant à la saisie de lentille, qui est de forme courbe s'étendant dans un plan sensiblement vertical. La hauteur de cette face de saisie des doigts est suffisante par rapport à l'épaisseur des lentilles de manière à saisir fermement lesdites lentilles par leur tranche. Par exemple, on peut prévoir une hauteur de 10 à 20 mm convenant pour toutes les prescriptions. Le flanc inférieur 68 des doigts 56 est pourvu d'un crénelage 69. De plus, comme cela est visible sur la figure 6A, les merlons 68.1 de ce crénelage du flanc inférieur 68 de chaque doigt 56 forme une saillie intérieure horizontale agencée pour former une dent racleuse 68.1 en forme de rampe inclinée servant à cueillir la lentille lorsque les pinces se resserrent sur elles.

Comme le montrent plus particulièrement les figures 4 et 6, les sièges 34, 35 possèdent chacun une face supérieure 70 tournée en direction du plateau de chargement et déchargement 30. Lors de leur chargement sur le plateau 30, les lentilles à détourer sont destinées à reposer sur la face supérieure 70 de chacun des deux sièges 34, 35. Avantageusement, en renfoncement de la face supérieure 70 de chaque siège, est ménagée une rainure centrale 71 agencée de telle sorte que la face supérieure 70 se divise en deux zones d'appui, l'une extérieure 72 et l'autre intérieure 73, pour les lentilles, de part et d'autre de la rainure centrale 71. Cette rainure centrale est de forme courbe dont le centre de courbure correspond sensiblement au centre de rotation du moyeu 54 portant les pinces 46 à 48 et le plateau 30. La profondeur de la rainure centrale 71 est adaptée pour qu'au moins une portion du crénelage 69 se déplace à l'intérieur de cette rainure lors de la fermeture et de la rotation des pinces. De manière avantageuse, la profondeur de la rainure 71 est sensiblement égale au tiers de la hauteur des doigts 56 des pinces 46 à 48. Ainsi, lors de leur fermeture, les pinces 46 à 48 viennent en prise avec la tranche de la lentille sur toute son épaisseur et les flasques des doigts 56 débordent même vers le bas, c'est-à-dire vers le fond de la rainure 71. Cette disposition permet d'assurer une prise sûre et ferme de la lentille, même lorsque celle-ci présente une épaisseur faible.

Afin de mieux assurer l'assise stable et horizontale de la lentille, notamment lorsque celle-ci est de petite taille comme la lentille de droite sur la figure 6, deux bourrelets 75, 76 sont ménagés dans le fond de la rainure centrale 71. Les bourrelets 75,76 possèdent chacun une arrête de sommet située dans le plan de la face supérieure 70 et servent ainsi d'appui plan à la lentille en complément des zones d'appui 72,73. Ces bourrelets sont mutuellement espacés et sont en forme d'arc de cercle de manière à coopérer avec les reliefs en creux du crénelage 69 de la face inférieure 68 des doigts 56 lors de la fermeture des pinces 46 à 48. En variante, ces bourrelets peuvent en outre avoir une deuxième fonction : le guidage du mouvement des doigts 56 lors de la fermeture et de l'ouverture des pinces 46 à 48.

En outre, les sièges 34, 35 sont montés sur le bâti 31 de manière à être mobiles verticalement, à la façon d'un ascenseur, entre une position haute dans laquelle la face supérieure 70 des sièges est au voisinage des doigts 56 des pinces 46 à 48, et une position basse, dans laquelle la face supérieure de ces sièges est écartée desdits doigts 56. Ainsi, les sièges 34 et 35 sont en position haute lorsque des lentilles sont chargées sur le plateau 30 pour être immobilisées par les pinces, et sont en position basse lorsque les lentilles ont été saisies par les pinces pour être emmenées vers le poste suivant, à savoir le dispositif de mesure 5. En position basse, les sièges 34 et 35 s'effacent pour laisser libre le mouvement des pinces et des lentilles.

De manière préférée, le dispositif de mesure 5 et les moyens de palpage, de préhension et de troisième transfert 7 sont situés côte à côte et de manière diamétralement opposée à la porte d'accès 26. Le dispositif de mesure 5 est au moins en partie situé à l'aplomb du chemin parcouru par les places de chargement 36 à 38 et déchargement 41 à 44 de sorte que les lentilles L1, L2 restent portées par le plateau de chargement et déchargement 30 lors de la détermination de leurs caractéristiques.

En outre, le dispositif de détourage 6 est placé de manière adjacente au plateau de chargement et déchargement 30, et les moyens de palpage, de préhension et de second transfert 7 sont interposés entre le dispositif de mesure 5 et ce dispositif de détourage 6.

Moyens combinés de palpage, de préhension et de troisième transfert

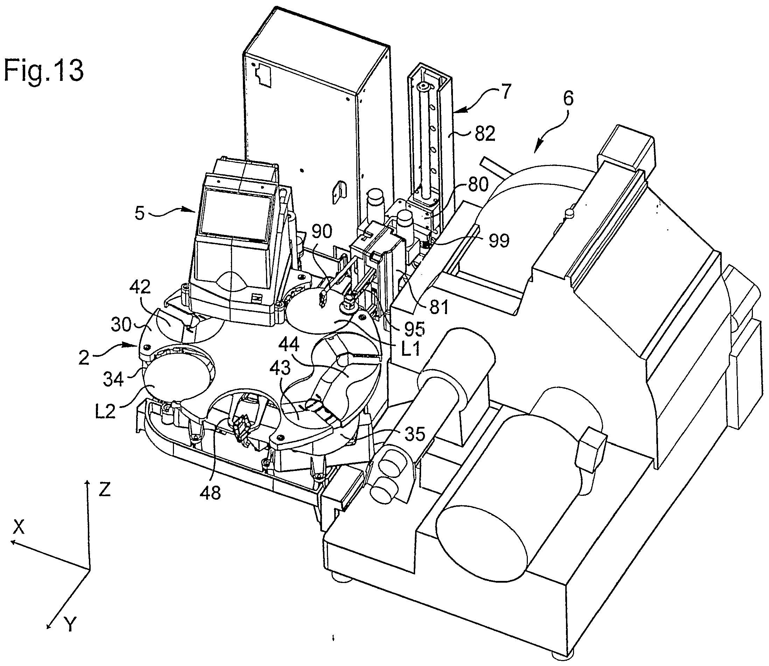

Après la détermination de certaines caractéristiques de la lentille L1 au moyen du dispositif de mesure 5 selon notamment la méthode exposée au début de la présente description, le plateau de chargement et déchargement 30 est à nouveau entraîné en rotation pour amener, dans un second transfert, la lentille L1 en regard des moyens de palpage, de préhension et de troisième transfert 7 (figure 13). La lentille L1 est alors en position dite intermédiaire.

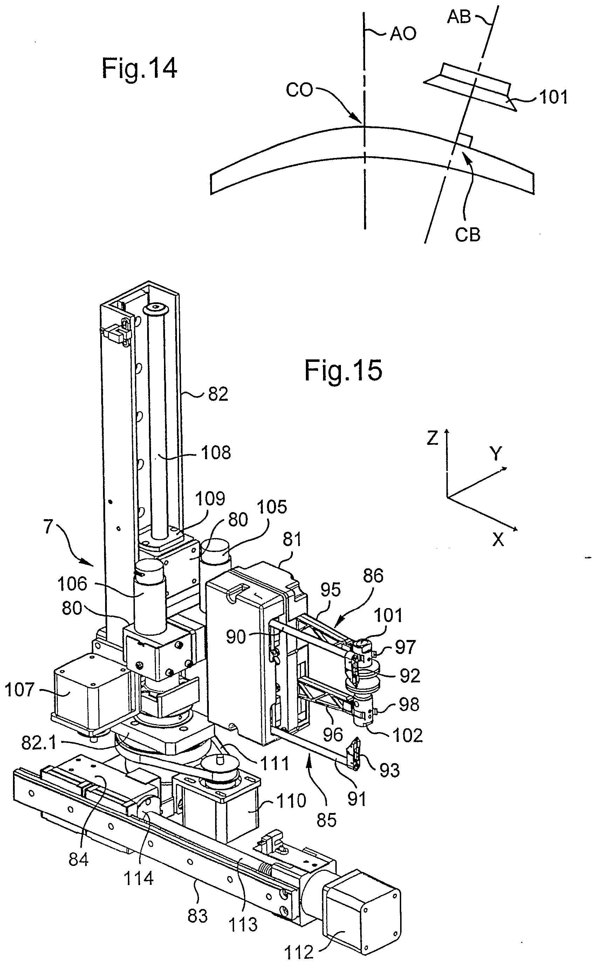

Il est en effet nécessaire, afin de repérer correctement la lentille L1, de compléter la mesure précédente par un palpage de la lentille. Il est notamment intéressant de connaître la hauteur « e » de la lentille par rapport au dispositif de mesure 5 ainsi qu'un axe appelé ci-après axe boxing, noté AB et défini ci-après en regard de la figure 14.

On rappelle que le centre optique CO d'une lentille est le point où il n'y a pas de prisme déformant l'image. L'axe optique AO est l'axe perpendiculaire au plan de la lentille passant par le centre optique CO. La hauteur « e » est calculée en palpant la lentille à l'emplacement du centre optique CO.

On définit par ailleurs un point de préhension et de blocage de la lentille sur lequel le blocage sera réalisé. Ce point est choisi comme étant confondu avec un point appelé centre boxing CB, bien connu de l'homme du métier, qui est le point d'intersection des diagonales du rectangle horizontal dans lequel est inscrite la forme du contour souhaité de la lentille après détourage dans la configuration du porté (définissant l'horizontalité). Ce centre boxing est déterminé par le dispositif de mesure 5 en fonction des caractéristiques de repérage mesurées de la lentille et des paramètres de morphologie du porteur et de géométrie de la monture choisie. Pour une des deux faces principales de la lentille, en l'espèce la face avant convexe, on définit un axe d'accostage et de blocage, appelé axe boxing AB comme étant l'axe sensiblement normal à la surface de la face concernée de cette lentille et passant par le centre boxing CB.

Les moyens de palpage, de préhension et de troisième transfert 7 sont conçus et agencés pour réaliser l'accostage d'un nez de blocage contre l'une des deux faces principales de ladite lentille (en l'espèce la face avant convexe) dans un mouvement relatif de translation du premier nez par rapport à la lentille suivant l'axe boxing associé à cette face. Ce nez de blocage est appliqué sur la face avant convexe en étant amené en translation suivant la direction d'accostage AB, avec un maintien rigide dans cette translation, sans mobilité angulaire.

Comme cela est plus particulièrement visible à la figure 15, les moyens de palpage, de préhension et de troisième transfert 7 prennent la forme d'un organe ou bras assurant d'une part le palpage des lentilles L1 et L2 et d'autre part la manipulation de ces lentilles en vue de leur transfert (troisième transfert) vers le dispositif de détourage 6.

A cet effet, le bras de palpage, de préhension et de troisième transfert 7 possède un poignet 81 mobile par rapport au châssis commun selon cinq axes commandés, avec, dans la configuration illustrée par la figure 15, une translation horizontale suivant l'axe X, une translation verticale suivant l'axe Z trois rotations autour des axes X, Y, Z.

La commande de ces axes de mobilité est réalisée en l'espèce par des moyens électriques motorisés. Mais l'homme du métier pourra prévoir al mise en oeuvre d'autres moyens de commande tels que des moyens pneumatiques ou autres. Quelle qu'en soit la nature, la commande de ces cinq axes de mobilité est pilotée par le système électronique et informatique 100.

En pratique, comme le montre plus en détail la figure 15, le poignet 81 est monté articulé sur un moignon porteur 80 de façon à pouvoir pivoter par rapport à celui-ci selon les axes X et Y. Le moignon 80 est lui-même monté mobile en translation verticale selon l'axe Z sur une poutre verticale 82 formant à cet effet glissière. Cette poutre verticale 82 est portée à son extrémité inférieure par une tourelle 82.1 qui est montée rotative selon l'axe Z sur un chariot 84. Ce chariot 84 est monté sur une poutre horizontale 83, associée au châssis commun et formant glissière, pour coulisser suivant l'axe X. La poutre 83 est par exemple solidaire du bâti 31.

Ces cinq degrés de liberté du poignet 81 dans le référentiel fixe (X, Y, Z)sont commandés par différents moteurs électrique pilotés, via une carte électronique de puissance appropriée, par le système électronique et informatique 100. C'est ainsi que les rotations du poignet 81 par rapport au moignon 80 autour des axes X et Y sont commandées respectivement par des moteurs 105, 106. Le coulissement vertical du moignon 80 est commandé par un moteur 107 associé à la poutre 82 et entraînant une vis 108 engagée dans un écrou 109 solidaire du moignon 80. La rotation de la tourelle 82.1 portant la poutre verticale 82 autour de l'axe vertical Z est commandée, via une courroie 111, par un moteur 110 dont le corps est solidaire du chariot 84. Enfin, le coulissement horizontal du chariot 84 est commandé par un moteur 112 associé à la poutre horizontale 83 et entraînant une vis 113 engagée dans un écrou 114 solidaire du chariot 84.

Pour permettre les fonctions distinctes de palpage d'une part et de préhension d'autre part, le poignet 81 du bras 7 est pourvu de moyens de palpage 85 et de moyens de préhension 86 qui sont distincts et indépendants les uns des autres.

Les moyens de palpage 85 sont agencés pour palper indépendamment ou conjointement les deux faces principales (avant ou convexe 8 et arrière ou concave 9) des lentilles L1, L2. A cet effet, ces moyens de palpage 85 comprennent deux branches 90 et 91 qui sont sensiblement rectilignes et qui se terminent chacune par une extrémité libre coudée formant un bec de palpage 92, 93. Les deux becs 92, 93 des deux branches 90, 91 pointent l'un vers l'autre de manière à être amenés en contact des faces avant 8 et arrière 9 respectivement. Sur chacun des deux becs 92 et 93 sont montés des palpeurs mécaniques connus en eux-mêmes, opérant par simple contact mécanique.

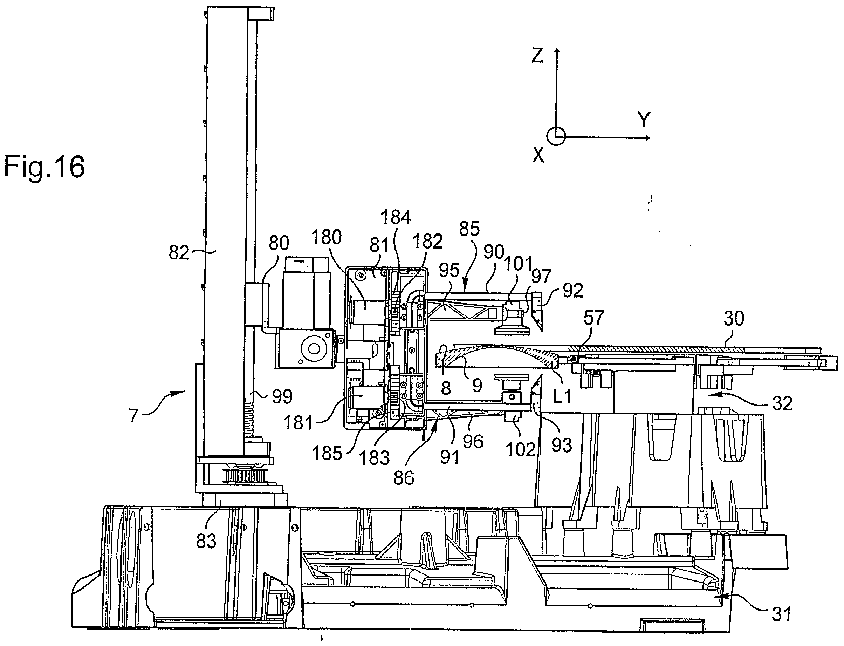

L'une et/ou l'autre des deux branches 90 et 91, en l'espèce les deux branches 90 et 91 (voir figure 16 à 18) sont mobiles en translation sur le poignet 81. Cette translation permet d'écarter ou de rapprocher les deux becs 92, 93. Les translations des branches 90, 91 sont respectivement commandées indépendamment l'une de l'autre par des moteurs électriques encodeurs 180, 181 intégrés dans le boîtier du poignet 81 et pilotés par le système électronique et informatique 100. L'entraînement en translation et le suivi permanent de la position des branches 90, 91 par les moteurs électriques 180, 181 sont réalisés par l'intermédiaire d'un mécanisme à pignon 182, 183 et crémaillère 184, 185, chaque pignon 182, 183 étant entraîné par le moteur correspondant 180, 181 et la crémaillère associée 184, 185 étant solidaire des branches 90, 91.

Les moyens de préhension 86 prennent la forme d'une pince de blocage qui est constituée d'une mâchoire supérieure 95 et d'une mâchoire inférieure 96 mobile en translation ou pivotement en regard l'une de l'autre. Dans l'exemple illustré, la mâchoire inférieure 96 est montée mobile sur le poignet 81 pour coulisser sur un rail 87 suivant la même direction de translation que la branche de palpage 90 et est par exemple entraînée en translation par l'intermédiaire d'un mécanisme à vis-écrou 99 entraîné par un moteur encodeur intégré au boîtier du poignet 81. La mâchoire supérieure 95 est quant à elle montée fixe sur le poignet 81.

Les mâchoires 95, 96 sont de forme sensiblement rectilignes, globalement parallèles aux branches de palpage 90, 91, et sont pourvues à leur extrémité libre de moyens de fixation amovible par clip (moyens de clipsage) 97, 98 qui présentent ici la forme d'une bague élastique ouverte en forme de C formant un clip. Ces moyens de clipsage sont destinés à accueillir des nez 101, 102 de préhension et de blocage de la lentille.

La paire de nez 101, 102 ainsi montés à l'extrémité des mâchoires de préhension 95, 96 permet de réaliser la préhension et, plus tard sur les moyens de détourage, le blocage en sandwich d'une lentille. De manière générale, chaque nez possède d'une part des moyens de fixation axiale et d'autre part des moyens de fixation transversale. Les deux nez sont transférés, au moyen du bras de palpage, de préhension et de second transfert 7, avec la lentille qu'ils portent ou bloquent, depuis le carrousel d'accueil et de premier transfert 2 au dispositif de détourage 6. Il s'agit du troisième transfert de la lentille concernée, comme cela est mieux expliqué plus loin dans le cadre de la description du procédé de préparation.

On attire toutefois dès à présent l'attention sur une caractéristique importante de double interopérabilité de chaque nez : les moyens de fixation transversale sont agencés pour coopérer avec le bras 7 et les moyens de fixation axiale sont agencés pour coopérer avec les arbres 612, 613 de serrage et d'entraînement en rotation de la meuleuse. Les nez 101, 102 exercent ainsi une double fonction. Lorsqu'ils sont associés au bras 7, ils constituent des embouts de pince pour la préhension et le transfert de la lentille. Lorsqu'ils coopèrent avec les arbres 612, 613 de la meuleuse, il constituent des butées de blocage et d'entraînement en rotation de la lentille. On comprend l'avantage majeur de ce troisième transfert de la lentille opéré avec les nez en prise avec la lentille : on évite toute perte de référentiel.

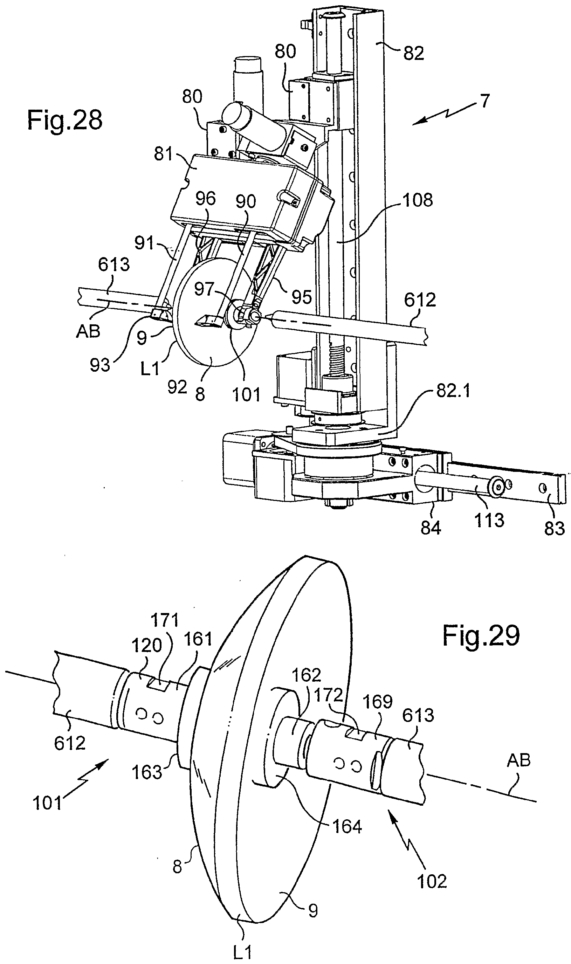

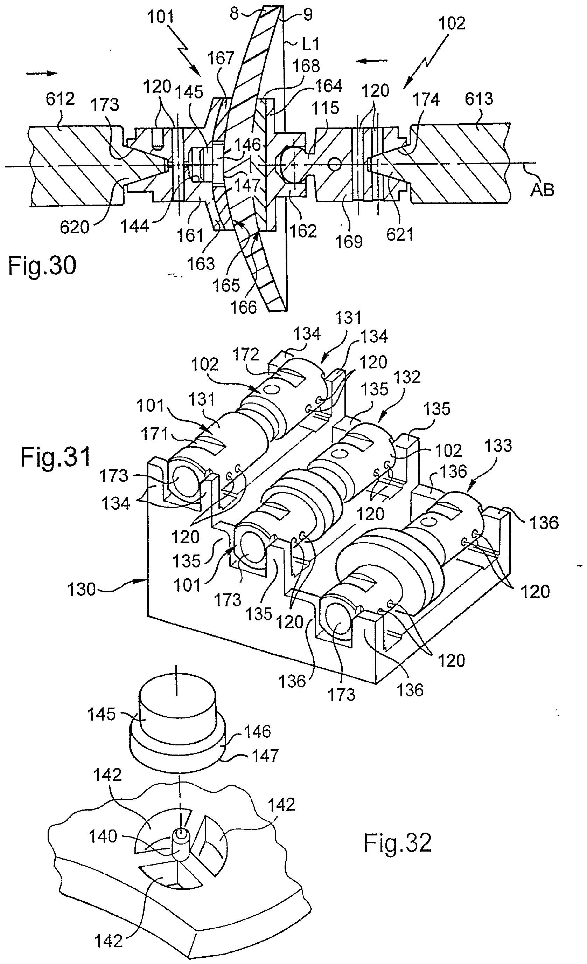

Comme représenté en particulier aux figures 28 à 31, chaque nez de préhension et de blocage 101, 102 présente une forme générale de champignon de révolution autour d'un axe qui, en service est commun aux deux nez 101, 102. Plus précisément, chaque nez comprend, respectivement, un pion central 161, 162, non déformable, prolongé extérieurement par une collerette 163, 164 élastiquement déformable. Chaque collerette est conformée pour présenter une surface d'application 165, 166 apte à entrer en contact avec la lentille L1 et à épouser la forme de cette dernière sous l'effet d'un effort de serrage axial. Un tel effort de serrage axial est appliqué conjointement aux deux nez, en opposition, soit par les mâchoires 95, 96 de l'organe de troisième transfert 7, comme illustré notamment par la figure 28, soit par les arbres 613, 612 des moyens de détourage au moment de leur rapprochement pour le blocage final de la lentille sur lesdits arbres comme illustré par les figures 29 et 30. Dans l'exemple, la surface d'application 165, 166 appartient pour sa partie périphérique à ladite collerette et pour sa partie la plus centrale au pion lui-même.

De plus, dans l'exemple illustré, la surface d'application 165, 166 de chaque nez est recouverte d'une garniture mince 167, 168 en matière plastique ou matériau élastomère. L'épaisseur de cette garniture est de l'ordre de 1 à 2 mm. Il s'agit par exemple d'un P.V.C. souple ou d'un néoprène.

Comme on peut le voir sur la figure 30, les surfaces d'application 165, 166 des deux nez 101, 102 n'ont pas exactement la même forme. Le nez 101, qui est destiné à coopérer avec la face avant de la lentille ophtalmique, a une surface d'application 165 concave à l'état non contraint. Le nez 102, qui est destiné à coopérer avec la face arrière de la lentille ophtalmique, a une surface d'application 166 sensiblement plane à l'état non contraint.

Nous verrons en détail dans la suite que les nez 101, 102 sont transférés sur les moyens de détourage avec la lentille qu'ils saisissent et réalisent alors sans autre repositionnement de la lentille son blocage sur les moyens de détourage.

Lorsque l'on anticipe une difficulté de détourage de la lentille, en raison de son matériau de revêtement de la lentille ou de la forme spéciale de détourage envisagée, le blocage dé la lentille ophtalmique en vue de son détourage peut faire intervenir, en combinaison ou complément du nez de blocage 101, un gland de référence 145. Un tel gland 145 est visible sur la figure 32 et possède une surface d'application adhésive 147 pour sa fixation temporaire sur la lentille.

Au contraire, la surface d'application 165 du nez 101 ne possède aucune propriété adhésive, mais une aptitude à coopérer par friction avec la lentille pour son immobilisation.

Pour la coopération du gland de référence 145 avec le nez de blocage 101, la partie centrale du pion 161 du nez 101 est évidée et présente alors un logement axial étagé 144 débouchant sur la surface d'application et agencé pour accueillir le gland de référence adhésif 145, comme cela sera mieux expliqué ultérieurement. Le logement 144 débouche au centre de la surface d'application 165 du nez de blocage 101.

Le gland de référence 145 est sensiblement plus petit que le nez de blocage 101, de manière à convenir à toutes les formes et tailles de lentille. C'est ainsi que la surface d'application 165 du nez de blocage 101 possède une aire au moins quatre fois supérieure à celle de la surface d'application 147 du gland de référence 145. Des essais ont permis d'optimiser les dimensions des surfaces d'application du gland et du nez. : la surface d'application 165 du nez de blocage 101 possède de préférence une aire comprise entre 80 à 500 mm$^2$ et la surface d'application 147 du gland de référence possède une surface d'application comprise entre 20 à 80 mm$^2$. Le nez de blocage possède un diamètre extérieur compris entre 10 et 25 mm et un diamètre intérieur compris entre 5 et 10 mm et le gland de référence 145 possède un diamètre adapté au diamètre intérieur du nez, i.e. compris entre 5 et 10 mm.

Pour l'indexation en rotation du nez 101 sur le gland de référence adhésif 145, le logement étagé 144 possède une section transversale dont la forme n'est pas de révolution autour de l'axe commun AB. Dans l'exemple illustré, la section du logement 144 est de forme ovale.

Le gland adhésif de centrage 145, mieux visible à la figure 32, possède une forme extérieure étagée complémentaire du logement 144, pour être reçu dans ce logement sans jeu, avec un léger serrage. La forme commune du logement 144 et du gland 145 n'étant pas de révolution, comme exposé précédemment, on obtient alors une indexation en rotation du gland 145 par rapport au nez 101.

Le logement 144 est en outre agencé pour accueillir le gland de référence 145 de telle sorte que la surface d'application 147 du gland de référence 145 affleure la surface d'application 165 du nez de blocage 101. En l'espèce, le gland adhésif de référence 145 possède un épaulement d'extrémité 146 qui limite sa course axiale dans le logement 144 et qui porte une face adhésive 147 destinée coller contre la lentille et qui affleure à cet effet la face d'application 165 du nez 101 lorsque l'épaulement 146 est en butée axiale contre l'épaulement correspondant du logement étagé 144.

Comme nous le verrons dans la suite de l'exposé du procédé de mise oeuvre, le gland adhésif de référence 145 peut ainsi être placé dans le logement 144 du nez 101 pour être implanté, de façon optionnelle, avec le nez 101 et en complément de ce dernier sur la lentille à centrer et bloquer en vue de son détourage. Ainsi implanté sur la lentille, le gland de centrage 145 matérialise le référentiel de centrage déterminé par les moyens de mesure 5, indépendamment de toute liaison directe de la lentille avec les moyens de transfert 2 et 7 du dispositif.

En procédant de cette manière, on matérialise donc le référentiel de centrage de la lentille par le gland collé 145 qui reste implanté à demeure sur la lentille même lorsque cette dernière a été déchargée du dispositif pour être montée sur la monture. Il est ainsi possible d'effectuer une ou plusieurs reprise de la lentille, pour les montages les plus délicats, sans perdre le référentiel de centrage de la lentille, comme cela est habituellement le cas avec les accessoires de blocage adhésifs.

Mais, conformément à l'invention, cette fonction de référence de centrage est dissociée de la fonction de blocage proprement dite servant à la transmission de couple pour l'immobilisation en rotation de la lentille sur les arbres 612, 613 de la meuleuse. La fonction de transmission de couple est dans tous les cas assurée par les nez 101, 102 dont la forme, les dimensions et le matériau sont adaptés à la lentille à détourée. Le gland de centrage adhésif 145 peut donc être unique, pour tous les types de lentilles et de montures, avec une taille réduite pour d'une par de pas gêner le détourage de la lentille lorsque le contour de celle-ci doit être ramenée à une taille réduite, et d'autre part déposer la substance adhésive sur une partie aussi petite que possible de la lentille afin de réduire les risques de rayure au nettoyage. Seuls les nez doivent être adaptés au travail à réaliser, comme cela sera d'ailleurs mieux expliqué par la suite.

Les moyens de mesure 5 sont également conçus pour détecter la présence ou l'absence du gland de référence 145 en un emplacement prédéterminé.

Le carrousel de premier et second transferts 2 est pourvu de moyens d'accueil 140 du gland de référence 145. En l'espèce, comme est mieux visible sur la figure 32, le plateau de chargement et déchargement 30 est équipé sur sa face supérieure, à côté de chacune des places de chargement 36 à 38, d'un tenon vertical 140 de réception d'un gland de centrage adhésif 145. Des lumières 142 sont ménagées dans le plateau autour de chaque tenon 140. Ces lumières, en l'espèce au nombre de trois autour de chaque tenon, sont en forme de portions de disque de diamètre inférieur à celui du gland de centrage destiné à être emmanché sur le tenon 140 à la faveur d'un perçage central (non visible aux figures) du gland 145.

Lorsque l'opérateur a chargé un gland de centrage adhésif 145 simultanément au chargement d'un job sur le plateau 30, le dispositif de mesure 5 détecte l'obstruction des lumières 142 par ledit gland et en informe le système de traitement électronique et informatique 100.

Le bras manipulateur 7 est chargé d'implanter conjointement le nez de blocage 101 et le gland de référence 145 sur la lentille. Le système électronique et informatique 100 communique avec lesdits moyens de mesure 5 lorsqu'ils exercent leur fonction de détection de présence et est ainsi informé de la présence ou de l'absence d'un gland de référence 145 sur la plateau 30.

Le système électronique et informatique 100 est programmé pour exécuter les instructions conditionnelles suivantes :

- si la présence du gland de référence 145 est détectée, le bras manipulateur 7 est piloté pour implanter le gland de référence 145 sur la lentille avec le nez de blocage 101 ;
- sinon, le bras manipulateur 7 est piloté par le système 100 pour implanter le nez de blocage 101 seul.

La collerette et le pion de chaque nez 101, 102 sont réalisés d'un seul tenant dans un même matériau. Des résultats satisfaisants ont été obtenus en serrant la lentille entre les nez avec un effort de serrage compris entre 400 et 1000 N et en réalisant le pion et la collerette dans une matière plastique telle que du PVC.

Pour ce qui concerne la garniture mince permettant une transmission de couple sans glissement, on choisira une matière plastique ou un élastomère ayant le coefficient de friction avec le revêtement de surface de la lentille qui soit le plus élevé possible..

Par ailleurs, comme cela est visible en particulier sur la figure 30, le pion 162 du nez 102 qui est destiné à entrer en contact avec la face arrière concave 9 de la lentille L1, est articulé, au moyen d'une liaison cardan 115, à une partie de fixation 169. Cette partie de fixation 169 est destinée à être reliée à la mâchoire inférieure 96 de l'organe 7 ou à l'arbre 613 des moyens de détourage, le pion 162 possédant alors une liberté d'orientation angulaire autour de la rotule 115. Ceci permet au pion 162 du nez 102 d'épouser l'orientation angulaire locale de la face arrière 9 de la lentille pour permettre le serrage de la lentille contre l'autre nez 101, dont le pion 161 est quant à lui rigidement relié à la mâchoire supérieure 95 de l'organe 7 ou à l'arbre 612 des moyens de détourage, sans faire basculer angulairement ou glisser transversalement la lentille. On obtient ainsi une saisie et un blocage stable et précis de la lentille selon l'axe boxing AB. La liaison rotule 115 est de type cardan, c'est-à-dire qu'elle réalise une transmission de couple autour de l'axe du nez 102.

Comme évoqué ci-dessus, les nez 101, 102 exercent une double fonction. Ils servent tout d'abord à réaliser la préhension de la lentille à partir de son emplacement de chargement sur le plateau 30 du carrousel de premier et second transferts 2, lorsque ces derniers présentent la lentille en position intermédiaire. Puis, la lentille étant ainsi saisie, au moyen des nez 101, 102, par le bras de palpage, de préhension et de troisième transfert 7 ce dernier opère le troisième transfert de la lentille vers les moyens de détourage 6. Lorsque la lentille est prise en charge par ces moyens de détourage (passage de relais), les nez conservent un rôle de maintien par serrage de la lentille et exercent alors une seconde fonction, dérivée de la première, qui consiste à réaliser le blocage de la lentille en vue de son usinage en coopération avec les arbres de serrage et d'entraînement en rotation des moyens de détourage 6. Les nez constituent alors des butées d'entraînement faisant partie intégrante des moyens de détourage 6. Ces différentes étapes du procédé de préparation seront exposées plus en détail ultérieurement.

Cette double fonction, de préhension d'une part et de blocage pour détourage d'autre part, se traduit par la présence sur les nez 101, 102 d'une double interface mécanique :

- l'une transversale (c'est-à-dire opérant transversalement à l'axe des nez qui se confond avec l'axe AB de serrage des nez) pour coopérer avec les moyens de fixation amovible par clip (moyens de clipsage) 97, 98 des mâchoires de préhension 95, 96 afin de réaliser une fixation temporaire des nez 101, 102 sur lesdites mâchoires,
- l'autre axiale (c'est-à-dire opérant suivant l'axe des nez qui se confond avec l'axe des arbres 612, 613 des moyens de détourage 6) pour coopérer avec les arbres 612, 613 des moyens de détourage afin de réaliser un serrage axial ferme de la lentille prise en sandwich entre les nez 101, 102 avec une transmission sans glissement du couple de rotation des arbres à la lentille.

C'est ainsi que, dans l'exemple illustré, pour la fixation amovible de chaque nez 101, 102 sur la mâchoire correspondante 95, 96, les bagues de clipsage 97, 98 coopèrent avec des encoches de réception 171, 172 ménagées en correspondance sur les nez 101, 102 de manière transversale à l'axe des nez. Ainsi, lorsque les nez sont rapportés sur les mâchoires 95, 96, leur axe est parallèle à la direction de translation des mâchoires, qui correspond à la direction de serrage. Les deux nez sont ainsi tournés l'un vers l'autre, avec leurs surfaces d'application 165, 166 en regard l'une de l'autre, lorsqu'ils sont rapportés clipsés sur les extrémités des mâchoires de préhension 95, 96. Les deux nez 101 et 102 peuvent alors être rapprochés l'un de l'autre ou mutuellement écartés afin de saisir ou de relâcher une lentille.

Pour son interfaçage mécanique avec les arbres 612, 613 des moyens de détourage 6, chacun des nez 101, 102 coopère avec l'extrémité libre de l'arbre 612, 613 correspondant par un système d'emboîtement à parties mâle et femelle complémentaires réalisant, par coopération de forme, un entraînement en rotation sans jeu. Plus précisément, dans l'exemple illustré, chaque nez 101, 102 est pourvu d'un logement 173, 174 qui n'est pas de révolution autour de l'axe du nez, mais qui présente au contraire, par exemple, une forme conique à base ovoïdale. Ce logement est destiné à recevoir sans jeu un embout 620, 621 de forme complémentaire, ménagé à l'extrémité libre des arbres 612, 613 des moyens de détourage, de manière à permettre une transmission de couple des arbres 612, 613 aux nez 101, 102 et, partant, à la lentille enserrée. Dans l'exemple illustré, le logement 173 du nez 101 est ménagé au dos du pion 161 à l'opposé de la surface d'application 165, tandis que le logement 174 du nez 102 est ménagé au dos de la partie de fixation 169 à l'opposé de la rotule 115. Chaque nez est ainsi pourvu de moyens de son blocage en rotation sur les arbres 612, 613 des moyens de détourage. Après leur transfert sur les arbres des moyens de détourage, les nez forment alors des butées d'entraînement en rotation des lentilles.

Comme le montre la figure 31, le dispositif de préparation au montage 1 selon la présente invention comprend aussi un magasin de nez 130 placé au voisinage du bras de palpage, de préhension et de transfert 7. Ce magasin loge de manière étagée les trois paires de nez de manière à ce que ces nez soient facilement saisis par le bras 7.

Ce magasin comprend par exemple trois paires 131 à 133 de nez analogues aux nez 101, 102 dont la taille est adaptée à la dimension du job de lentilles à détourer et dont le matériau est adapté au traitement de surface de la lentille et en particulier aux propriétés d'adhérence de celui-ci. Plus précisément, le diamètre de la surface d'application 165, 166 des nez est adapté au diamètre de la monture pour optimiser le couple transmis et par conséquent la vitesse d'usinage.

Un jeu de plusieurs paires de nez est agencé sur le magasin étagé et la paire de nez adaptée est choisie automatiquement. Dans l'exemple illustré, le magasin 130 possède trois étages en escalier. L'étage supérieur accueil la paire de nez 131 destinée à des lentilles à détourée suivant un contour de petit diamètre ; l'étage intermédiaire accueil la paire 132 destinée aux lentilles à détourée suivant un contour de moyen diamètre et l'étage inférieur accueil la paire 133 destinée aux lentilles à détourée suivant un contour de plus grand diamètre.

Les trois étages du magasin 130 sont pourvus de berceaux 134, 135, 136 propres à accueillir, dans un mouvement d'emboîtement vertical, les paires de nez 131, 132, 133 correspondantes. Les deux nez d'une paire reposent alors dans le berceau de l'étage concerné suivant un axe commun, aboutés avec leurs surfaces d'application l'une contre l'autre.

Le bras 7 est piloté par le système électronique et informatique pour s'équiper de façon automatique, en fonction des paramètres du job de lentilles à préparer, de la paire de nez la mieux adaptée. L'enlèvement de la paire de nez appropriée par le bras 7 sur le magasin 130 s'effectue de la façon suivante. Les mâchoires 95, 96 se présentent suivant un plan commun horizontal qui contient également l'axe commun des nez de la paire concernée. Les bagues de clipsage 97, 98 équipant l'extrémité des mâchoires 95, 96 se présentent avec leur ouverture en regard des nez de la paire concernée. Le poignet 81 du bras 7 est alors avancé horizontalement vers les nez 101, 102 de telle manière que les bagues de clipsage 97, 98 viennent prendre prise dans les encoches 171, 172, autour du pion 161 et de la partie de fixation 169 des nez 101, 102. Les nez étant ainsi clipsés sur les mâchoires 95, 96 du bras 7, le poignet 81 du bras 7 est levé verticalement pour que la paire de nez 131, 132, 133 sortent de son berceau d'accueil 134, 135, 136. Lorsque la préparation de la lentille est terminée et que la paire de nez ayant servi à cette préparation ne peut plus être utilisée pour la préparation de la lentille suivante, cette paire de nez est redéposée sur son berceau d'accueil 134, 135, 136 associé du magasin 130 dans un mouvement inverse, avec d'abord un abaissement vertical pour emboîtement des nez dans le berceau, suivi d'un mouvement de retrait horizontal du poignet 81 du bras 7 pour forcer, à l'encontre de l'élasticité propre des bague de clipsage 97, 98, le désengagement du clipsage de ces bagues avec les nez.

Outre le positionnement étagé des différentes paires de nez dans le magasin, un double détrompage mécanique permet d'éviter toute erreur de discrimination entre les paires de nez.

Un premier moyen de détrompage mécanique consiste dans le fait que le berceau porte-nez 134, 135, 136 ménagé à chaque étage du magasin 130 pour chaque paire de nez possède des dimensions longitudinales et transversales propres à la paire de nez qu'il est destiné à accueillir.

Le second moyen de détrompage mécanique se compose d'une part, de trous transversaux d'enfichage 120 ménagés dans le pion 161 et la partie de fixation 169 des nez 101, 102, et d'autre part de doigts ou tenons correspondants, non visibles sur les figures, équipant les mâchoires 95, 96 en faisant saillie transversale à l'intérieur des bagues de clipsage 97, 98, dans le prolongement des mâchoires 95, 96 pour coopérer avec les trous transversaux d'enfichage 120 des nez 101, 102. Lorsque les deux nez d'une même paire sont installés dans le magasin, ils se trouvent aboutés coaxialement et les trous 120 ménagés dans chaque nez sont écartés de ceux de l'autre nez d'un certain écartement propre à la paire de nez considérée, si bien qu'il est nécessaire au système électronique et informatique 100 d'ajuster en conséquence, selon la paire de nez choisie, l'écartement des branches du bras de préhension. En cas d'erreur d'écartement, les doigts de détrompage des mâchoires 95, 96 du bras buteront contre le pion 161 et/ou la partie de fixation 169 des nez 101, 102 et ne pourront pénétrer dans les trous transversaux d'enfichage des nez, interdisant alors le clipsage des bagues 97, 98 autour des nez dans les encoches 171, 172.

En variante, on pourrait prévoir que l'écartement des trous d'enfichage 120 des nez rangés dans leur berceau du magasin soit le même pour chaque nez, de sorte que les mâchoires 95, 96 du bras saisissent les tous des nez avec un entraxe constant, quelle que soit la paire de nez envisagée. Dans ce cas, le détrompage consiste, après que les nez ont été saisis par les mâchoires du bras, à mesurer l'entraxe ou écartement des trous d'enfichage 120 en resserrant les deux mâchoires pour abouter les nez l'un contre l'autre ou pour serrer les nez contre une cale de référence d'épaisseur connue. Cette mesure permet alors de valider si la paire nez saisie est celle souhaitée pour le détourage du job en préparation.

### Système électronique et informatique de pilotage

Le dispositif 1 comprend un système électronique et informatique 100 de pilotage consistant ici en une carte électronique conçue pour piloter en coordination les moyens de mesure, le dispositif de détourage, les moyens d'accueil et de premier et second transferts et les moyens de palpage, de préhension et de troisième transfert pour le traitement automatique d'une lentille, conformément au procédé de traitement automatisé qui sera exposé ultérieurement.

Le système électronique et informatique 100 comprend par exemple de façon classique une carte mère, un microprocesseur, une mémoire vive et une mémoire de masse permanente. La mémoire de masse contient un programme d'exécution du procédé automatisé de préparation au montage selon l'invention qui sera décrit plus loin. Cette mémoire de masse est de préférence réinscriptible et est avantageusement amovible pour permettre son remplacement rapide ou sa programmation sur un ordinateur distant via une interface de norme standard.

### Captage et contrôle d'accès

Comme le montre plus particulièrement la figure 2, le dispositif de préparation au montage 1 selon la présente invention est enfermé dans un capotage 20 qui interdit l'accès intempestif à l'ensemble des parties constitutives de ce dispositif.

Le capotage se présente sous la forme d'un carter qui possède une face avant 21 et une face arrière opposée 22. La face avant 21 est destinée à être placée en regard de l'opérateur et possède une partie supérieure 23 et une partie inférieure 24 sensiblement verticales, ces deux parties 23 et 24 étant séparées par un méplat sensiblement horizontal 25.

Une porte d'accès 26 est montée articulée sur ce méplat 25, entre une position fermée horizontale et une position ouverte verticale telles que respectivement représentées aux figures 2 et 3. Seule cette porte d'accès 26 montée articulée sur le capotage 20 autorise, en position d'ouverture, l'accès aux moyens d'accueil et de premier transfert 2, comme cela sera mieux expliqué ultérieurement.

Le dispositif selon la présente invention permet donc d'automatiser l'ensemble des opérations, évitant toute intervention de l'opérateur, et donc de minimiser les risques.

### FONCTIONNEMENT (PROCEDE DE TRAITEMENT AUTOMATISE)

Le dispositif de préparation au montage qui vient d'être décrit est mis en oeuvre selon un procédé automatisé qui va maintenant être décrit.

Conformément à une caractéristique spécifique de l'invention, il est proposé un traitement des lentilles par job. Le terme "job", couramment utilisé dans le milieu de l'optique ophtalmique, recouvre une paire de lentilles associées L1 et L2, appartenant à une même paire de lunettes et montées par conséquent sur une même monture pour équiper un porteur.

Le dispositif proposé permet en outre de traiter plusieurs jobs (typiquement deux jobs) au moins en partie simultanément, c'est-à-dire en temps masqué.

### Traitement automatisé de préparation au montage d'un job (premier job J1)

De façon générique, le traitement d'un job se décompose suivant les étapes suivantes.

**Etape préliminaire** Saisie ou transmission des données d'entrée du job

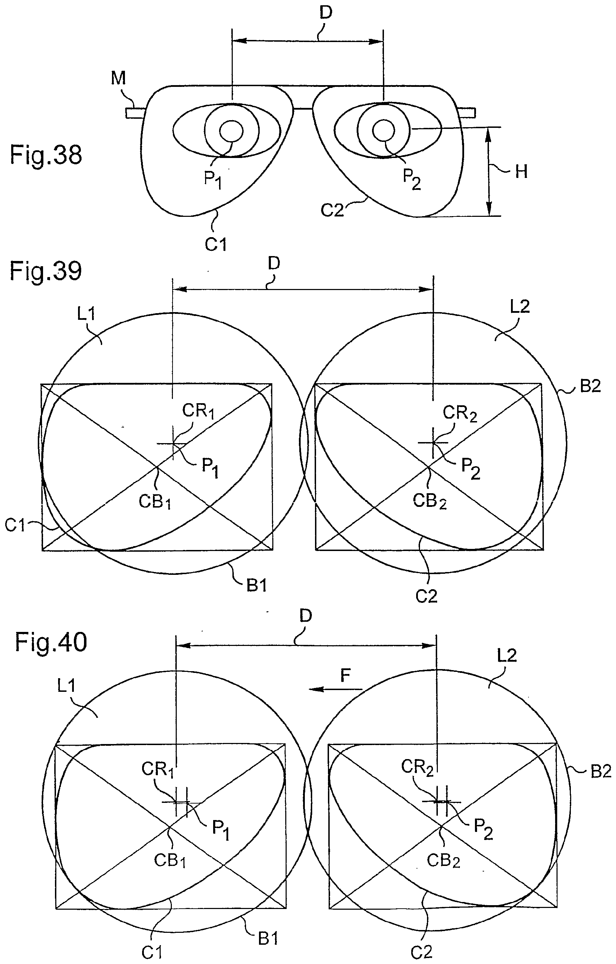

Comme le montre la figure 38, afin de réaliser un montage optique correct, dans une étape préliminaire, on place la monture choisie par le porteur sur son nez et on effectue plusieurs mesures sur celui-ci à l'aide d'un appareil appelé « pupillomètre » ou de tout autre appareil de mesure morphologique ou d'imagerie.

Avec ce pupillomètre, donc, l'opérateur recueille plusieurs données parmi lesquelles :

- l'écart interpupillaire D qui représente la distance séparant les deux pupilles P1, P2,
- les demi-écarts interpupillaires qui représentent les distances séparant chaque pupille P1, P2 et le centre 13 du nez de la monture portée par le porteur.

L'opticien relève ensuite, par exemple manuellement avec une règle ou par imagerie, la hauteur H qui représente la distance, prise à la verticale de chaque pupille P1, P2, séparant la pupille P1, P2 et le bord inférieur des cercles C1, C2 de la monture portée par le porteur. Cette hauteur peut être mesurée, soit à l'aide de lunettes de présentation possédant la monture choisie par le porteur et sur les lentilles desquelles l'emplacement des pupilles du porteur sont marquées au feutre puis mesurées au réglet, soit au moyen d'un système numérique de prise d'image et de traitement de cette image. Cette mesure intègre donc des informations relatives à la géométrie de la monture choisie.

Ces informations relatives à la morphologie du porteur sont ensuite saisies par l'opérateur au moyen d'une interface appropriées (typiquement un clavier et un écran) et mémorisées dans une mémoire du système électronique et informatique 100.

D'autre part, des informations représentatives du contour de la monture choisie sont également adressées au système électronique et informatique 100 qui les place en mémoire. Ces informations peuvent par exemple être sélectionnées par l'opticien puis extraites à partir d'une base de données conservées localement dans la mémoire du système électronique et informatique 100 ou sur un serveur distant accessible via l'Internet ou une liaison point à point sécurisée.

Enfin, l'opticien ou opérateur saisit, dans la mémoire du système électronique et informatique 100, les paramètres de prescription relatifs au porteur auquel est destiné le job en préparation. Il s'agit en particulier des axes de puissance cylindrique et des puissances et axes prismatiques, et éventuellement des puissance cylindrique, sphérique et le cas échéant de l'addition de puissance.

**Etape 1.1** Présentation du plateau de chargement et déchargement 30 en position de chargement

Si nécessaire, le système électronique et informatique 100 pilote la rotation du plateau de chargement et de déchargement 30 pour présenter deux places de chargement 36, 37 libres en regard de la porte d'accès 26.

**Etape 2.1** Ouverture de la porte d'accès 26

Initialement, la porte d'accès 26 est tenue fermée. La règle est en effet que la porte d'accès soit généralement fermée afin de protéger les organes internes de la machine et en particulier le plateau de chargement et de déchargement 30.

L'ouverture de la porte d'accès du dispositif est réalisée à la demande de l'opérateur. A la demande de l'opérateur, l'ouverture de cette porte est autorisée par le système électronique et informatique 100 de façon restrictive lors des étapes de chargement et de déchargement, qui seront exposées ultérieurement.

**Etape 3.1** Chargement des lentilles

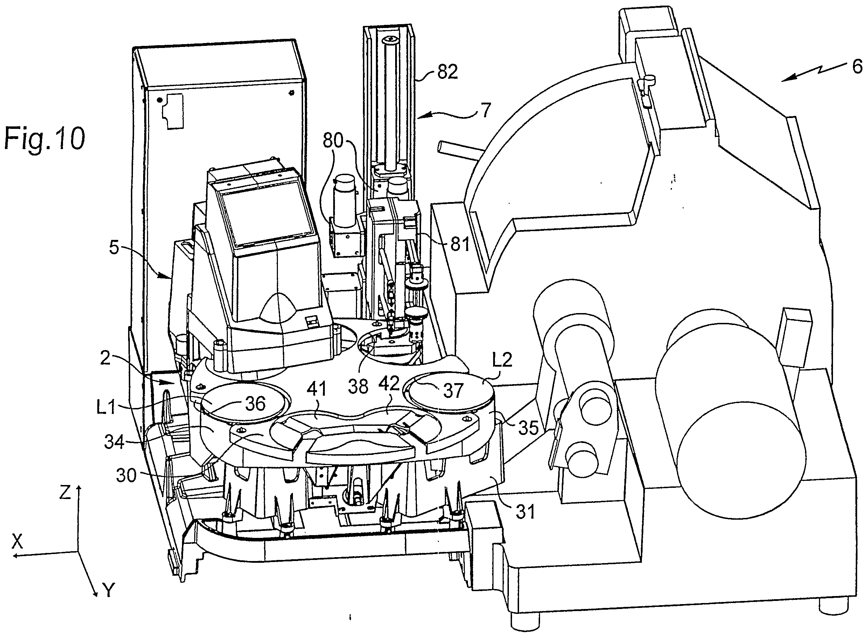

Comme cela est visible aux figures 9 et 10, le plateau de chargement et déchargement 30 est commandé en rotation pour occuper des positions repérées et notamment une position de chargement dans laquelle seules deux places de chargement 36 et 37 et deux places de déchargement 41 et 42 sont accessibles pour l'opérateur après ouverture de la porte d'accès 26. La troisième place de chargement 38 et les deux autres places de déchargement 43, 44 étant masquées par le reste du capotage 20. L'opérateur ne peut donc pas se tromper en chargeant et déchargeant les jobs sur et hors du plateau 30.

Dans cette position repérée de chargement, les pinces 46 et 47 correspondant aux places de chargement 36 et 37 sont ouvertes et les deux sièges 34, 35 sont en position haute. Dans cette position haute, les sièges 34, 35 masquent latéralement les pinces 46, 47 et interdisent ainsi en combinaison avec le capotage 20, d'une part toute manipulation intempestive de ces pinces par l'opérateur, et d'autre part toute intrusion d'objet à l'intérieur du dispositif, qui risquerait d'endommager ses composants internes en mouvement.

Il est ainsi possible de charger un premier job de deux lentilles L1 et L2 sur les zones d'appui 72, 73 respectives des faces supérieures 70 des sièges 34 et 35. En pratique, les deux lentilles L1 et L2 du premier job J1 sont déposées manuellement par l'opérateur sur les deux places 36, 37 de chargement du plateau de chargement et déchargement 30 accessibles au travers de la porte d'accès 26. Il s'agit là de la seule intervention physique de l'opérateur sur les lentilles. Bien entendu, un chargement automatisé des lentilles peut être envisagé.

**Etape 4.1** Descente des sièges et pincement des lentilles

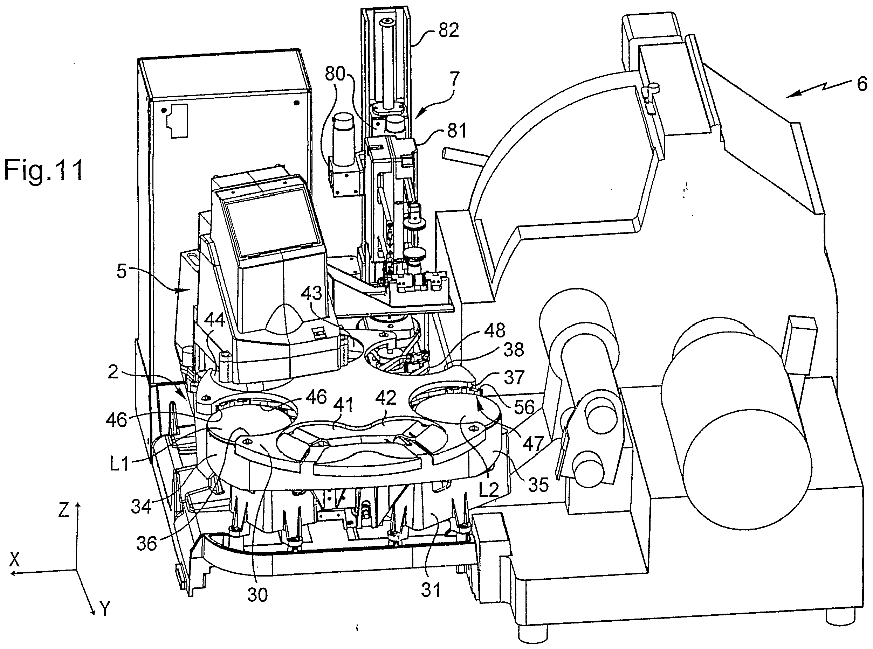

Les deux sièges 34 et 35 sont ensuite commandés pour se déplacer vers leur position basse dans laquelle les lentilles L1 et L2 sont situées au niveau des doigts 56 des pinces respectives 46 et 47 (figure 11). Ces pinces sont alors commandées en position de fermeture pour que les flasques des doigts 56 enserrent les lentilles L1 et L2.

Lors de la fermeture des pinces 46, 47, le crénelage 69 de chaque pince se déplace à l'intérieur de la rainure 71 du siège correspondant 34, 35 lors de la fermeture et de la rotation des pinces, de telle sorte que les pinces 46, 47 saisissent la tranche de la lentille sur toute son épaisseur en débordant de part et d'autre de celle-ci.

Les deux lentilles L1 et L2 du premier job J1 se trouvent ainsi pincées sur toute l'épaisseur de leur tranche par les pinces 46, 47 du plateau de chargement et de déchargement 30. On comprend en particulier que le débordement des pinces de part et d'autre de la tranche de la lentille permet d'assurer une prise sûre et ferme de la lentille, même lorsque celle-ci présente une épaisseur faible.

La troisième pince 48 correspondant à la troisième place de chargement 38 est restée en position fermée (rappelée par les moyens élastiques 57).

**Etape 5.1** Descente des sièges 34, 35 des lentilles

Les lentilles L1 et L2 étant saisies par les pinces, les sièges de lentilles sont rétractés encore davantage vers le bas à la façon d'un ascenseur ou élévateur pour éviter tout frottement lors de l'étape suivante.

**Etape 6.1** Premier transfert de la première lentille : rotation du plateau de chargement et de déchargement 30 pour passage de la première lentille L1 du job J1 dans le dispositif de mesure 5

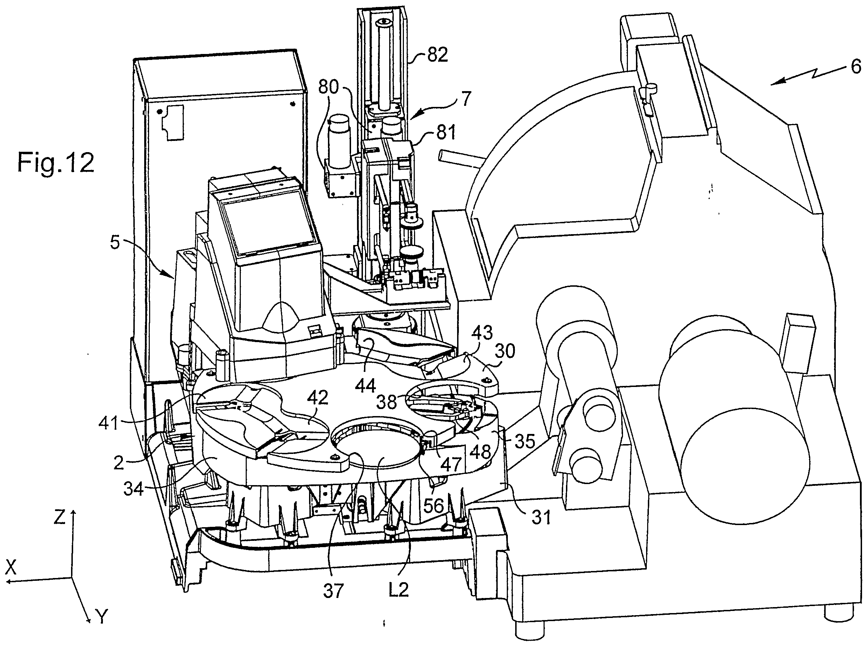

L'ensemble du plateau 30 et des pinces 46 à 48 est entraîné simultanément en rotation pour amener la première lentille L1 du premier job en vis-à-vis du dispositif de mesure 5 (figure 12). Cette rotation du plateau 30 s'effectue, vu de dessus, dans le sens horaire et sous le pilotage de le système électronique et informatique 100.

Dans la variante précitée, lors de ce mouvement de rotation, les pinces sont guidées par le crénelage 69 des doigts 56 qui coopère avec les bourrelets 75, 76.

**Etape 7.1** Lecture de la première lentille L1 du job J1 par le dispositif de mesure 5

L'analyse géométrique et optique de la lentille L1 par le dispositif de mesure 5 s'effectue automatiquement conformément à la description qui en a été faite précédemment pour fournir au système électronique et informatique 100 des données principalement relatives aux puissances optiques et au référentiel de repérage de la lentille (point de centrage et orientation). Ces caractéristiques de puissances optiques et de repérage sont mémorisées par le système électronique et informatique 100.

En particulier, l'acquisition des caractéristiques de repérage indiquées ci-dessus permettra, en liaison avec les données géométrico-morphologiques acquises lors de l'étape préliminaire précédemment décrite, de déterminer le point exact de préhension et de blocage de la lentille ophtalmique L1 sur le carrousel des moyens d'accueil et de premier et second transferts 2 amené en position intermédiaire (comme expliqué plus loin) et de déterminer les paramètres de détourage pour piloter en conséquence le dispositif de détourage 6 pendant le détourage.

Le dispositif de mesure 5 détermine aussi une ou plusieurs caractéristiques optiques locales, en un ou plusieurs points remarquables de la lentille présentant un intérêt pour la caractérisation ou la vérification de la lentille ou du job. Cette ou ces caractéristiques sont mémorisées dans une mémoire du système électronique et informatique 100. Elles seront ultérieurement (voir en particulier étape 9.1) retraitées par le système électronique et informatique pour être combinées avec ou corrigées en fonction de données géométriques fournies par le bras 7 dans sa fonction de palpage et relatives à l'implantation spatiale de la lentille en préparation sur le plateau 30, dans un référentiel lié au dispositif de mesure 5.

**Etape 8.1** Second transfert de la première lentille : rotation du plateau de chargement et de déchargement 30 pour palpage de la première lentille L1 du job J1.

Le plateau 30 est actionné en rotation dans le sens horaire pour placer la lentille L1 dans une position dite intermédiaire dans laquelle cette lentille est proche du bras 7 de façon à être accessible à ce bras pour son palpage d'une part et pour sa préhension d'autre part, comme nous le verrons aux étapes suivantes. Lors de ce second transfert, la rotation du plateau 30 est pilotée et suivie par l'électronique de commande en rotation du plateau 30 et est mémorisée dans une mémoire du système électronique et informatique 100. Conjointement, la position et l'axage de la lentille mesurée par le dispositif de mesure 5 lors de l'étape précédente est suivie et conservée en mémoire.

**Etape 9.1** Palpage de la première lentille L1 du job J1 au niveau du centre optique ou de référence, et/ou au niveau de tout point d'intérêt ou remarquable (point de mesure) de la lentille.

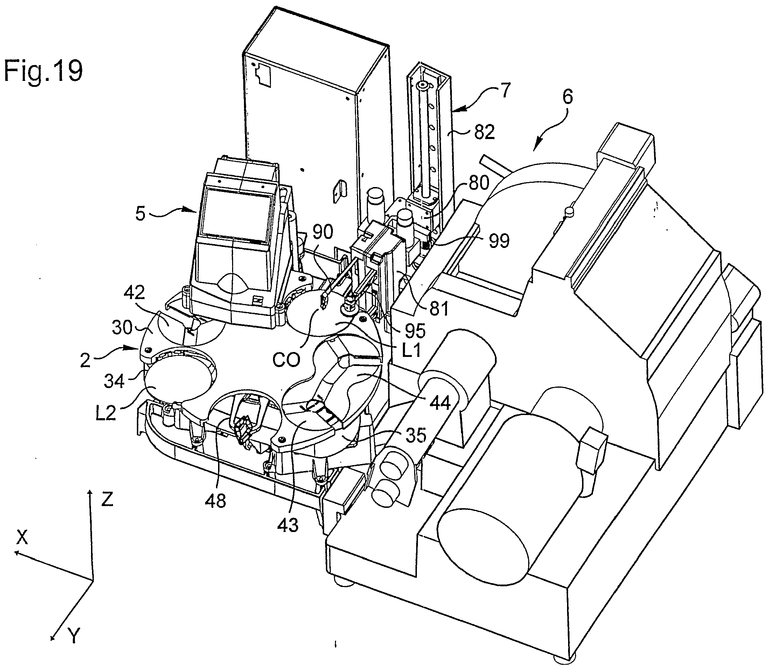

La figure 19 représente le bras de palpage, de préhension et de transfert 7 en cours de palpage de la lentille L1 afin de déterminer la hauteur ou altitude « e » de la lentille L1 par rapport au dispositif de mesure 5 par palpage au niveau d'un ou plusieurs points remarquables de la lentille en préparation auxquels on souhaite réaliser une mesure d'une ou plusieurs caractéristiques optiques telles que les puissances optiques (i.e. frontales ophtalmiques). Un tel point remarquable est par exemple le centre de référence CR (centre optique pour une lentille unifocale et croix de montage pour une lentille progressive) sur la face concave de la lentille. Plus généralement, ce point peut être tout point d'intérêt où l'on souhaite mesurer une puissance optique frontale locale, sphérique ou cylindrique. Il s'agit par exemple, typiquement, du centre optique d'une lentille unifocale ou des points de référence pour la vision de près et pour la vision de loin d'une lentille progressive.

On sait en effet que la puissance ophtalmique sphérique ou cylindrique est définie par l'inverse de la distance entre le ou les foyer(s) et la face arrière concave de la lentille. Le dispositif de mesure 5 permet de mesurer la position du ou des foyers dans le référentiel fixe du dispositif. Le palpage de la face concave de la lentille au point d'intérêt permet de mesurer sa position dans ce référentiel et, partant, la ou les distances entre le ou les foyers mesurés et la face arrière de la lentille.

On procède, plus précisément, de la façon suivante.

Les moyens de mesure 5 ont préalablement déterminé une caractéristique optique locale en un ou plusieurs points remarquables de la lentille présentant un intérêt pour la caractérisation ou la vérification de la lentille ou du job. Cette caractéristique a été mémorisée dans une mémoire du système électronique et informatique 100.

Le bras 7, exerçant sa fonction de palpage, est piloté par le système électronique et informatique 100 pour déterminer la position, c'est-à-dire en l'espèce simplement l'altitude, du ou des points remarquables sur l'une des faces de la lentille.

Cette position est mise en mémoire du système de traitement électronique et informatique 100 pour être combinée avec la valeur préalablement mémorisée à l'étape 7.1 de la caractéristique optique locale au point considéré. Cette combinaison s'effectue au moyen d'un logiciel comprenant des instructions de calcul qui, combinant la position du point remarquable obtenue par palpage avec la caractéristique locale de la lentille déterminée par le dispositif de mesure optique 5, en déduit les puissances sphériques et/ou cylindriques de la lentille en ce point remarquable, par exemples les puissance sphériques aux points de référence pour la vision de près et la vision de loin. La puissance ophtalmique sphérique ou cylindrique est alors calculée comme étant l'inverse de la distance entre le ou les foyer(s) et la face arrière concave de la lentille.

En pratique, deux modes opératoires sont envisageables.

Dans un premier mode, le dispositif de mesure 5 détermine la position d'un foyer de la lentille audit point remarquable ou d'intérêt. Les instructions de calcul du programme exécuté par le système 100 déduisent alors la distance focale de la lentille au point remarquable considéré, à partir du rapprochement (ou de la combinaison) de la position du point remarquable obtenue par palpage avec la position du foyer de la lentille déterminée par la mesure optique réalisée par le dispositif de mesure 5. Le programme calcule alors la puissance optique frontale comme étant l'inverse de cette distance focale ainsi constatée.

Dans un second mode, le dispositif de mesure 5 détermine une valeur approximative d'une puissance de la lentille en un point remarquable de la lentille. Les instructions de calcul du programme exécuté par le système 100 corrigent alors la valeur approximative de puissance de la lentille obtenue par mesure optique, en fonction de la position du point remarquable obtenue par palpage. Cette correction est effectuée par le programme au moyen d'une formule mathématique de correction résultant d'une part de l'approximation effectuée lors de la mesure optique pour évaluer la puissance au point considéré et d'autre part du fait que la puissance optique est égale à l'inverse de la distance focale.

Au cours de ce premier palpage, seule la face concave (inférieure) 9 de la lentille est palpée par le bec 93 de la branche inférieure 91. En variante, il est bien entendu possible de palper la face supérieure convexe 8 de la lentille L1 au moyen de l'autre bec 92 porté par la branche supérieure 90 des moyens de palpage 85.

**Etape 10.1** Palpage du contour de la première lentille L1 du job J1

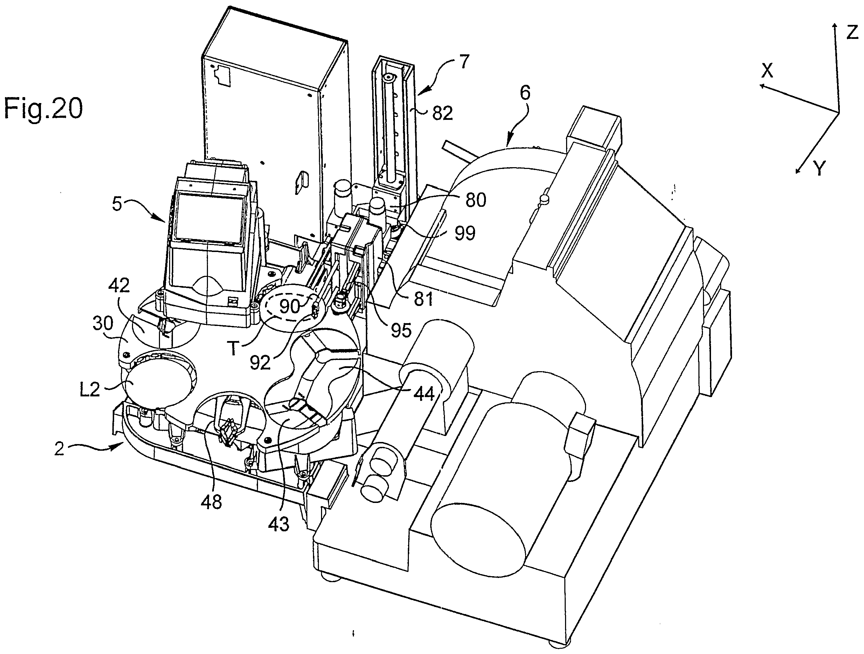

Le bras de palpage, de préhension et de troisième transfert 7 effectue ensuite le palpage du contour prévu de la lentille après détourage afin de vérifier si cette lentille est de surface et épaisseur suffisantes pour obtenir la lentille recherchée après détourage par le dispositif de détourage 6. Le contour T est par exemple représenté à la figure 20 tandis que les figures 16 à 18 montrent la cinématique d'approche des becs 92, 93 des moyens de palpage 85.

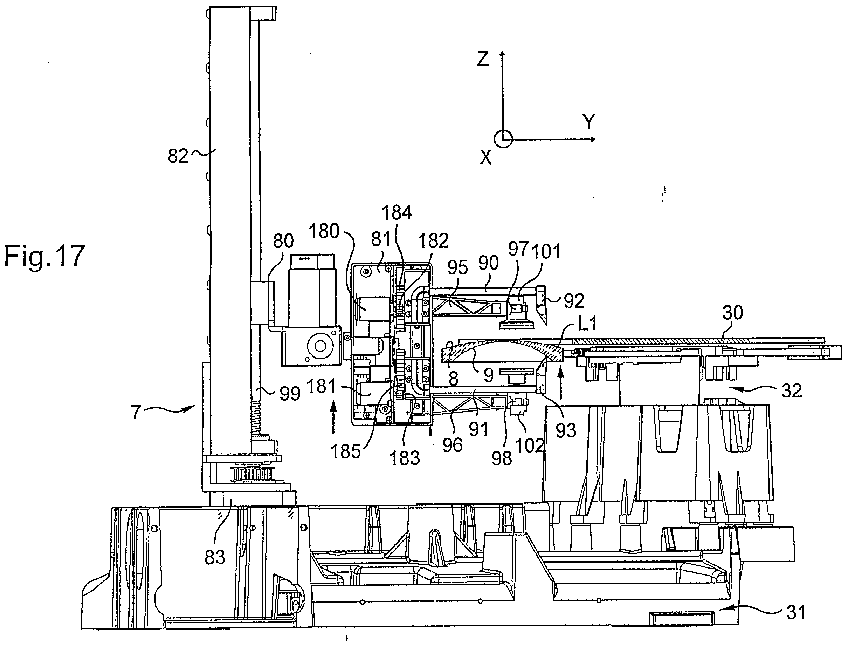

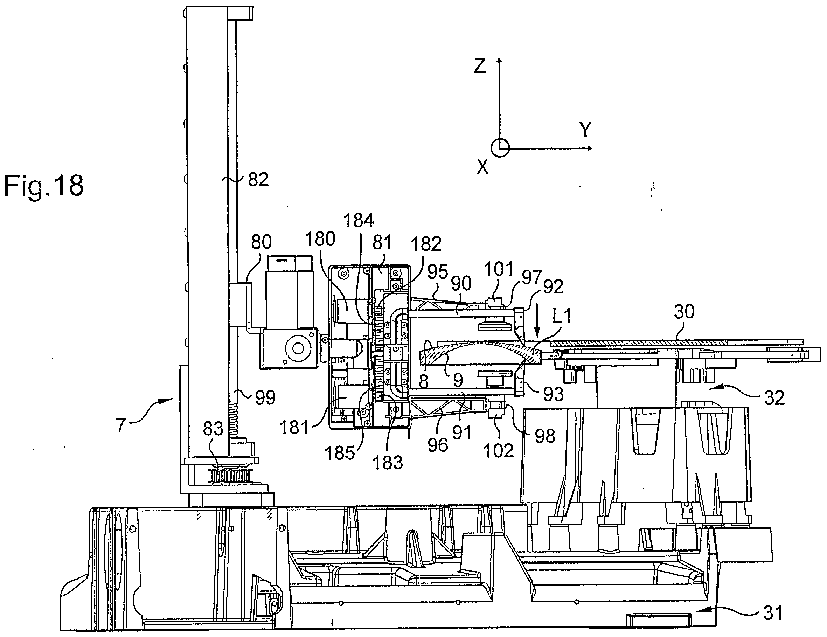

Le poignet 81 est tout d'abord déplacé pour amener les deux becs au voisinage de la périphérie de la lentille. Dans l'exemple illustré, le bec inférieur 93 (figure 17) est mis en premier au contact de la surface arrière 9 de la lentille L1 par translation de la branche 91 qui porte ce bec. Puis, le bec supérieur 92 est déplacé par translation de la branche 90 pour palper la surface avant 8 de la lentille (figure 18). L'ensemble est ensuite déplacé par le poignet 81 pour que les becs 92, 93 palpent le contour de la lentille. Cet exemple n'est cependant pas limitatif et on pourra envisager une solution inverse avec mise en contact du bec supérieur en premier ou encore une solution mixte avec rapprochement et mise en contact des deux becs simultanément.

**Etape 11.1** Palpage de plusieurs points au voisinage du centre boxing de la première lentille L1 du job J1 et points pour détermination de la normale à l'axe boxing.

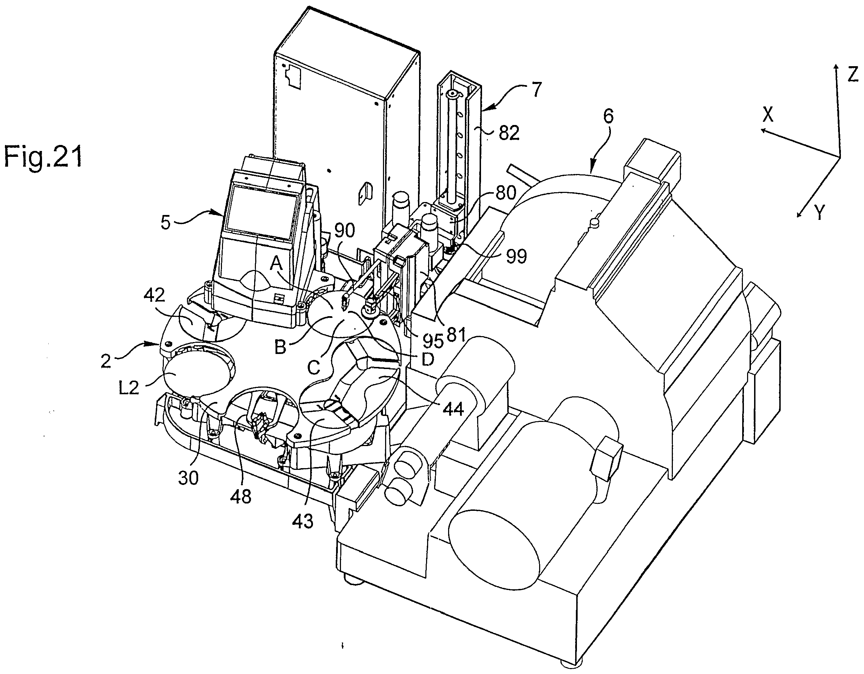

L'axe boxing, précédemment défini pour la mise en oeuvre de l'invention, est ensuite déterminé (figure 21) par palpage, avec les becs 92, 93 mis successivement au contact de la lentille comme à l'étape précédente, de plusieurs points (au moins trois points) situés au voisinage du centre boxing CB, en l'espèce quatre points A, B, C, D.

**Etape 12.1** Premier transfert de la seconde lentille : rotation du plateau de chargement et de déchargement 30 pour passage de la seconde lentille L2 du job J1 dans le dispositif de mesure 5.

**Etape 13.1** Lecture de la seconde lentille L2 du job J1 par le dispositif de mesure 5.

**Etape 14.1** Second transfert de la seconde lentille : rotation du plateau de chargement et de déchargement 30 pour passage en position intermédiaire en vue du palpage de la seconde lentille L2 du job J1.

**Etape 15.1** Palpage de la seconde lentille L2 du job J1 au niveau du centre optique.

**Etape 16.1** Palpage du contour de la seconde lentille L2 du job J1.

**Etape 17.1** Palpage de plusieurs points au voisinage du centre boxing de la seconde lentille L2 du job J1 et points pour détermination de la normale à l'axe boxing.

**Etape 18.1** Confrontation des caractéristiques du premier job J1 par rapport aux données d'entrée.

Le programme interne du système électronique et informatique 100 procède à l'examen de validation, automatique ou assisté, des caractéristiques des deux lentilles L1 et L2 du job J1. Cet examen de validation consiste en une double vérification, avec :

- d'une part une vérification individuelle de la conformité des caractéristiques de chaque lentille du job par rapport à la prescription saisie par l'opérateur dans la mémoire du système électronique et informatique, et
- d'autre part, un contrôle de la cohérence d'ensemble des caractéristiques des deux lentilles considérées en tant que job, c'est-à-dire en fonction de leur appartenance à une même paire de lunettes, avec en particulier la simulation du montage des deux lentilles sur la monture choisie et la vérification que ce montage est possible.

Les caractéristiques pour lesquelles chaque lentille est individuellement validées sont en particulier :

- type de lentille : unifocal, progressif, double ou triples foyers, etc.
- puissances sphérique, prismatique, cylindrique,
- addition de puissance(s) pour les lentilles progressive
- axes de cylindre et de prisme,
- teinte,
- indice,
- matière.

Les caractéristiques pour lesquelles les deux lentilles de la paire sont considérées conjointement, dans leur appartenance à un même job, sont en particulier :

- le centrage de chaque lentille sur la monture en fonction du référentiel de repérage défini au moyen du dispositif de mesure 5 pour chaque lentille et des demi écarts pupillaires et hauteurs propres au porteur, ce centrage permettant de réaliser une simulation du montage des lentilles sur la monture à laquelle elles sont destinées, comme expliqué plus en détail ci-dessous,
- la position axiale prévue du biseau ou de la rainure sur la tranche de chaque lentille par rapport à la face avant de la lentille, afin d'assurer l'esthétisme du montage (positionnement axial équilibré des deux lentilles, l'une par rapport à l'autre, sur la monture) ;
- la cohérence des teintes, indices, dégradés des deux lentilles du job,
- la complémentarité des deux lentilles ou appartenance des deux lentilles au même job : on vérifie que le job se compose bien d'une lentille droite et d'une lentille gauche et que ces deux lentille correspondent bien au même job.

En particulier, le rapprochement global des caractéristiques de repérage du job s'effectue de la façon suivante. A partir des informations représentatives des paramètres propres à la morphologie du porteur, notamment le demi-écart pupillaire et la hauteur de la pupille par rapport à l'axe de l'horizontale, et des informations représentatives du contour de la monture choisie, acquises lors de l'étape préliminaire précédemment décrite, le système électronique et informatique 100 élabore une image vidéo qui est visualisée sur l'écran d'affichage tel qu'un écran LCD (non représenté). Par conséquent, sur cet écran, on verra notamment, à la même échelle le contour de la monture et celui de la lentille non détourée, avec ses caractéristiques particulières, notamment les points de repérage qui y sont portés ou ceux qui ont été déterminés par la mise en oeuvre du dispositif de mesure. La prise en compte de tous ces éléments, mesurés, calculés ou lus permet de déterminer la position du périmètre de la lentille détourée par rapport au verre ophtalmique initial et, de ce fait, la position du point de préhension de la lentille, en vue du détourage, qui est généralement le centre du rectangle dans lequel s'inscrit le contour d'un cadre ou "cercle" de la monture.

Le système électronique et informatique 100 effectue un traitement informatique de ces données géométrico-morphologiques rapprochées des données relatives aux caractéristiques de repérage des lentilles ophtalmiques L1, L2 du job J1, prises conjointement, pour simuler leur montage dans les cercles correspondants C1, C2 de la monture M choisie et, éventuellement, modifier leur centrage. Sur les figures 39 et 40, on a représenté de manière schématique différentes étapes de ce centrage conjoint d'une paire de lentilles ophtalmiques d'un même job dans des cercles d'une monture choisie par le porteur.

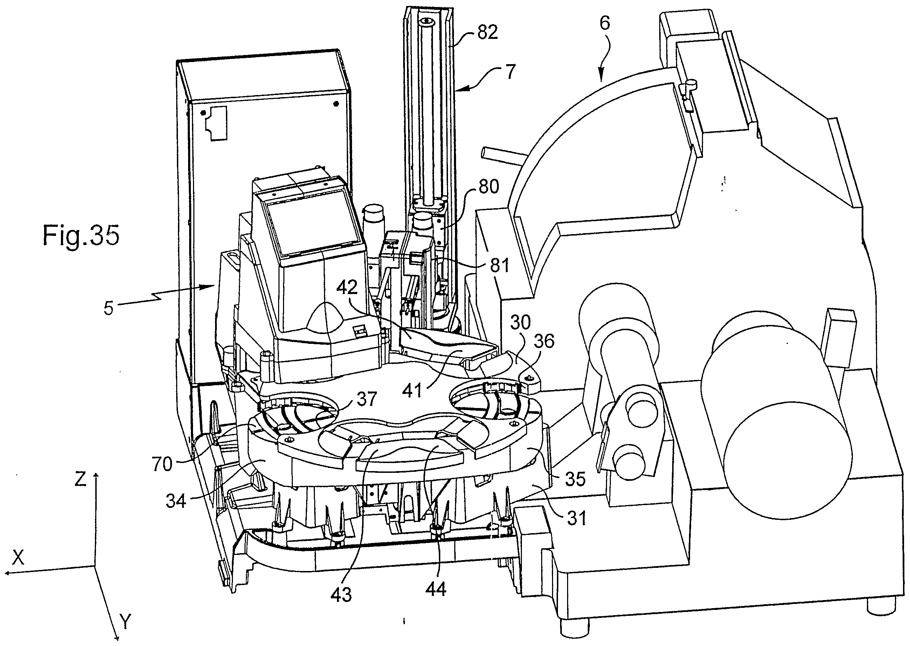

Comme l'illustre la figure 39, chaque lentille ophtalmique L1, L2 est positionnée dans chaque cercle C1, C2 de façon à faire coïncider son centre optique ou de référence CR (croix de montage 11, figure 35, si la lentille L1 est progressive) avec la position déterminée de la pupille P1, P2 du porteur par rapport au cercle C1, C2 de la monture M. Lorsque le diamètre initial des lentilles ophtalmiques L1, L2 est trop petit par rapport aux cercles C1, C2 de la monture M choisie, un jour est alors créé entre le cercle C1, C2 considéré de la monture M et le bord B1, B2 de la lentille L1, L2 .

Dans un premier temps, on déplace alors conjointement (virtuellement) les deux lentilles ophtalmiques L1, L2 (ici selon la flèche F) en conservant constante la hauteur H de centrage relative des deux lentilles ophtalmiques (la hauteur relative étant définie comme la différence entre les hauteurs H de centrage des deux lentilles ophtalmiques) ainsi que la distance interpupillaire D séparant les deux centres optiques ou de référence CR des lentilles ophtalmiques L1, L2 telles que positionnées lors de l'étape précédente afin d'éliminer les points d'intersections existants entre chaque cercle C1,C2 de la monture M et le bord B1, B2 de chaque lentille ophtalmique.

Toutefois, si, après un tel déplacement (virtuel) conjoint des deux lentilles ophtalmiques L1, L2, il reste encore des points d'intersections entre au moins un cercle C1, C2 de la monture M et le bord B1, B2 de la lentille ophtalmique L1, L2 correspondante, dans un deuxième temps, on déplace, soit l'une des deux lentilles, soit conjointement les deux lentilles ophtalmiques L1, L2, en conservant la hauteur H de centrage relative des deux lentilles ophtalmiques et en modifiant légèrement la distance interpupillaire séparant les deux centres optiques ou de référence des lentilles ophtalmiques telles que positionnées à l'étape précédente afin d'éliminer tous les points d'intersections existants entre chaque cercle de la monture et le bord de chaque lentille ophtalmique.

Dans tous les cas, il est préférable, bien que non indispensable, que, lors du déplacement (virtuel) conjoint desdites lentilles ophtalmiques L1, L2 on conserve la hauteur H de centrage relative desdites lentilles de sorte qu'une fois les lentilles ophtalmiques L1, L2 montées dans les cercles C1, C2 de la monture choisie, les deux centres optiques ou de référence CR des lentilles ophtalmiques L1, L2 et les pupilles P1, P2 du porteur se situent sur la même ligne de niveau ou horizontale (voir figure 40) même s'ils ne coïncident pas.

Comme le montre la figure 40, la hauteur H et l'écart interpupillaire D étant conservés le porteur n'a qu'à légèrement déporter son regard vers la gauche ou vers la droite pour obtenir une vision correcte à l'infini.

Au pire, si l'écart interpupillaire entre les lentilles ophtalmiques à monter n'est pas respecté, le porteur sera obligé de converger ou de diverger légèrement le regard lorsqu'il regarde à l'infini.

Le système électronique et informatique 100 affiche les valeurs des prismes induits pour chaque oeil par une éventuelle modification du centrage de chaque lentille sur la monture. Il appartient alors à l'opticien de valider si ces valeurs sont acceptables ou non et, partant, d'accepter ou refuser le job ainsi recentré. Eventuellement, le système peut refuser d'office le job ou alerter l'opticien via une interface graphique et/ou sonore dans le cas où l'une au moins de ces valeur dépasse une valeur seuil maximum. On peut aussi prévoir que le système électronique et informatique 100 accepte d'office le job si les valeurs de prisme induits sont inférieurs à une valeur seuil prédéfinie.

Le système électronique et informatique 100 vérifie encore que la zone de vision de près 14 (figure 36) est bien située l'intérieur du périmètre détouré de la lentille et permet à l'opticien de le vérifier visuellement en affichant cette zone.

Enfin, le système électronique et informatique 100 compare par le calcul et/ou affiche pour comparaison au jugé par l'opticien la position axiale prévue du biseau ou de la rainure sur la tranche de l'une et l'autre des deux lentilles. On apprécie ainsi la position axiale prévue des deux lentilles sur la monture, ou, autrement dit, la position des cercles ou fils de cerclage de la monture par rapport aux faces avant des lentilles. Ce calcul ou cette comparaison visuelle vise à harmoniser esthétiquement cette position des cercles ou des fils de cerclage de la monture par rapport aux faces avant des lentille de façon à éviter une asymétrie trop prononcée du positionnement axial des lentilles gauche et droite l'une par rapport à l'autre. Le cas échéant, la position axiale du biseau ou de la rainure de l'une et/ou l'autre des deux lentilles peut être modifiée.

Alternativement, il peut aussi arriver que le montage des lentilles L1, L2, ou d'au moins l'une d'elles, ne soit pas possible ou souhaitable en raison d'une impossibilité mécanique ou de l'inconfort visuel que ce montage procurerait au porteur.

**Etape 19.1** Acceptation ou refus du premier job J1

Le job J1 est accepté ou refusé selon que les caractéristiques individuelles et globales précédemment citées sont ou non validées et/ou modifiées.

**Alternative 1 :** Si le premier job J1 est refusé (alternative 1), on exécute les cinq étapes suivantes. Sinon, elles sont ignorées.

> **Etape 20.1** Rotation du plateau de chargement et de déchargement 30 pour présentation du premier job J1 en regard de la porte d'accès 26 (cinquième transfert)
>
> **Etape 21.1** Ouverture des pinces du plateau de chargement et de déchargement 30 et remontée des sièges des lentilles en position haute
>
> **Etape 22.1** Ouverture de la porte d'accès sur commande de l'opérateur
>
> **Etape 23.1** Prise du premier job J1 par l'opérateur
>
> **Etape 24.1** Chargement du job suivant pour son traitement, conformément aux étapes 3 et suivantes

**Alternative 2 :** Si le premier job J1 est accepté (alternative 2 la plus probable), on ignore les cinq étapes précédentes et on exécute les étapes suivantes.

**Etape 25.1** Rotation du plateau de chargement et de déchargement 30 pour présentation de la première lentille L1 du job J1 en position intermédiaire pour sa prise par le bras de palpage, de préhension et de troisième transfert 7 (fin de second transfert)

**Etape 26.1** Sélection et clipsage des nez d'usinage par le bras de palpage, de préhension et de troisième transfert 7 dans le magasin 130 de nez

En pratique, les deux étapes précédentes sont exécutées simultanément à l'étape 18.1 et/ou 19.1 de confrontation et d'acceptation ou refus du job. On travaille ainsi en temps masqué pour un gain de temps, compte tenu du fait que le premier job J1 sera le plus souvent accepté.

**Etape 27.1** Prise de la première lentille L1 du job J1 par le bras de palpage, de préhension et de troisième transfert 7.

Après avoir effectué les palpages précédemment décrits, le bras de palpage, de préhension et de troisième transfert 7 prend en sandwich la lentille L1 entre les deux nez 101 et 102.

On a défini précédemment un axe de blocage AB (figure 14), appelé axe boxing, comme étant l'axe normal à la face avant de la lentille et passant par le centre boxing CB. Afin d'éviter des erreurs de positionnement, le nez supérieur 95 accoste la face avant convexe de la lentille en translation suivant cet axe boxing AB de la lentille et reste plaqué contre la lentille en étant calé sur cet axe. La surface du nez 101 est approchée de la face avant 8 de la lentille en étant déjà parallèle au plan tangent de cette lentille au niveau du centre boxing CB (figure 14). L'accostage s'effectue alors avec une mise en contact globale et simultanée de l'ensemble des points de la surface d'application 165 du nez 101 avec la face en regard de la lentille, sans basculement. Il ne se produit ainsi pas d'erreur de décalage ou basculement angulaire lors de l'accostage de ce nez contre la lentille. Grâce à cette précision, une reprise ultérieure de lentille est possible puisque les risques d'erreur de positionnement sont éliminés.

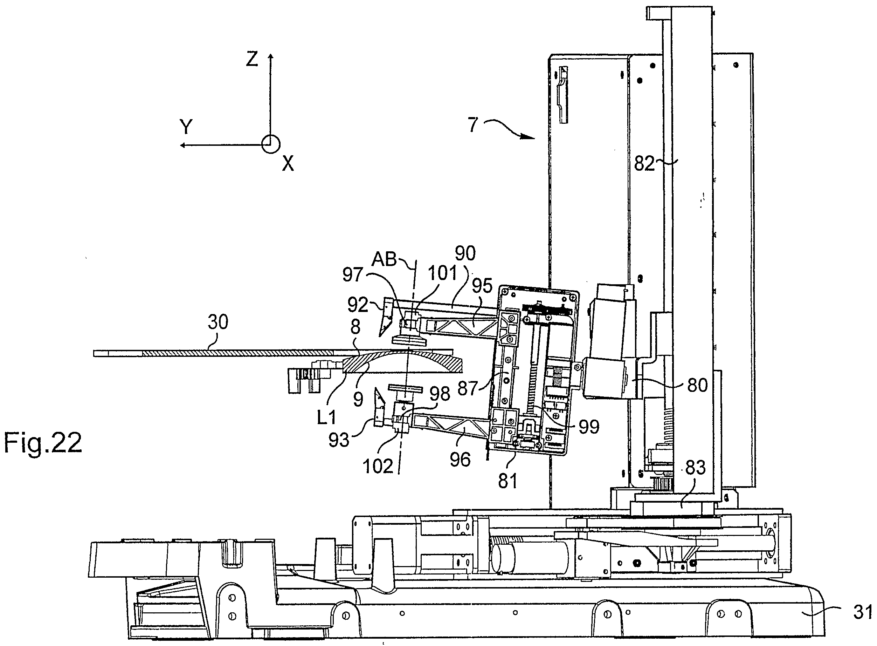

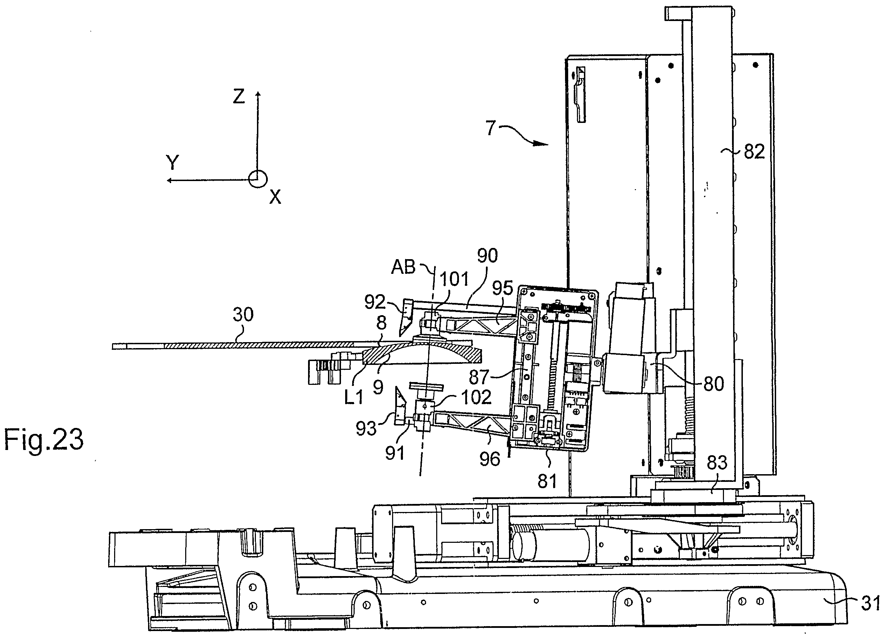

Cette cinématique d'accostage et cette géométrie de blocage sont rendues possibles par les nombreux degrés de liberté du poignet 81. Comme le montrent les figures 22 à 24, le mouvement du poignet 81 est adapté pour approcher tout d'abord le nez supérieur 101. La mâchoire supérieure 95 étant fixe par rapport au poignet, le nez 101 est approché grâce aux mouvements en translation et en rotation du poignet 81.

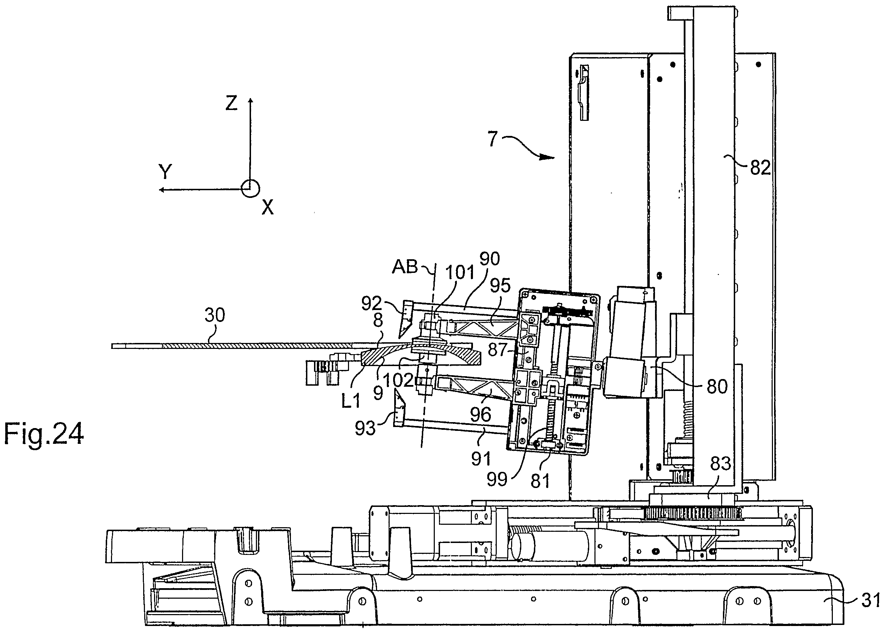

Puis, la vis 99 provoque la translation de la mâchoire inférieure 96 (figure 24) pour approcher de la même manière le deuxième nez 102, selon l'axe boxing AB. Comme cela est mieux visible sur la figure 30, le montage sur rotule du nez 102 permet à ce nez, lors de son accostage contre la face arrière 9 de la lentille, d'épouser l'orientation angulaire locale de cette face arrière 9 de la lentille pour permettre le blocage de la lentille contre l'autre nez 101 qui est rigidement relié à la mâchoire supérieure 95, sans modifier de façon incontrôlée la position de la lentille en la faisant basculer angulairement ou glisser transversalement.

Les deux nez sont alors précisément implantés sur la lentille qui est fermement maintenue. On obtient ainsi un blocage stable et précis de la lentille selon l'axe boxing, sans erreur géométrique.

On observera qu'à ce stade de saisie de la lentille par les moyens de préhension, le référentiel de la lentille, qui définit son centrage et son orientation (ou axage) et qui a été mesuré par le dispositif de mesure 5, a été conservé ou suivi par le système électronique et informatique 100 lors du second transfert de la lentille par le plateau 30 entre la position de mesure et la position intermédiaire. Les nez, dont la géométrie de fixation sur les mâchoires 95, 96 du bras est parfaitement connue par construction, sont donc implantés sur la lentille pour se saisir de celle-ci selon une géométrie (positionnement dans le plan de la lentille et orientation) connue par rapport au référentiel de la lentille. Les nez 101, 102 sont donc implantés sur la lentille suivant une orientation et une position dans le plan de la lentille qui peut être quelconque mais qui est dans tous les cas parfaitement connue et mémorisée dans une mémoire du système électronique et informatique 100.

En l'espèce, il n'est pas prévu d'ajuster, au moment du serrage des nez 101, 102 sur la lentille, l'orientation angulaire relative des nez par rapport à la lentille autour de l'axe commun de blocage AB. Cette orientation, qui est quelconque, est mémorisée et matérialisée, à un décalage angulaire connu près, par les nez. Ce décalage angulaire connu est pris en compte lors du détourage de la lentille.

Il est toutefois possible, pour les cas particulièrement difficiles ou pour encore améliorer la précision et la sécurité du placement des nez, en particulier lors d'une reprise de la lentille pour une rectification, de coller sur la lentille un gland de centrage adhésif 145 simultanément au serrage des nez sur la lentille.

Lorsque l'opérateur a chargé un gland de centrage adhésif 145 simultanément au chargement d'un job sur le plateau 30, le dispositif de mesure 5 détecte l'obstruction des lumières 142 par ledit gland et en informe le système de traitement électronique et informatique 100.

En l'absence de gland sur le tenon 140, le bras manipulateur 7 est piloté par le système 100 pour implanter le nez de blocage 101 seul.

Si la présence du gland de référence 145 est détectée, le bras manipulateur 7 est piloté pour implanter le gland de référence 145 sur la lentille avec le nez de blocage 101. L'organe de palpage, de préhension et de troisième transfert 7 est alors piloté par le système 100 pour venir se saisir de ce gland afin de l'implanter sur la face avant 8 de la lentille. Plus précisément, l'organe de palpage, de préhension et de troisième transfert 7 amène le nez 101 en regard du gland sur le plateau et abaisse le nez 101 pour que ce dernier s'emmanche avec un léger serrage sur le gland, à la faveur du logement central 144 ménagé dans le pion 161 du nez 101. Le gland est ainsi emboîté serré dans le nez 101 et est véhiculé avec celui-ci en direction de la lentille à saisir et bloquer. Lors du serrage des nez 101, 102 par les branches 95, 96 de l'organe 7 sur la lentille, la face adhésive 147 du gland vient au contact de la face avant convexe de la lentille et adhère à celle-ci. Le gland 145 restera alors implanté sur la lentille ophtalmique préparée jusqu'à ce qu'il soit volontairement retiré par l'opérateur, matérialisant le référentiel de centrage ou repérage de la lentille tel que mesuré par le dispositif de mesure 5 pour permettre une ou plusieurs reprises de la lentille.

En procédant de cette manière, on matérialise le référentiel de centrage de la lentille par le gland collé 145, comme cela est habituellement le cas. Mais, conformément à l'invention, cette fonction de centrage est dissociée de la fonction de blocage proprement dite servant à la transmission de couple pour l'immobilisation en rotation de la lentille sur les arbres 612, 613 de la meuleuse. Cette fonction de transmission de couple est dans tous les cas assurée par les nez 101, 102 dont la forme, les dimensions et le matériau sont adaptés à la lentille à détourée.

> Etape 28.1 Ouverture de la pince en charge de la première lentille L1 du job J1 sur le plateau
> Etape 29.1 Troisième transfert de la première lentille L1 du job J1 pour passage de relais aller du carrousel aux moyens de détourage

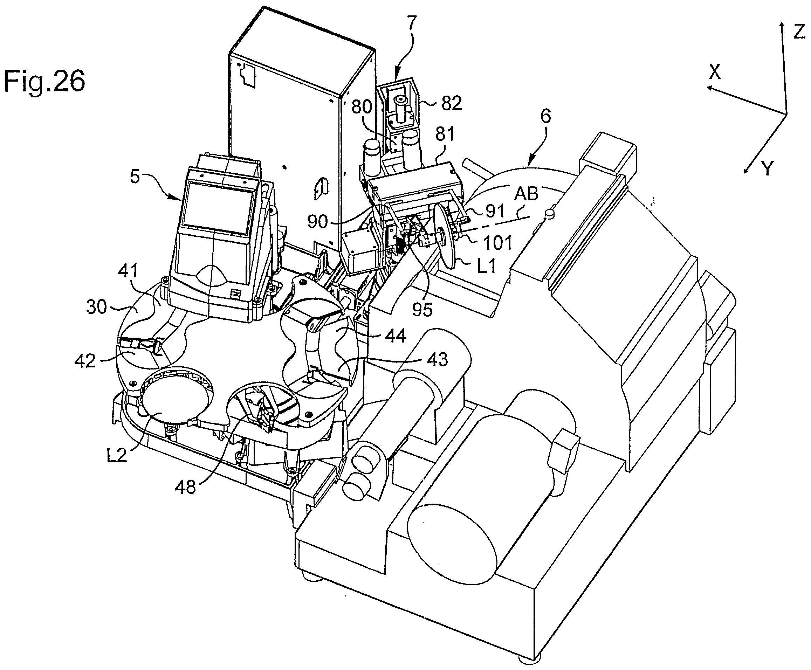

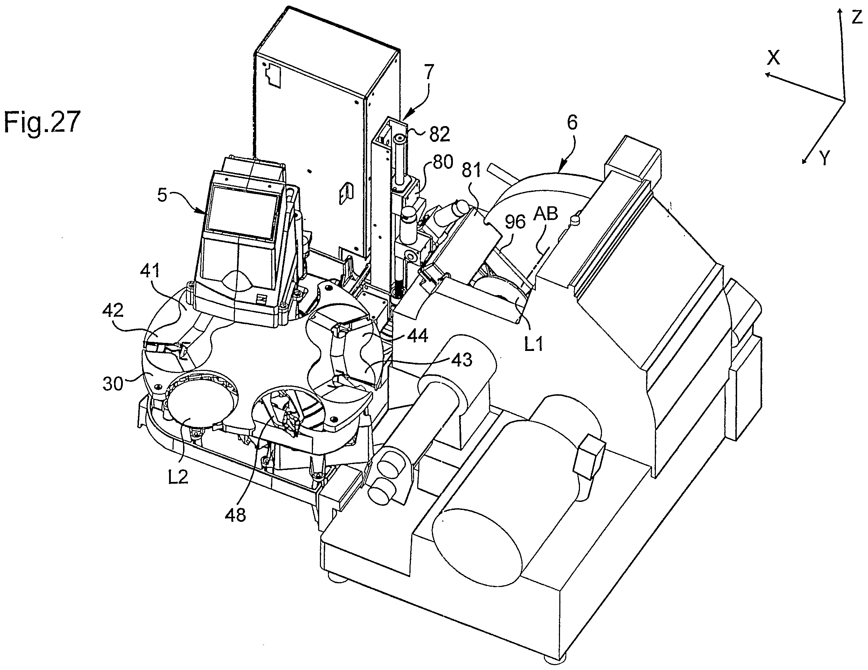

La lentille L1 est ensuite déplacée par le bras de palpage, de préhension et de troisième transfert 7 (figure 5) pour être retirée hors du plateau de chargement et déchargement 30. Puis, cette lentille est transférée par cet organe 7 vers le dispositif de détourage 6, comme le montrent les figures 26 et 27.

La figure 28 illustre la phase finale du transfert au cours de laquelle la lentille L1 est à la fois maintenue par le bras de palpage, de préhension et de troisième transfert 7, et par les arbres 613, 612 des moyens de détourage 6. Dans cet état, les nez 101, 102 sont maintenus par clipsage transversal par les mâchoires supérieure 95 et inférieure 96 du poignet 81, et par blocage axial au moyen des arbres 613, 612 selon l'axe boxing, les arbres 613, 612 maintenant serrés en sandwich les deux nez 101, 102 et, au centre, la lentille à détourer.

Le déplacement en retrait transversal du poignet est ensuite commandé pour désengager les mâchoires 95 et 96 hors des nez 101, 102 de sorte que la lentille reste simplement en prise entre les nez, sur le dispositif de détourage (figure 29). Au cours de ce transfert, il n'y a pas perte de référentiel puisque les nez restent en permanence en position repérée et appartiennent, en quelque sorte, à la fois au bras de préhension et aux arbres de serrage et d'entraînement du dispositif de détourage. Compte-tenu de la mémorisation du référentiel de la lentille précédemment effectué, le système électronique et informatique 100 en déduit la position et l'orientation de ce référentiel de la lentille dans le référentiel du dispositif de détourage.

La figure 30 montre en coupe longitudinale la mise en prise des deux arbres 613, 612 avec les deux nez 101, 102 par emboîtement.

Etape 30.1 Palpage de la première lentille L1 du job J1 dans le dispositif de détourage 6.

Avant son usinage et pour la précision de ce dernier, la première lentille L1 du job J1 est palpée, alors qu'elle est installée dans le dispositif de détourage 6 en étant bloquée et entraînée en rotation entre les arbres de la meuleuse, par le bras de palpage, de préhension et de troisième transfert 7. Ce palpage est réalisé suivant le contour souhaité et supposé (compte-tenu du transfert de la lentille sans perte de référentiel) de la lentille après détourage et en fonction des caractéristiques de repérage de la lentille fournies par le dispositif de mesure 5 et des données de morphologie du porteur et de géométrie de la monture entrées en mémoire.

Ce palpage permet d'acquérir dans la mémoire du système électronique et informatique 100 avec une grande précision et in concreto la configuration spatiale dans les trois dimensions de la lentille bloquée entre les arbres de la meuleuse, compte-tenu d'éventuelles déformations de la lentille dues au serrage de la lentille entre les nez sous la pression des arbres. Le système électronique et informatique 100 en déduit alors par calcul les paramètres précis d'usinage : contour de la lentille, forme en trois dimensions du biseau ou de la rainure, position et orientation des trous de perçage.

Etape 31.1 Usinage (détourage) de la première lentille L1 du job J1 par le dispositif de détourage 6.

Le système électronique et informatique 100 pilote le dispositif de détourage 6 pour qu'il réalise l'usinage de la périphérie de la lentille de façon à détourer cette dernière suivant le contour voulu, compte tenu des caractéristiques de repérage de la lentille fournies par le dispositif de mesure 5 et des données de morphologie du porteur et de géométrie de la monture entrées en mémoire.

Selon le type de montage auquel le job J1 en cours de traitement est destiné (monture avec cercles, monture sans cercle à lentilles percées, monture à cerclage de fil Nylon), la lentille est biseautée, percée ou rainurée.

Etape 32.1 Positionnement du plateau de chargement et de déchargement 30 pour dépôt de la première lentille L1 du job J1 par le bras de palpage, de préhension et de troisième transfert 7.

Le plateau de chargement et de déchargement 30 est actionné en rotation de façon à amener la place de déchargement en regard des moyens de détourage 6, en une position prédéterminée à laquelle le bras 7 viendra déposer la lentille détourée.

Etape 33.1 Quatrième transfert de la première lentille L1 du job J1 pour passage retour de la lentille des moyens de détourage au carrousel.

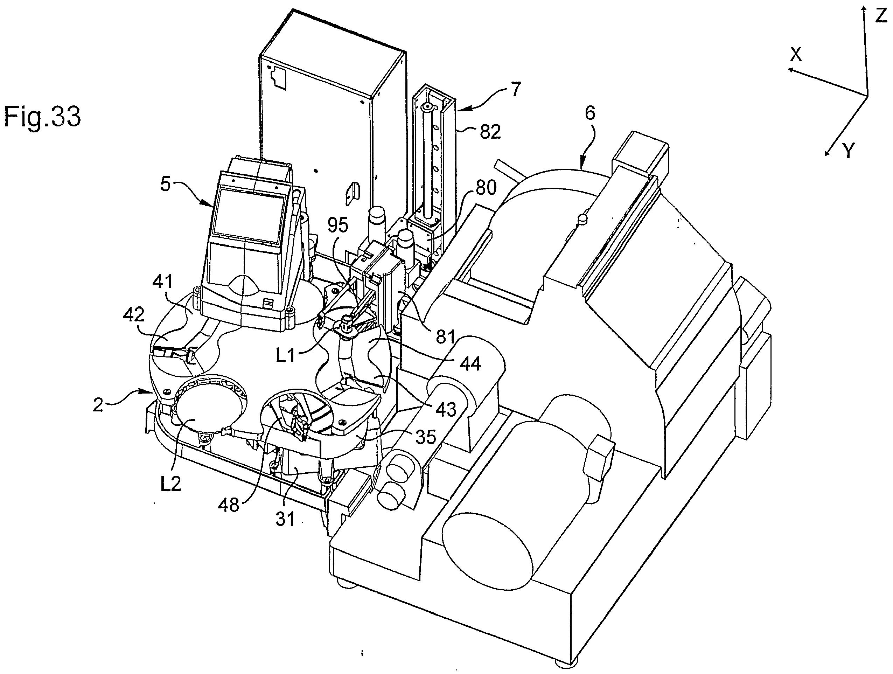

Après détourage par le dispositif de détourage 6, la lentille est à nouveau saisie par le bras de palpage, de préhension et de troisième transfert 7 pour être déposée sur une place de déchargement de l'une des paires de places de déchargement 41 à 44 (figure 33).

La lentille L1 est reprise par le bras de palpage, de préhension et de troisième transfert 7 dans le dispositif de détourage 6 pour être déposée sur la place de déchargement du plateau de chargement et de déchargement 30. Cette étape est exécutée simultanément à la précédente pour un travail en temps masqué permettant un gain de temps de traitement. Bien entendu, la rotation du plateau de chargement et de déchargement pour le bon positionnement de ce dernier est achevée avant le dépôt de la lentille par le bras 7.

On comprend ici l'intérêt de l'agencement particulier du plateau de chargement et de déchargement avec ses trois places de chargement et ses quatre places de déchargement.

**Etape 34.1** Dépôt de la première lentille L1 du job J1 en place de déchargement sur le plateau du carrousel.

Pour procéder au dépôt de la lentille détourée L1 sur l'une des empreinte de déchargement 42 à 44, le bras 7 présente la lentille à l'horizontale et à l'extérieur du plateau 30, légèrement au-dessus de ce dernier, de telle sorte que le nez inférieur en prise avec la lentille soit situé radialement en regard de l'extrémité extérieure de la languette 49 associée à la lumière radiale 45 de l'empreinte de déchargement concernée. Le poignet 81 du bras est alors déplacé suivant une direction radiale du plateau 30 de manière à ce que le nez inférieur pénètre dans le plateau 30 à la faveur de la lumière radiale 45 en poussant la languette 49 en position rétractée à l'encontre de son ressort de rappel.

Lorsque l'axe des nez parvient au centre de l'empreinte de déchargement concernée, le bras descend pour déposer la lentille sur le plateau. Puis, la mâchoire inférieure 96 du bras 7 se desserre pour libérer la lentille et le poignet 81 du bras 7 se retire radialement vers l'extérieur pour se dégager du plateau 30, laissant la languette 49 revenir en position extérieure de recouvrement de la lumière 45.

**Etape 35.1** Rotation du plateau de chargement et de déchargement 30 pour présentation de la seconde lentille L2 du job J1 en zone de prise par le bras de palpage, de préhension et de troisième transfert 7 (fin de second transfert).

**Etape 36.1** Prise de la seconde lentille L2 du job J1 par le bras de palpage, de préhension et de troisième transfert 7 suivant l'axe boxing.

**Etape 37.1** Troisième transfert de la seconde lentille L2 du job J1 pour passage aller de la lentille L2 depuis le carrousel vers les moyens de détourage.

**Etape 38.1** Palpage de la seconde lentille L2 du job J1 dans le dispositif de détourage 6.

**Etape 39.1** Usinage de la seconde lentille L2 du job J1.

**Etape 40.1** Quatrième transfert de la seconde lentille L2 du job J1 pour passage retour de la lentille L2 depuis les moyens de détourage vers le carrousel.

**Etape 41.1** Dépôt de la seconde lentille L2 du job J1 sur la place de déchargement du plateau de chargement et de déchargement 30.

**Etape 42.1** Cinquième transfert : rotation du plateau de chargement et de déchargement 30 pour présentation du premier job J1 pour déchargement par l'opérateur.

**Etape 43.1** Ouverture de la porte d'accès 26 pour déchargement du premier job J1.

L'ouverture de la porte d'accès 26, pour permettre à l'opérateur d'accéder au job J1 préparé, s'effectue à la demande de l'opérateur et sous le contrôle du système électronique et informatique 100 qui n'autorise l'ouverture de la porte que le plateau 30 est en position de chargement et de déchargement.

**Etape 44.1** Déchargement du premier job J1 par l'opérateur.

On peut ensuite procéder au chargement et au traitement d'un autre job (troisième job J3). Le cycle reprend alors à l'étape 4.

Traitement d'un second job (job J2) parallèlement à un premier job (job J1) en cours de traitement

Conformément à un aspect avantageux du procédé, il est proposé un traitement partiellement conjoint, en temps masqué, de deux jobs (paires de lentilles associée à une même paire de lunettes).

La figure 43 montre que le dispositif 1 permet avantageusement de traiter deux jobs simultanément. Un deuxième job peut être chargé sur les places de chargement 37, 38 tandis que la première lentille du premier job est dans le dispositif de détourage 6 et la deuxième lentille de ce premier job est traitée par le dispositif de mesure 5.

Dans ce cas en effet, le traitement du premier job J1 se déroule comme décrit précédemment et les étapes de traitement du job 2 suivant sont analogues. Le traitement du second job J2 se compose alors d'étapes notées 1.2 à 44.2 qui sont respectivement analogues aux étapes 1.1 à 44.1 pour le traitement du premier job J1.

Toutefois, il est prévu selon l'invention de traiter les deux jobs partiellement en parallèle. Autrement dit, certaines étapes de traitement du job 2 se déroulent simultanément à d'autres étapes de traitement du job 1.

Le traitement du second job peut débuter dès qu'est accompli le passage de relais aller pour la première lentille L1 du premier job J1, du plateau de chargement et de déchargement aux moyens de détourage 6, prévu à l'étape 29.1. Une place de chargement correspondante du plateau de chargement et de déchargement 30 a en effet alors été libérée par la première lentille L1 du premier job J1.

Le traitement du second job J2 se déroule donc parallèlement aux étapes 30.1 et suivantes de traitement du premier job J1.

Plus précisément, les étapes allant de l'étape 1.2 de présentation du plateau de chargement et de déchargement 30 en position de chargement à l'étape 19.2 d'acceptation ou refus du job 2 sont exécutées parallèlement à l'étape 31.1 d'usinage de la lentille L1 du job J1.

Les étapes suivantes allant de l'étape 25.2 de sélection des nez d'usinage jusqu'à la fin du traitement du job J2 sont exécutées après l'étape 41.1 de dépôt de la seconde lentille L2 du job J1 sur la place de déchargement du plateau de chargement et de déchargement 30.

## Revendications

1. Procédé de mesure de la puissance locale d'une lentille ophtalmique en un point de mesure de l'une des faces de la lentille, comprenant

      - une étape de réception de la lentille sur un support, et
      - une étape de mesure optique sans contact de la position du foyer de ladite lentille audit point de mesure, **caractérisé en ce qu'**il comporte en outre au moins une étape de palpage de ladite lentille au cours de laquelle on détermine la position axiale dudit point de mesure par des moyens de palpage distincts du support de la lentille, et mobiles par rapport audit support de la lentille suivant au moins une direction sensiblement axiale de la lentille, et **en ce qu'**on combine la position axiale du point de mesure obtenue par palpage avec la position du foyer de la lentille au point de mesure déterminée à partir de la mesure optique sans contact, pour en déduire au moins une puissance optique frontale de la lentille en ce point de mesure.

2. Procédé de mesure selon la revendication précédente, dans lequel la mesure optique de la position du foyer de ladite lentille comprend :

      - une étape de mesure optique globale au cours de laquelle on mesure les valeurs locales de la position du foyer sur une pluralité de zones locales autour d'une pluralité de points de la lentille,
      - une étape de sélection du point de mesure souhaité de la lentille, et
      - une étape de déduction de la valeur locale de la position du foyer audit point de mesure de la lentille, à partir de la mesure globale.

3. Procédé de mesure selon l'une des revendications précédentes, dans lequel les moyens de palpage sont de plus mobiles suivant une direction sensiblement transversale de la lentille.

4. Procédé de mesure selon l'une des revendications précédentes, dans lequel le point de mesure palpé dont la position est déterminée est situé sur la face arrière de la lentille.

5. Procédé de mesure selon l'une des revendications précédentes, dans lequel la position du point de mesure de la lentille est la seule caractéristique géométrique du point de mesure de la lentille utilisée pour déduire la puissance optique frontale de la lentille audit point de mesure.

6. Procédé de préparation automatique au montage d'une lentille ophtalmique, comportant un procédé de mesure selon l'une des revendications précédentes et comportant en outre une étape de blocage de ladite lentille sur des moyens de détourage (6), une étape de détourage de ladite lentille, et une première étape de palpage antérieure au blocage de ladite lentille sur les moyens de détourage.

7. Dispositif de mesure de la puissance locale d'une lentille ophtalmique (L1, L2, L3) en un point de mesure d'une face de cette lentille, comprenant un support pour la lentille et des moyens de mesure optique (5) sans contact aptes à délivrer un signal au moins représentatif de la valeur locale de la position du foyer de ladite lentille sur une zone locale délimitée autour dudit point de mesure de ladite lentille, et un système de traitement électronique et informatique (100) apte à traiter le signal délivré par les moyens de mesure optique globale (5), **caractérisé en ce qu'**il comporte des moyens de palpage (7) aptes à déterminer la position axiale dudit point de mesure sur l'une des faces de la lentille distincts dudit support de la lentille, et **en ce que** le système de traitement électronique et informatique (100) comprend des instructions de calcul combinant la position axiale dudit point de mesure obtenue par palpage avec la position du foyer de la lentille au point de mesure déterminée par le système électronique et informatique (100) à partir du signal délivré par les moyens de mesure optique globale (5), pour en déduire au moins une puissance optique de la lentille en ce point de mesure.

8. Dispositif selon la revendication précédente, dans lequel les moyens de mesure optique (5) sont aptes à délivrer un signal représentatif d'une mesure optique globale comprenant les valeurs locales de la position du foyer sur une pluralité de zones locales autour d'une pluralité de points de la lentille, comprenant le point de mesure considéré ainsi que d'autres points, le système de traitement électronique et informatique (100) étant apte à traiter le signal délivré par les moyens de mesure optique globale (5) pour sélectionner le point de mesure souhaité de ladite lentille et à déduire de la mesure globale la valeur locale de ladite position du foyer audit point de mesure de la lentille.

9. Dispositif de mesure selon l'une des revendications 7 et 8, dans lequel les moyens de palpage sont mobiles par rapport audit support suivant au moins une direction sensiblement axiale de la lentille.

10. Dispositif de mesure selon la revendication précédente, dans lequel les moyens de palpage (7) sont de plus mobiles suivant une direction sensiblement transversale de la lentille.

11. Dispositif de mesure selon l'une des revendications 7 à 10, dans lequel les moyens de mesure (5) sont aptes à déterminer une valeur approximative d'une puissance de la lentille en un point de mesure de la lentille,

    - les instructions de calcul du système électronique et informatique (100) corrigent la valeur approximative de puissance de la lentille obtenue par mesure, en fonction de la position du point de mesure obtenue par palpage.

12. Dispositif de préparation automatique au montage d'une lentille ophtalmique, comportant un dispositif de mesure selon l'une des revendications 7 à 11 et comportant en outre :

    - des moyens de détourage (6) de ladite lentille incluant des moyens de blocage (613, 612) de ladite lentille, et

des moyens de transfert (2, 7) de ladite lentille, agencés pour déplacer ladite lentille ophtalmique entre au moins deux positions distinctes, dont une position de mesure présentant ladite lentille en regard des moyens de mesure (5) et une position de détourage de ladite lentille sur les moyens de détourage (5).

13. Dispositif de préparation automatique au montage selon la revendication précédente, dans lequel le système de traitement électronique et informatique (100) est conçu pour piloter en coordination les moyens de mesure (5), les moyens de palpage (7), le dispositif de détourage (6) et les moyens de transfert (2, 7) pour le traitement automatique de ladite lentille.

14. Dispositif de préparation automatique au montage selon la revendication précédente, dans lequel les moyens de palpage (7) sont distincts et indépendants des moyens de détourage (6) et agencés pour réaliser un premier palpage de ladite lentille dans une position intermédiaire distincte de sa position de détourage.

15. Dispositif de préparation automatique au montage selon l'une des revendications 12 à 14, dans lequel la position du point de mesure de la lentille est la seule caractéristique géométrique du point de mesure de la lentille utilisée pour déduire la puissance optique frontale de la lentille audit point de mesure.

**Patentansprüche**

1. Verfahren zum Messen der lokalen Brechkraft einer ophthalmischen Linse an einem Messpunkt von einer der Flächen der Linse, das Folgendes umfasst

    - einen Schritt zum Aufnehmen der Linse auf einem Träger, und
    - einen Schritt zum kontaktlosen optischen Messen der Position des Brennpunkts der Linse im Messpunkt, **dadurch gekennzeichnet, dass** es außerdem mindestens einen Schritt zum Abtasten der Linse umfasst, in dessen Verlauf die axiale Position des Messpunkts durch vom Träger der Linse verschiedene Abtastmittel bestimmt wird, die in Bezug auf den Träger der Linse in mindestens einer im Wesentlichen axialen Richtung der Linse beweglich sind, und dass die axiale Position des Messpunkts, die durch Abtastung erhalten wird, mit der Position des Brennpunkts der Linse im Messpunkt kombiniert wird, die anhand der kontaktlosen optischen Messung bestimmt wird, um daraus mindestens eine vordere optische Brechkraft der Linse in diesem Messpunkt abzuleiten.

2. Messverfahren nach dem vorangehenden Anspruch, bei dem die optische Messung der Position des Brennpunkts der Linse Folgendes umfasst:

    - einen Schritt zum globalen optischen Messen, in dessen Verlauf die lokalen Werte der Position des Brennpunkts in mehreren lokalen Zonen um mehrere Punkte der Linse gemessen werden,
    - einen Schritt zum Auswählen des gewünschten Messpunkts der Linse und
    - einen Schritt zum Ableiten des lokalen Werts der Position des Brennpunkts im Messpunkt der Linse anhand der globalen Messung.

3. Messverfahren nach einem der vorangehenden Ansprüche, bei dem die Abtastmittel außerdem in einer im Wesentlichen transversalen Richtung der Linse beweglich sind.

4. Messverfahren nach einem der vorangehenden Ansprüche, bei dem der abgetastete Messpunkt, dessen Position bestimmt wird, auf der hinteren Fläche der Linse liegt.

5. Messverfahren nach einem der vorangehenden Ansprüche, bei dem die Position des Messpunkts der Linse die einzige geometrische Eigenschaft des Messpunkts der Linse ist, die verwendet wird, um die vordere optische Brechkraft der Linse im Messpunkt abzuleiten.

6. Verfahren zur automatischen Vorbereitung auf das Anbringen einer ophthalmischen Linse mit einem Messverfahren nach einem der vorangehenden Ansprüche und außerdem mit einem Schritt zum Fixieren der Linse an Formschnittmitteln (6), einem Schritt zum Formschneiden der Linse und einem ersten Schritt zum vorherigen Abtasten bei der Fixierung der Linse an den Formschnittmitteln.

7. Vorrichtung zum Messen der lokalen Brechkraft einer ophthalmischen Linse (L1, L2, L3) in einem Messpunkt einer Fläche dieser Linse mit einem Träger für die Linse und Mitteln zum kontaktlosen optischen Messen (5), die ein Signal liefern können, das zumindest den lokalen Wert der Position des Brennpunkts der Linse in einer begrenzten lokalen Zone um den Messpunkt der Linse darstellt, und einem System zur elektronischen Verarbeitung und Datenverarbeitung (100), das das von den Mitteln zur globalen optischen Messung (5) gelieferte Signal verarbeiten kann, **dadurch gekennzeichnet, dass** sie Abtastmittel (7) umfasst, die die axiale Position des Messpunkts an einer der Flächen der Linse bestimmen können, die vom Träger der Linse verschieden sind, und dass das System zur elektronischen Verarbeitung und Datenverarbeitung (100) Rechenbefehle umfasst, die die axiale Position des Messpunkts, die durch Abtastung erhalten wird, mit der Position des Brennpunkts der Linse im Messpunkt kombinieren, die durch das elektronische und Datenverarbeitungssystem (100) anhand des von den Mitteln zur globalen optischen Messung (5) gelieferten Signals bestimmt wird, um daraus mindestens eine optische Brechkraft der Linse in diesem Messpunkt abzuleiten.

8. Vorrichtung nach dem vorangehenden Anspruch, bei der die Mittel zur optischen Messung (5) ein Signal liefern können, das ein globales optisches Maß mit den lokalen Werten der Position des Brennpunkts in mehreren lokalen Zonen um mehrere Punkte der Linse, mit dem betrachteten Messpunkt sowie anderen Punkten darstellt, wobei das System zur elektronischen Verarbeitung und Datenverarbeitung (100) das von den Mitteln zur globalen optischen Messung (5) gelieferte Signal verarbeiten kann, um den gewünschten Messpunkt der Linse auszuwählen und von der globalen Messung den lokalen Wert der Position des Brennpunkts im Messpunkt der Linse abzuleiten.

9. Messvorrichtung nach einem der Ansprüche 7 und 8, bei der die Abtastmittel in Bezug auf den Träger in mindestens einer im Wesentlichen axialen Richtung der Linse beweglich sind.

10. Messvorrichtung nach dem vorangehenden Anspruch, bei der die Abtastmittel (7) außerdem in einer im Wesentlichen transversalen Richtung der Linse beweglich sind.

11. Messvorrichtung nach einem der Ansprüche 7 bis 10, bei der die Messmittel (5) einen ungefähren Wert einer Brechkraft der Linse in einem Messpunkt der Linse bestimmen können,

   - die Rechenbefehle des elektronischen und Datenverarbeitungssystems (100) den ungefähren Wert der Brechkraft der Linse, der durch Messung erhalten wird, in Abhängigkeit von der Position des Messpunkts, die durch Abtastung erhalten wird, korrigieren.

12. Vorrichtung zur automatischen Vorbereitung auf das Anbringen einer ophthalmischen Linse mit einer Messvorrichtung nach einem der Ansprüche 7 bis 11, die außerdem umfasst:

   - Mittel zum Formschneiden (6) der Linse mit Mitteln zum Fixieren (613, 612) der Linse, und

   Mittel zum Überführen (2, 7) der Linse, die angeordnet sind, um die ophthalmische Linse zwischen mindestens zwei unterschiedlichen Positionen zu verschieben, darunter eine Messposition, die die Linse gegenüber den Messmitteln (5) darlegt, und eine Formschnittposition der Linse an den Mitteln zum Formschneiden (5).

13. Vorrichtung zur automatischen Vorbereitung auf das Anbringen nach dem vorangehenden Anspruch, bei der das System zur elektronischen Verarbeitung und Datenverarbeitung (100) entworfen ist, um die Messmittel (5), die Abtastmittel (7), die Vorrichtung zum Formschneiden (6) und die Überführungsmittel (2, 7) für die automatische Bearbeitung der Linse in Koordination zu steuern.

14. Vorrichtung zur automatischen Vorbereitung auf das Anbringen nach dem vorangehenden Anspruch, bei der die Abtastmittel (7) von den Mitteln zum Formschneiden (6) verschieden und unabhängig und angeordnet sind, um eine erste Abtastung der Linse in einer von ihrer Formschnittposition unterschiedlichen Zwischenposition auszuführen.

15. Vorrichtung zur automatischen Vorbereitung auf das Anbringen nach einem der Ansprüche 12 bis 14, bei der die Position des Messpunkts der Linse die einzige geometrische Eigenschaft des Messpunkts der Linse ist, die verwendet wird, um die vordere optische Brechkraft der Linse im Messpunkt abzuleiten.

**Claims**

1. A method of measuring the local power of an ophthalmic lens at a measurement point of one of the faces of the lens, the method comprising

   - a step of receiving the lens on a support, and
   - a step of contactless optical measurement of the position of the focus of said lens at said measurement point, the method being **characterized in that** it further comprises at least one step of feeling the lens during which the axial position of said measurement point is determined thanks to feeling means different from the support of the lens and movable with respect to said support of the lens along at least one direction roughly axial of the lens, and **in that** the axial position of the measurement point as obtained by feeling is combined with the position of the focus of the lens at the measurement point as determined from the contactless optical measurement, in order to deduce at least one vertex optical power of the lens at the measurement point.

2. A measurement method according to the preceding claim, in which the optical measurement of the position of the focus of said lens comprises:

   · an overall optical measurement step during which the local values of the position of the focus are measured at a plurality of local zones around a plurality of points of the lens,
   · a selection step of selecting the measurement point desired for the lens; and
   · a deduction step of deducing the local value of the position of the focus at said measurement point of the lens from the overall measurement.

3. A measurement method according to any of the preceding claim, in which the feeler means are also movable in a substantially transverse direction of the lens.

4. A measurement method according to any preceding claim, in which the measurement point felt whose position is determined is located on the rear face of the lens.

5. A measurement method according to any preceding claim, in which the position of the measurement point of the lens is the only geometrical characteristic of the measurement point of the lens that is used for deducing the vertex optical power of the lens at said measurement point.

6. A method of automatically preparing an ophthalmic lens for mounting, the method comprising a measurement method according to any preceding claim and further comprising a step of blocking said lens on cutting-out means (6), a step of cutting out said lens, and a first feeling step prior to blocking said lens on the cutting-out means.

7. A device for measuring the local power of an ophthalmic lens (L1, L2, L3) at a measurement point of a face of said lens, the device comprising a support for the lens and contactless optical measuring means (5) suitable for delivering a signal that is at least representative of the local value of the position of the focus of said lens at a local zone defined around said measurement point of said lens, and an electronic and computer processor system (100) suitable for processing the signal delivered by the overall optical measurement means (5), the device being **characterized in that** it comprises feeler means (7) suitable for determining the axial position of said measurement point on one of the faces of the lens different from the support of the lens, and **in that** the electronic and computer processor system (100) includes calculation instructions for combining the axial position of said measurement point obtained by feeling with the position of the focus of the lens at the measurement point as determined by the electronic and computer system (100) on the basis of the signal delivered by the overall optical measurement means (5), to deduce therefrom at least one optical power of the lens at said measurement point.

8. A device according to the preceding claim, in which the optical measurement means (5) are suitable for delivering a signal representative of an overall optical measurement, having local values of the position of the focus over a plurality of local zones around a plurality of points of the lens, including the measurement point under consideration and other points, the electronic and computer processor system (100) being suitable for processing the signal delivered by the overall optical measurement means (5) to select the desired measurement point of the lens and to deduce from the overall measurement the local value of said position of the focus at said measurement point of the lens.

9. A measurement device according to any of claims 7 and 8, in which said feeler means are movable relative to the support in at least one substantially axial direction of the lens.

10. A measurement device according to the preceding claim, in which the feeler means (7) are also movable in a substantially transverse direction of the lens.

11. A measurement device according to any one of claims 7 to 10, in which the measurement means (5) are suitable for determining an approximate value of the power of the lens at a measurement point of the lens,

· the calculation instructions of the electronic and computer system (100) correct the approximate value of the power of the lens as obtained by measurement as a function of the position of said measurement point as obtained by feeling.

12. A device for automatically preparing an ophthalmic lens for mounting, the device comprising a measurement device according to any one of claims 7 to 11, and further comprising:

· cutting-out means (6) for cutting out said lens and including blocking means (613, 612) for blocking said lens; and
transfer means (2, 7) for transferring said lens and arranged to move said ophthalmic lens between at least two distinct positions, including a measurement position presenting said lens in register with the measurement means (5), and a cutting-out position for cutting out said lens on the cutting-out means (6).

13. A device according to the preceding claim for automatically preparing a lens for mounting, in which the electronic and computer processor system (100) is designed to control the measurement means (5), the feeler means (7), the cutting-out device (6), and the transfer means (2, 7) in coordinated manner for processing said lens automatically.

14. A device according to the preceding claim for automatically preparing a lens for mounting, in which the feeler means (7) are distinct from and independent of the cutting-out means (6) and are arranged to perform a first feeling operation of said lens in an intermediate position that is distinct from its cutting-out position.

15. A device according to any one of claims 12 to 14, for automatically preparing a lens for mounting, in which the position of the measurement point of the lens is the only geometrical characteristic of the measurement point of the lens that is used for deducing the vertex optical power of the lens at said measurement point.

Fig.1

Fig.2

Fig.3

Fig.4

Fig.5

Fig.9

Fig.6

## Fig.7

## Fig.6A

# Fig.8

EP 1 825 243 B1

Fig.10

Fig.11

EP 1 825 243 B1

Fig.12

EP 1 825 243 B1

Fig.13

EP 1 825 243 B1

44

Fig.14

CO

AO

AB

101

CB

Fig.15

Z

Y

X

82

108

109

80

105

81

7

106

80

107

82.1

111

90

95

86

101

97

92

98

102

96

93

85

91

84

114

83

113

110

112

Fig.16

EP 1 825 243 B1

Fig.17

Fig.18

Fig.19

Fig.20

Fig.21

EP 1 825 243 B1

Fig.22

EP 1 825 243 B1

Fig.23

EP 1 825 243 B1

Fig.24

EP 1 825 243 B1

Fig.25

Fig.26

Fig.27

EP 1 825 243 B1

Fig.28

Fig.29

Fig.30

Fig.31

Fig.32

Fig.33

Fig.34

EP 1 825 243 B1

Fig.35

EP 1 825 243 B1

Fig.36

Fig.37

Fig.38

Fig.39

Fig.40

Fig.41

**EP 1 825 243 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2825466
- US 20030015649 A
- EP 0877241 A